(19) **Europäisches Patentamt** / **European Patent Office** / **Office européen des brevets**

(11) **EP 4 761 126 A1**

(12) # EUROPEAN PATENT APPLICATION
published in accordance with Art. 153(4) EPC

(43) Date of publication:
**17.06.2026 Bulletin 2026/25**

(21) Application number: **24865805.6**

(22) Date of filing: **10.09.2024**

(51) International Patent Classification (IPC):
$H04B\ 7/0456^{(2017.01)}$    $H04B\ 7/06^{(2006.01)}$
$H04W\ 72/0457^{(2023.01)}$    $H04W\ 72/1268^{(2023.01)}$
$H04W\ 72/232^{(2023.01)}$

(52) Cooperative Patent Classification (CPC):
**H04B 7/0456; H04B 7/06; H04W 72/0457;**
**H04W 72/12; H04W 72/1268; H04W 72/232**

(86) International application number:
**PCT/KR2024/013687**

(87) International publication number:
**WO 2025/058366 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.09.2023 KR 20230120789**

(71) Applicant: **Samsung Electronics Co., Ltd.**
**Suwon-si, Gyeonggi-do 16677 (KR)**

(72) Inventors:
• **JANG, Youngrok**
**Suwon-si, Gyeonggi-do 16677 (KR)**

• **ABEBE, Ameha Tsegaye**
**Suwon-si, Gyeonggi-do 16677 (KR)**
• **LIM, Seongmok**
**Suwon-si, Gyeonggi-do 16677 (KR)**
• **JI, Hyoungju**
**Suwon-si, Gyeonggi-do 16677 (KR)**
• **CHOI, Kyungjun**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND DEVICE FOR UPLINK DATA TRANSMISSION AND RECEPTION BASED ON SUB-BAND PRECODING IN WIRELESS COMMUNICATION SYSTEM**

(57)    The present disclosure relates to a 5G or 6G communication system for supporting higher data transmission rates. The present disclosure relates to the operations of a terminal and a base station in a wireless communication system and, specifically, to a method for uplink data transmission based on sub-band precoding in a wireless communication system, and a device capable of performing same. The present disclosure provides a device and method capable of effectively providing services in a mobile communication system.

EP 4 761 126 A1

# FIG. 26

Transmit UE capability — 2600

Receive higher layer signaling — 2605

Receive associated CSI-RS — 2610

Perform channel estimation and precoder calculation — 2615

Transmit SRS resource — 2620

Receive PUSCH scheduling DCI — 2625

Transmit non-codebook-based PUSCH — 2630

**Description**

**[Technical Field]**

The disclosure relates to operations of a terminal and a base station in a wireless communication system. Specifically, the disclosure relates to a method for uplink data transmission and reception based on subband precoding in a wireless communication, and a device capable of performing same.

**[Background Art]**

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 preprocessing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

**[Disclosure of Invention]**

**[Technical Problem]**

Embodiments set forth herein are to provide a device and a method capable of effectively providing services in a wireless communication system.

The technical subjects pursued in various embodiments of the disclosure may not be limited to the above-mentioned matters, and other technical subjects which are not mentioned herein may be considered by those skilled in the art from the following description of various embodiments of the disclosure to be described below.

**[Solution to Problem]**

A method performed by a terminal in a communication system according to an embodiment of the disclosure may include receiving a first configuration for a channel state information reference signal (CSI-RS) and a second configuration for a sounding reference signal (SRS) through higher layer signaling, identifying multiple first precoders for multiple SRS resources related to the second configuration, based on measurement for a CSI-RS resource related to the first configuration, performing SRS transmission on the multiple SRS resources, based on the multiple first precoders, receiving downlink control information (DCI) scheduling a physical uplink shared channel (PUSCH) through a physical downlink control channel (PDCCH), identifying multiple second precoders for multiple subbands included in a wideband to which the PUSCH is allocated, based on the DCI, the multiple second precoders being at least a part of the multiple first precoders, and transmitting the PUSCH, based on applying the multiple second precoders to the multiple subbands.

According to an embodiment of the disclosure, a second precoder for one subband may be identified as one of the multiple first precoders or one or more combinations thereof, and the number of second precoders for one subband may be identical to a rank for the PUSCH.

According to an embodiment of the disclosure, a processing time of the terminal for the multiple first precoders may be defined to be 42 symbols for a case where the multiple first precoders are identified by the terminal with respect to the wideband, and 42+d symbols for a case where the multiple first precoders are identified by the terminal with respect to the multiple subbands, d being related to the number of the multiple subbands.

According to an embodiment of the disclosure, the DCI may include multiple SRS resource indicator (SRI) fields, wherein each of the SRI fields indicates a rank for the PUSCH and a second precoder for a corresponding subband, and the number of bits included in each of the SRI fields is N that is the number of the multiple SRS resources, multiple SRI fields, wherein a first SRI field among the multiple SRI fields indicates the rank and a second precoder for a corresponding subband, the number of bits included in the first SRI field is N, remaining SRI fields other than the first SRI field among the multiple SRI fields each indicates a second precoder for a corresponding subband, the number of bits included in each of the remaining SRI fields is $\left\lceil \log_2 \binom{N}{k} \right\rceil$, and k is a value that maximizes $\binom{N}{k}$ among values available as the rank, one field indicating the rank and multiple SRI fields, wherein each of the SRI fields indicates a second precoder for a corresponding subband, the number of bits included in each of the SRI fields is $\left\lceil \log_2 \binom{N}{k} \right\rceil$, and k is a value that maximizes $\binom{N}{k}$ among values available as the rank, or one field indicating the rank and one SRI field, wherein a codepoint of the one SRI field indicates the multiple second precoders.

According to an embodiment of the disclosure, in case that one precoder is identified based on the DCI, the PUSCH may be transmitted based on applying the one precoder to the wideband.

According to an embodiment of the disclosure, the one precoder may be identified by identifying the multiple second precoders as being identical, based on the DCI, or identifying, based on the DCI, one precoder among the multiple second precoders and identifying, as being reserved, remaining precoders other than the one precoder among the multiple second precoders.

A terminal in a communication system according to an embodiment of the disclosure may include a transceiver, and a processor connected to the transceiver, wherein the processor is configured to receive a first configuration for a channel state information reference signal (CSI-RS) and a second configuration for a sounding reference signal (SRS) through higher layer signaling, identify multiple first precoders for multiple SRS resources related to the second configuration, based on measurement for a CSI-RS resource related to the first configuration, perform SRS transmission on the multiple SRS resources, based on the multiple first precoders, receive downlink control information (DCI) scheduling a physical uplink shared channel (PUSCH) through a physical downlink control channel (PDCCH), identify multiple second precoders for multiple subbands included in a wideband to which the PUSCH is allocated, based on the DCI, the multiple second precoders being at least a part of the multiple first precoders, and transmit the PUSCH, based on applying the multiple second precoders to the multiple subbands.

According to an embodiment of the disclosure, a second precoder for one subband may be identified as one of the multiple first precoders or one or more combinations thereof, and the number of second precoders for one subband may be identical to a rank for the PUSCH.

According to an embodiment of the disclosure, a processing time of the terminal for the multiple first precoders may be defined to be 42 symbols for a case where the multiple first precoders are identified by the terminal with respect to the wideband, and 42+d symbols for a case where the multiple first precoders are identified by the terminal with respect to the multiple subbands, d being related to the number of the multiple subbands.

According to an embodiment of the disclosure, the DCI may include multiple SRS resource indicator (SRI) fields, wherein each of the SRI fields indicates a rank for the PUSCH and a second precoder for a corresponding subband, and the number of bits included in each of the SRI fields is N that is the number of the multiple SRS resources, multiple SRI fields, wherein a first SRI field among the multiple SRI fields indicates the rank and a second precoder for a corresponding subband, the number of bits included in the first SRI field is N, remaining SRI fields other than the first SRI field among the multiple SRI fields each indicates a second precoder for a corresponding subband, the number of bits included in each of the remaining SRI fields is $\left\lceil \log_2 \binom{N}{k} \right\rceil$, and k is a value that maximizes $\binom{N}{k}$ among values available as the rank, one field indicating the rank and multiple SRI fields, wherein each of the SRI fields indicates a second precoder for a corresponding subband, the number of bits included in each of the SRI fields is $\left\lceil \log_2 \binom{N}{k} \right\rceil$, and k is a value that maximizes $\binom{N}{k}$ among values available as the rank, or one field indicating the rank and one SRI field, wherein a codepoint of the one SRI field indicates the multiple second precoders.

According to an embodiment of the disclosure, in case that one precoder is identified based on the DCI, the PUSCH may be transmitted based on applying the one precoder to the wideband.

According to an embodiment of the disclosure, the one precoder may be identified by identifying the multiple second precoders as being identical, based on the DCI, or identifying, based on the DCI, one precoder among the multiple second precoders and identifying, as being reserved, remaining precoders other than the one precoder among the multiple second precoders.

A method performed by a base station in a communication system according to an embodiment of the disclosure may include transmitting a first configuration for a channel state information reference signal (CSI-RS) and a second configuration for a sounding reference signal (SRS) through higher layer signaling, receiving an SRS on multiple SRS resources related to the second configuration, identifying multiple first precoders for the multiple SRS resources, the multiple first precoders being related to the first configuration, identifying multiple second precoders for multiple subbands included in a wideband to which a physical uplink shared channel (PUSCH) is allocated, the multiple second precoders being at least a part of the multiple first precoders, transmitting downlink control information (DCI) scheduling the PUSCH through a physical downlink control channel (PDCCH), the DCI being related to the multiple second precoders, and receiving the PUSCH based on the multiple second precoders being applied to the multiple subbands.

According to an embodiment of the disclosure, a second precoder for one subband may be identified as one of the multiple first precoders or one or more combinations thereof, and the number of second precoders for one subband may be identical to a rank for the PUSCH.

According to an embodiment of the disclosure, the DCI may include multiple SRS resource indicator (SRI) fields, wherein each of the SRI fields indicates a rank for the PUSCH and a second precoder for a corresponding subband, and the number of bits included in each of the SRI fields is N that is the number of the multiple SRS resources, multiple SRI fields, wherein a first SRI field among the multiple SRI fields indicates the rank and a second precoder for a corresponding subband, the number of bits included in the first SRI field is N, remaining SRI fields other than the first SRI field among the multiple SRI fields each indicates a second precoder for a corresponding subband, the number of bits included in each of the remaining SRI fields is $\left\lceil \log_2 \binom{N}{k} \right\rceil$, and k is a value that maximizes $\binom{N}{k}$ among values available as the rank, one field indicating the rank and multiple SRI fields, wherein each of the SRI fields indicates a second precoder for a corresponding subband, the number of bits included in each of the SRI fields is $\left\lceil \log_2 \binom{N}{k} \right\rceil$, and k is a value that maximizes $\binom{N}{k}$ among values available as the rank, or one field indicating the rank and one SRI field, wherein a codepoint of the one SRI field indicates the multiple second precoders.

A base station in a communication system according to an embodiment of the disclosure may include a transceiver, and a processor connected to the transceiver, wherein the processor is configured to transmit a first configuration for a channel state information reference signal (CSI-RS) and a second configuration for a sounding reference signal (SRS) through higher layer signaling, receive an SRS on multiple SRS resources related to the second configuration, identify multiple first precoders for the multiple SRS resources, the multiple first precoders being related to the first configuration, identify multiple second precoders for multiple subbands included in a wideband to which a physical uplink shared channel (PUSCH) is allocated, the multiple second precoders being at least a part of the multiple first precoders, transmit downlink control information (DCI) scheduling the PUSCH through a physical downlink control channel (PDCCH), the DCI being related to the multiple second precoders, and receive the PUSCH based on the multiple second precoders being applied to the multiple subbands.

According to an embodiment of the disclosure, the DCI may include multiple SRS resource indicator (SRI) fields, wherein each of the SRI fields indicates a rank for the PUSCH and a second precoder for a corresponding subband, and the number of bits included in each of the SRI fields is N that is the number of the multiple SRS resources, multiple SRI fields, wherein a first SRI field among the multiple SRI fields indicates the rank and a second precoder for a corresponding subband, the number of bits included in the first SRI field is N, remaining SRI fields other than the first SRI field among the multiple SRI fields each indicates a second precoder for a corresponding subband, the number of bits included in each of the remaining SRI fields is $\left\lceil \log_2 \binom{N}{k} \right\rceil$ , and k is a value that maximizes $\binom{N}{k}$ among values available as the rank, one field indicating the rank and multiple SRI fields, wherein each of the SRI fields indicates a second precoder for a corresponding subband, the number of bits included in each of the SRI fields is $\left\lceil \log_2 \binom{N}{k} \right\rceil$ , and k is a value that maximizes $\binom{N}{k}$ among values available as the rank, or one field indicating the rank and one SRI field, wherein a codepoint of the one SRI field indicates the multiple second precoders.

Various embodiments of the disclosure as described above are merely some of preferred embodiments of the disclosure, and various embodiments reflecting technical features of the various embodiments of the disclosure may be derived and understood by those having ordinary skill in the art, based on the detailed description to be described below.

**[Advantageous Effects of Invention]**

Embodiments set forth herein provide a device and a method capable of effectively providing services in a mobile communication system.

Advantageous effects obtainable from various embodiments of the disclosure may not be limited to the above-mentioned effects, and other effects which are not mentioned herein may be clearly derived and understood, based on the following description, by those skilled in the art to which the disclosure pertains.

**[Brief Description of Drawings]**

FIG. 1 illustrates a basic structure of a time-frequency domain in a wireless communication system according to an embodiment of the disclosure.

FIG. 2 illustrates a structure of a frame, a subframe, and a slot in a wireless communication system according to an embodiment of the disclosure.

FIG. 3 illustrates an example of a bandwidth part configuration in a wireless communication system according to an embodiment of the disclosure.

FIG. 4 illustrates radio protocol structures of a base station and a UE in single cell, carrier aggregation, and dual connectivity situations in a wireless communication system according to an embodiment of the disclosure.

FIG. 5 illustrates a beam application time which may be considered in a case where a unified TCI scheme is used in a wireless communication system according to an embodiment of the disclosure.

FIG. 6 illustrates another MAC-CE structure for activation and indication of a joint TCI state or a separate DL or UL TCI state in a wireless communication system according to an embodiment of the disclosure.

FIG. 7 illustrates an example of an aperiodic CSI reporting method.

FIG. 8 illustrates an example of control resource set configuration of a downlink control channel in a wireless communication system;

FIG. 9 illustrates a structure of a downlink control channel in a wireless communication system according to an embodiment of the disclosure;

FIG. 10 illustrates an example of frequency domain resource allocation with regard to a PDSCH or PUSCH in a wireless communication system according to an embodiment of the disclosure.

FIG. 11 illustrates an example of time domain resource allocation with regard to a PDSCH in a wireless communication system according to an embodiment of the disclosure.

FIG. 12 illustrates a method for determining an available slot during PUSCH repetition type A transmission of a UE in a 5G system according to an embodiment of the disclosure.

FIG. 13 illustrates an example of physical uplink shared channel (PUSCH) repetition type B transmission in a wireless communication system according to an embodiment of the disclosure.

FIG. 14 illustrates an example of an antenna port configuration and resource allocation for cooperative communication in a wireless communication system according to an embodiment of the disclosure.

FIG. 15 illustrates an example of a downlink control information (DCI) configuration for cooperative communication in a wireless communication system according to an embodiment of the disclosure.

FIG. 16 illustrates an uplink-downlink resource configuration of an XDD system in which uplink and downlink resources are flexibly distributed in time and frequency domains according to an embodiment of the disclosure.

FIG. 17 illustrates an example of an uplink-downlink resource configuration of a full duplex communication system in which uplink and downlink resources are flexibly distributed in time and frequency domains according to an embodiment of the disclosure.

FIG. 18 illustrates a transmission and reception structure for a duplex scheme according to an embodiment of the disclosure.

FIG. 19 illustrates an example of a downlink and uplink resource configuration in an XDD system.

FIG. 20 illustrates an example in which SBFD is operated in a TDD band of a wireless communication system to which the disclosure is applied.

FIG. 21 illustrates an SBFD configuration according to an embodiment of the disclosure.

FIG. 22 is a diagram illustrating one method of a non-codebook-based PUSCH transmission process considering subband precoding between a base station and a terminal according to an embodiment of the disclosure.

FIG. 23 is a diagram illustrating another method of a non-codebook-based PUSCH transmission process considering subband precoding between a base station and a terminal according to an embodiment of the disclosure.

FIG. 24 is a diagram illustrating another method of a non-codebook-based PUSCH transmission process considering subband precoding between a base station and a terminal according to an embodiment of the disclosure.

FIG. 25 is a diagram illustrating another method of a non-codebook-based PUSCH transmission process considering subband precoding between a base station and a terminal according to an embodiment of the disclosure.

FIG. 26 illustrates an operation of a UE according to an embodiment of the disclosure.

FIG. 27 illustrates an operation of a base station according to an embodiment of the disclosure.

FIG. 28 illustrates a structure of a UE in a wireless communication system according to an embodiment of the disclosure.

FIG. 29 illustrates a structure of a base station in a wireless communication system according to an embodiment of the disclosure.

**[Mode for the Invention]**

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include the 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) (or eNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5ms, and also requires a packet error rate of 10$^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

In the following description, the term "a/b" may be understood as at least one of a and b.

[NR time-frequency resources]

Hereinafter, a frame structure of a 5G system will be described in more detail with reference to the accompanying drawings.

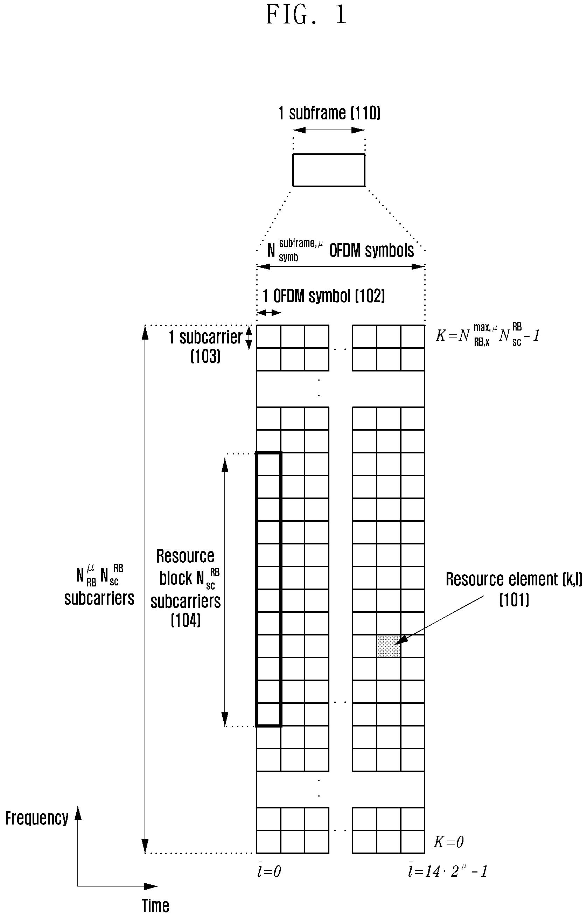

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, $N_{SC}^{RB}$ (for example, 12) consecutive REs may constitute one resource block (RB) 104. In the time domain, one subframe 110 may include multiple OFDM symbols 102. For example, the length of one subframe may be 1ms.

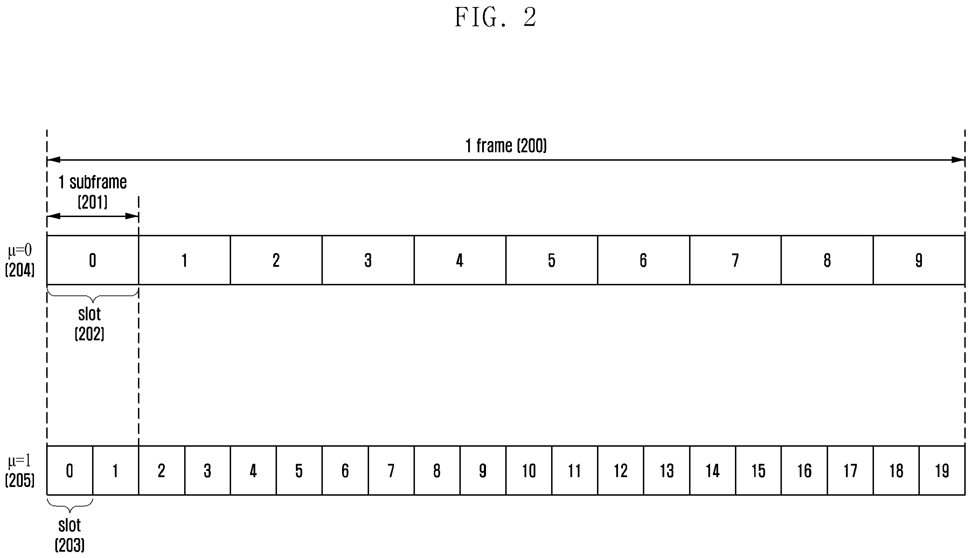

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example in FIG. 2 illustrates a case in which the subcarrier spacing configuration value is $\mu=0$ (204), and a case in which $\mu=1$ (205). In the case of $\mu=0$ (204), one subframe 201 may include one slot 202, and in the case of $\mu=1$ (205), one subframe 201 may include two slots 203. That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |

(continued)

| $\mu$ | $N_{symb}^{slot}$ | $N_{slot}^{frame,\mu}$ | $N_{slot}^{subframe,\mu}$ |
|---|---|---|---|
| 3 | 14 | 80 | 8 |
| 4 | 14 | 160 | 16 |
| 5 | 14 | 320 | 32 |

[Bandwidth part (BWP)]

Next, a bandwidth part (BWP) configuration in a 5G communication system will be described in detail with reference to the accompanying drawings.

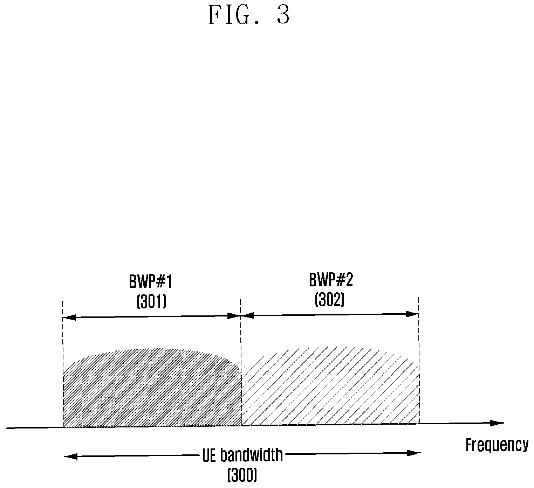

FIG. 3 illustrates an example of a bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

```
BWP ::=                            SEQUENCE {
       bwp-Id                          BWP-Id,
       (bandwidth part identifier)
       locationAndBandwidth            INTEGER (1..65536),
       (bandwidth part location)
       subcarrierSpacing               ENUMERATED    {n0,
n1, n2, n3, n4, n5},
       (subcarrier spacing)
       cyclicPrefix                    ENUMERATED         {
extended }
       (cyclic prefix)
}
```

Obviously, the above example is not limiting, and various parameters related to the bandwidth part may be configured for the UE, in addition to the above configuration information. The base station may transfer the configuration information to the UE through higher layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered identity (ID) 0. The base station may notify the UE of configuration information, such as frequency allocation information, time allocation information, and numerology, regarding control resource region #0 through the MIB. In addition, the base station may notify the UE of configuration information regarding the monitoring periodicity and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, a UE may have a control resource set (i.e., CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

[Bandwidth part (BWP) change]

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined as given in Table 3 below, for example.

[Table 3]

| $\mu$ | NR Slot length (ms) | BWP switch delay $T_{BWP}$ (slots) | |
| | | Type 1[Note 1] | Type 2[Note 1] |
|---|---|---|---|
| 0 | 1 | 1 | 3 |
| 1 | 0.5 | 2 | 5 |
| 2 | 0.25 | 3 | 9 |

(continued)

| $\mu$ | NR Slot length (ms) | BWP switch delay $T_{BWP}$ (slots) | |
| --- | --- | --- | --- |
| | | Type 1[Note 1] | Type 2[Note 1] |
| 3 | 0.125 | 6 | 18 |
| Note 1: Depends on UE capability. Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part change delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot $n+T_{BWP}$, and may transmit/receive a data channel scheduled by the corresponding DCI in the newly changed bandwidth part. According to an embodiment, if the base station wants to schedule a data channel by using the new bandwidth part, the base station may determine time domain resource allocation regarding the data channel, based on the UE's bandwidth part change delay time ($T_{BWP}$). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI indicating a bandwidth part change will indicate a slot offset (K0 or K2) value smaller than the bandwidth part change delay time (TBWP).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

[Regarding CA/DC]

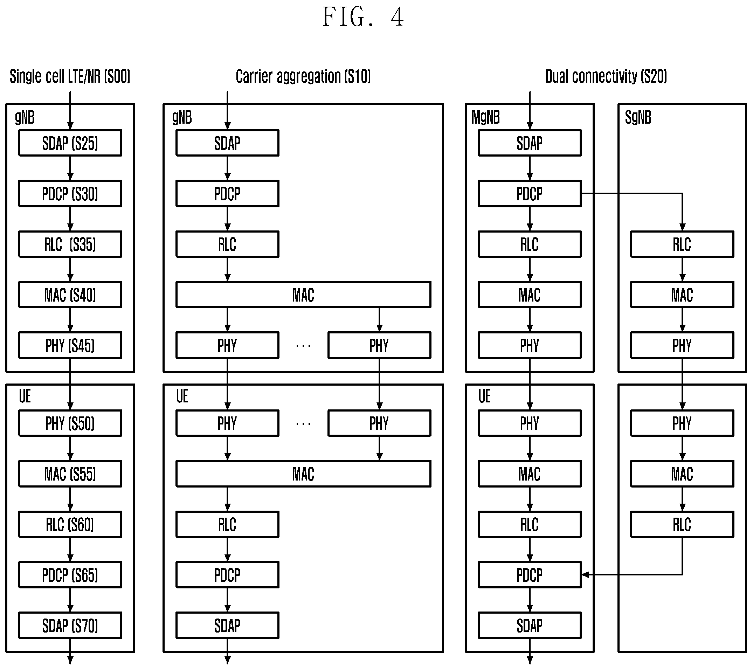

FIG. 4 illustrates radio protocol structures of a base station and a UE in single cell, carrier aggregation, and dual connectivity situations according to an embodiment of the disclosure.

Referring to FIG. 4, a radio protocol of a next-generation mobile communication system includes an NR service data adaptation protocol (SDAP) S25 or S70, an NR packet data convergence protocol (PDCP) S30 or S65, an NR radio link control (RLC) S35 or S60, and an NR medium access controls (MAC) S40 or S55, on each of UE and NR base station sides.

The main functions of the NR SDAP S25 or S70 may include some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

The main functions of the NR PDCP S30 or S65 may include some of functions below.

- Header compression and decompression: ROHC only
- Transfer of user data
- In-sequence delivery of upper layer PDUs

- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above-mentioned functions, the reordering of the NR PDCP device refers to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

The main functions of the NR RLC S35 or S60 may include some of functions below.

- Transfer of upper layer PDUs
- In-sequence delivery of upper layer PDUs
- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

In the above-mentioned functions, the in-sequence delivery of the NR RLC device refers to a function of delivering RLC SDUs, received from the lower layer, to the upper layer in sequence. The in-sequence delivery of the NR RLC device may include at least one of a function of, if one original RLC SDU is segmented into multiple RLC SDUs and the segmented RLC SDUs are received, reassembling the RLC SDUs and delivering the reassembled RLC SDUs, a function of reordering the received RLC PDUs with reference to the RLC sequence number (SN) or PDCP sequence number (SN), a function of recording RLC PDUs lost as a result of reordering, a function of reporting the state of the lost RLC PDUs to the transmitting side, and a function of requesting retransmission of the lost RLC PDUs. The in-sequence delivery of the NR RLC device may include a function of, if there is a lost RLC SDU, successively delivering only RLC SDUs before the lost RLC SDU to the higher layer, and may include a function of, if a predetermined timer has expired although there is a lost RLC SDU, successively delivering all RLC SDUs received before the timer was started to the higher layer. Alternatively, the in-sequence delivery of the NR RLC device may include a function of, if a predetermined timer has expired although there is a lost RLC SDU, successively delivering all RLC SDUs received until now to the higher layer. In addition, the in-sequence delivery of the NR RLC device may include a function of processing RLC PDUs in the received order (regardless of the sequence number order, in the order of arrival) and delivering same to the PDCP device regardless of the order (out-of-sequence delivery), and may include a function of, in the case of segments, receiving segments which are stored in a buffer or which are to be received later, reconfiguring same into one complete RLC PDU, processing, and delivering same to the PDCP device. The NR RLC layer may include no concatenation function, which may be performed in the NR MAC layer or replaced with a multiplexing function of the NR MAC layer.

In the above-mentioned functions, the out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC S40 or S55 may be connected to multiple NR RLC layer devices configured in one UE, and the main functions of the NR MAC may include some of functions below.

- Mapping between logical channels and transport channels
- Multiplexing/demultiplexing of MAC SDUs
- Scheduling information reporting
- Error correction through HARQ
- Priority handling between logical channels of one UE

- Priority handling between UEs by means of dynamic scheduling
- MBMS service identification
- Transport format selection
- Padding

An NR PHY layer S45 or S50 may perform operations of channel-coding and modulating higher layer data, thereby obtaining OFDM symbols, and delivering the same through a radio channel, or demodulating OFDM symbols received through the radio channel, channel-decoding the same, and delivering the same to the higher layer.

The detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as S00. On the other hand, in case that the base station transmits data to the UE, based on carrier aggregation(CA) which uses multiple carriers in a single TRP, the base station and the UE may use a protocol structure which has a single structure up to the RLC, but multiplexes the PHY layer through a MAC layer, such as S10. As another example, in case that the base station transmits data to the UE, based on dual connectivity (DC) which uses multiple carriers in multiple TRPs, the base station and the UE may use a protocol structure which has a single structure up to the RLC, but multiplexes the PHY layer through a MAC layer, such as S20.

[Unified TCI state]

Hereinafter, a single TCI state indication and activation method based on a unified TCI scheme is described. The unified TCI scheme may refer to a scheme wherein, although existing Rel-15 and 16 have used a TCI state scheme for a UE's downlink reception and have used a spatial relation info scheme for uplink transmission (separate transmission/reception beam management scheme), the same is managed in an integrated manner by using a TCI state. Therefore, in a case where a UE receives an indication from a base station, based on the unified TCI scheme, the UE may perform beam management even for uplink transmission by using a TCI state. If the higher layer signaling TCI-State having the higher layer signaling tci-stateId-r17 is configured for a UE by a base station, the UE may perform an operation based on the unified TCI scheme by using the TCI-State. The TCI-State may exist in two types (joint TCI state or separate TCI state).

The first type is a joint TCI state in which all TCI states to be applied to uplink transmission and downlink reception may be indicated to a UE by a base station through one TCI-State. If joint TCI state-based TCI-state is indicated to the UE, a parameter to be used in downlink channel estimation may be indicated to the UE by using an RS corresponding to qcl-Type1 in the joint TCI state-based TCI-state, and a parameter to be used as a downlink reception beam or reception filter may be indicated thereto by using an RS corresponding to qcl-Type2. If joint TCI state-based TCI-state is indicated to the UE, a parameter to be used as an uplink transmission beam or transmission filter may be indicated to the UE by using an RS corresponding to qcl-Type2 in a corresponding joint DL/UL TCI state-based TCI-state. If a joint TCI state is indicated to the UE, the UE may apply the same beam to uplink transmission and downlink reception.

The second type is a separate TCI state, and a UL TCI state to be applied to uplink transmission and a DL TCI state to be applied to downlink reception may be individually indicated to a UE by a base station. If a UL TCI state is indicated to the UE, a parameter to be used as an uplink transmission beam or transmission filter may be indicated to the UE by using a reference RS or a source RS configured in the UL TCI state. If a DL TCI state is indicated to the UE, a parameter to be used in downlink channel estimation may be indicated to the UE by using an RS corresponding to qcl-Type1 configured in the DL TCI state, and a parameter to be used as a downlink reception beam or reception filter may be indicated thereto by using an RS corresponding to qcl-Type2.

If a DL TCI state and a UL TCI state are indicated to the UE together, a parameter to be used as an uplink transmission beam or transmission filter may be indicated to the UE by using a reference RS or a source RS configured in the UL TCI state, a parameter to be used in downlink channel estimation may be indicated to the UE by using an RS corresponding to qcl-Type1 configured in the DL TCI state, and a parameter to be used as a downlink reception beam or reception filter may be indicated thereto using an RS corresponding to qcl-Type2. If the reference RSs or source RSs configured in the DL TCI state and UL TCI state indicated to the UE are different from each other, the UE may apply individual beams to uplink transmission and downlink reception, based on the indicated UL TCI state and DL TCI state.

A maximum of 128 joint TCI states may be configured for a particular bandwidth part in a particular cell for the UE by the base station through higher layer signaling, a maximum of 64 or 128 DL TCI states among separate TCI states may be configured for a particular bandwidth part in a particular cell through higher layer signaling, based on a UE capability report, and a DL TCI state among separate TCI states and a joint TCI state may use the same higher layer signaling structure. As an example, if 128 joint TCI states have been configured, and if 64 DL TCI states have been configured among separate TCI states, the 64 DL TCI states may be included in the 128 joint TCI states.

A maximum of 32 or 64 UL TCI states among separate TCI states may be configured for a particular bandwidth part in a particular cell through higher layer signaling, based on a UE capability report, and a UL TCI state among separate TCI states and a joint TCI state may also use the same higher layer signaling structure like the relation between a DL TCI state among separate TCI states and a joint TCI state, or a UL TCI state among separate TCI states may also use a higher layer signaling structure different from that of a joint TCI state and a DL TCI state among separate TCI states.

Such use of different or identical higher layer signaling structures may be defined in specifications, or may be distinguished through different higher layer signaling configured by the base station, based on a UE capability report containing information regarding which is to be used among two schemes that the UE may support.

The UE may use one scheme, among a joint TCI state and a separate TCI state configured by the base station, thereby receiving an indication regarding transmission/reception beam according to a unified TCI scheme. The base station may configure, for the UE, whether or not one of the joint TCI state and the separate TCI state is to be used, through higher layer signaling.

The UE may receive an indication regarding transmission/reception beam by using a scheme selected from a joint TCI state and a separate TCI state through higher layer signaling, and the base station may indicate a transmission/reception beam in two methods (a MAC-CE-based indication method and a MAC-CE-based activation and DCI-based indication method).

If the UE receives an indication regarding transmission/reception beam by using a joint TCI state through higher layer signaling, the UE may receive a MAC-CE indicating a joint TCI state from the base station, thereby performing a transmission/reception beam application operation, and the base station may schedule reception regarding a PDSCH including the MAC-CE for the UE through a PDCCH. If the MAC-CE includes one joint TCI state set, the UE may determine an uplink transmission beam or transmission filter and a downlink reception beam or reception filter by using joint TCI states included in the indicated joint TCI state set 3ms after transmission of a PUCCH including HARQ-ACK information indicating whether or not the PDSCH is successfully received. If the MAC-CE includes two or more joint TCI state sets, the UE may identify that multiple joint TCI state sets indicated by the MAC-CE correspond to respective codepoints of the TCI state field of DCI format 1_1 or 1_2 and then activate the indicated joint TCI state sets, 3ms after transmission of a PUCCH including HARQ-ACK information indicating whether or not the PDSCH is successfully received. Thereafter, the UE may receive DCI format 1_1 or 1_2 and may apply one joint TCI state indicated by the TCI state field in corresponding DCI to uplink transmission and downlink reception beams. DCI format 1_1 or 1_2 may include downlink data channel scheduling information (with DL assignment) or may not include the same (without DL assignment).

If the UE receives an indication regarding transmission/reception beam by using a separate TCI state through higher layer signaling, the UE may receive a MAC-CE indicating a separate TCI state from the base station, thereby performing a transmission/reception beam application operation, and the base station may schedule reception regarding a PDSCH including the MAC-CE for the UE through a PDCCH. If the MAC-CE includes one separate TCI state set, the UE may determine an uplink transmission beam or transmission filter and a downlink reception beam or reception filter by using separate TCI states included in the indicated separate TCI state set 3ms after transmission of a PUCCH including HARQ-ACK information indicating whether or not the PDSCH is successfully received. A separate TCI state set may indicate a single or multiple separate TCI states which one codepoint of a TCI state field in DCI format 1_1 or 1_2 may have, and one separate TCI state set may include one DL TCI state, include one UL TCI state, or include one DL TCI state and one UL TCI state. If the MAC-CE includes two or more separate TCI state sets, the UE may identify that multiple separate TCI state sets indicated by the MAC-CE correspond to respective codepoints of the TCI state field of DCI format 1_1 or 1_2 and then activate the indicated separate TCI state sets, 3ms after transmission of a PUCCH including HARQ-ACK information indicating whether or not the PDSCH is successfully received. Each codepoint of the TCI state field of DCI format 1_1 or 1_2 may indicate one DL TCI state, may indicate one UL TCI state, or may indicate one DL TCI state and one UL TCI state. The UE may receive DCI format 1_1 or 1_2 and may apply separate TCI state sets indicated by the TCI state field in corresponding DCI to uplink transmission and downlink reception beams. DCI format 1_1 or 1_2 may include downlink data channel scheduling information (with DL assignment) or may not include the same (without DL assignment).

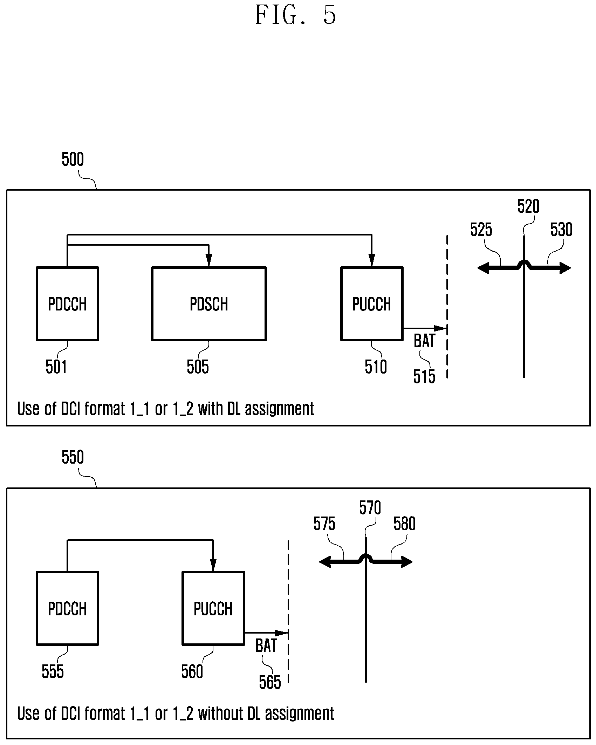

FIG. 5 illustrates a beam application time which may be considered in a case where a unified TCI scheme is used in a wireless communication system according to an embodiment of the disclosure. As described above, the UE may receive DCI format 1_1 or 1_2 including downlink data channel scheduling information (with DL assignment) or not including the same (without DL assignment) from the base station, and may apply one joint TCI state or separate TCI state set indicted by the TCI state field in corresponding DCI to uplink transmission and downlink reception beams.

- DCI format 1_1 or 1_2 with DL assignment (500): If a UE receives, from a base station, DCI format 1_1 or 1_2 including downlink data channel scheduling information (501) so that one joint TCI state or one separate TCI state set based on a unified TCI scheme is indicated, the UE may receive a PDSCH scheduled based on the received DCI (505), and transmit a PUCCH including a HARQ-ACK indicating whether reception of the DCI and the PDSCH has been successful (510). The HARQ-ACK may include whether reception has been successful, for both the DCI and the PDSCH, if the UE fails to receive at least one of the DCI and the PDSCH, the UE may transmit a NACK, and if the UE succeeds in receiving both of them, the UE may transmit an ACK.
- DCI format 1_1 or 1_2 without DL assignment (550): If a UE receives, from a base station, DCI format 1_1 or 1_2 not including downlink data channel scheduling information (555) so that one joint TCI state or one separate TCI state set based on a unified TCI scheme is indicated, the UE may assume at least one combination of the following items for the DCI.

■ The DCI includes a CRC scrambled using a CS-RNTI.
■ The values of all bits assigned to all fields used as redundancy version (RV) fields are 1.
■ The values of all bits assigned to all fields used as modulation and coding scheme (MCS) fields are 1.
■ The values of all bits assigned to all fields used as new data indication (NDI) fields are 0.
■ In a case of frequency domain resource allocation (FDRA) type 0, the values of all bits assigned to an FDRA field are 0, in a case of FDRA type 1, the values of all bits assigned to an FDRA field are 1, and in a case of an FDRA scheme being dynamicSwitch, the values of all bits assigned to an FDRA field are 0.

The UE may transmit a PUCCH including a HARQ-ACK indicating whether DCI format 1_1 or 1_2 for which the items described above are assumed has been successfully received (560).

-    With regard to both DCI format 1_1 or 1_2 with DL assignment (500) and without DL assignment (550), if the new TCI state indicated through DCI 501 or 555 is the same as a TCI state that has previously been indicated and thus been being applied to uplink transmission and downlink reception beams, the UE may maintain the previously applied TCI state. If the new TCI state is different from the previously indicated TCI state, the UE may determine, as a time point for application of the joint TCI state or separate TCI state set, which is indicatable by a TCI state field included in the DCI, a time point 530 or 580 after the first slot 520 or 570 after passage of a time interval as long as a beam application time (BAT) 515 or 565 after PUCCH transmission, and may use the previously indicated TCI state at a time point 525 or 575 before the slot 520 or 570.
-    With regard to both DCI format 1_1 or 1_2 with DL assignment (500) and without DL assignment (550), the BAT is a particular number of OFDM symbols and may be configured through higher layer signaling, based on UE capability report information, and numerologies of the BAT and the first slot after the BAT may be determined based on the smallest numerology among all cells to which a joint TCI state or separate TCI state set indicated through DCI is applied.

A UE may apply one joint TCI state indicated through a MAC-CE or DCI to reception for control resource sets connected to all UE-specific search spaces, reception of a PDSCH scheduled by a PDCCH transmitted from the control resource sets and transmission of a PUSCH, and transmission of all PUCCH resources.
If one separate TCI state set indicated through a MAC-CE or DCI includes one DL TCI state, a UE may apply the one separate TCI state set to reception for control resource sets connected to all UE-specific search spaces and to reception of a PDSCH scheduled by a PDCCH transmitted from the control resource sets, and apply a previously indicated UL TCI state to all PUSCH and PUCCH resources.
If one separate TCI state set indicated through a MAC-CE or DCI includes one UL TCI state, a UE may apply the one separate TCI state set to all PUSCH and PUCCH resources, and apply a previously indicated DL TCI state to reception for control resource sets connected to all UE-specific search spaces and reception of a PDSCH scheduled by a PDCCH transmitted from the control resource sets.
If one separate TCI state set indicated through a MAC-CE or DCI includes one DL TCI state and one UL TCI state, a UE may apply the DL TCI state to reception for control resource sets connected to all UE-specific search spaces and reception of a PDSCH scheduled by a PDCCH transmitted from the control resource sets, and apply the UL TCI state to all PUSCH and PUCCH resources.

[Unified TCI state MAC-CE]

Hereinafter, a single TCI state indication and activation method based on the unified TCI scheme is described. A PDSCH including a MAC-CE described below may be scheduled to a UE by a base station, and the UE may interpret each codepoint of a TCI state field in DCI format 1_1 or 1_2, based on information in the MAC-CE received from the base station, after 3 slots from transmission of a HARQ-ACK for the PDSCH to the base station. That is, the UE may activate each entry of the MAC-CE received from the base station in each codepoint of the TCI state field in DCI format 1_1 or 1_2.

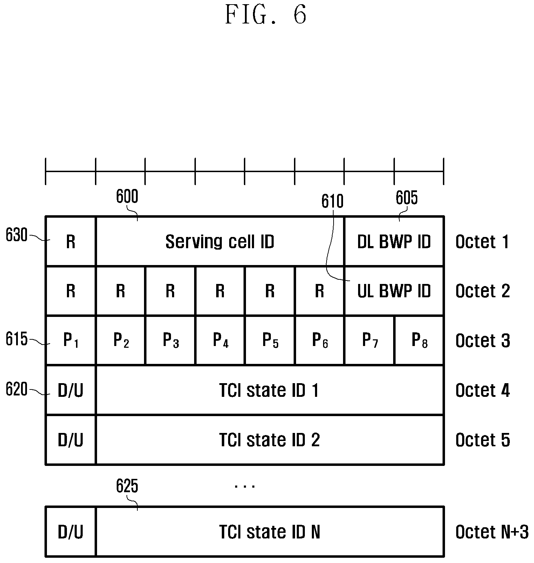

FIG. 6 illustrates another MAC-CE structure for activation and indication of a joint TCI state or a separate DL or UL TCI state in a wireless communication system according to an embodiment of the disclosure. Each field in the MAC-CE structure may have the following meaning.

-    Serving Cell ID 600: This field may indicate which serving cell to which a corresponding MAC-CE is to be applied. The length of this field may be 5 bits. If a serving cell indicated by this field is included in at least one of the higher layer signaling simultaneousU-TCI-UpdateList1, simultaneousU-TCI-UpdateList2, simultaneousU-TCI-UpdateList3, or simultaneousU-TCI-UpdateList4, the MAC-CE may be applied to all serving cells included in one or more lists among simultaneousU-TCI-UpdateList1, simultaneousU-TCI-UpdateList2, simultaneousU-TCI-UpdateList3, or simultaneousU-TCI-UpdateList4, in which the serving cell indicated by the field is included.

- DL BWP ID 605: This field may indicate which DL BWP to which the MAC-CE is to be applied, and the meanings of codepoints in the field may correspond to codepoints of a bandwidth part indicator in DCI, respectively. The length of this field may be 2 bits.

- UL BWP ID 610: This field may indicate which UL BWP to which the MAC-CE is to be applied, and the meanings of codepoints in the field may correspond to codepoints of a bandwidth part indicator in DCI, respectively. The length of this field may be 2 bits.

- Pi 615: This field may indicate whether each codepoint of a TCI state field in DCI format 1_1 or 1_2 has multiple TCI states or one TCI state. If the value of Pi is 1, this indicates that a corresponding i-th codepoint has multiple TCI states, and may imply that the codepoint may include a separate DL TCI state and a separate UL TCI state. If the value of Pi is 0, this indicates that a corresponding i-th codepoint has a single TCI state, and may imply that the codepoint may include one type among a joint TCI state, a separate DCI TCI state, or a separate UL TCI state.

- D/U 620: This field may indicate whether a TCI state ID field in the same octet is a joint TCI state, a separate DL TCI state, or a separate UL TCI state. If the field is 1, a TCI state ID field in the same octet may be a joint TCI state or a separate DL TCI state, and If the field is 0, a TCI state ID field in the same octet may be a separate UL TCI state.

- TCI state ID 625: This field may indicate a TCI state identifiable by the higher layer signaling TCI-StateId. If the D/U field is configured to be 1, the TCI state ID field may be used to represent TCI-StateId expressible by 7 bits. In case that the D/U field is configured as 0, the most significant bit (MSB) of this field may be considered a reserved bit, and the remaining 6 bits may be used to express the higher layer signaling UL-TCIState-Id. The maximum number of TCI states that can be activated may be 8 for a joint TCI state, and 16 for a separate DL or UL TCI state.

- R: refers to reserved bits and may be configured to be 0.

With respect to the MAC-CE structure of FIG. 6, a UE may include, in the MAC-CE structure, a third octet including P1, P2,..., and P8 fields in FIG. 6 regardless of unifiedTCI-StateType-r17 in MIMOparam-r17 in the higher layer signaling ServingCellConfig being configured to be joint or separate. In this case, the UE may perform TCI state activation by using the fixed MAC-CE structure regardless of the higher layer signaling configured from the base station. As another example, with respect to the MAC-CE structure of FIG. 6, a UE may omit the third octet including P1, P2,..., and P8 fields illustrated in FIG. 6, in a case where unifiedTCI-StateType-r17 in MIMOparam-r17 in the higher layer signaling ServingCellConfig being configured to be joint. In this case, the UE may save the payload of the MAC-CE by a maximum of 8 bits according to higher layer signaling configured by a base station. In addition, all D/U fields positioned on the first bits in octets starting from a fourth octet in FIG. 6 may be considered as R fields, and all the R fields may be configured to be 0 bits.

[CSI resource configuration]

In NR, the base station may have a channel state information (CSI) framework for indicating a UE's CSI measurement and reporting. The NR's CSI framework may be configured by at least two elements including a resource setting and a report setting, and the report setting may refer to at least one ID of the resource setting, thereby having a mutually connected relationship.

According to an embodiment of the disclosure, the resource setting may include information related to a reference signal (RS) for a UE to measure channel state information. The base station may configure at least one resource configuration for the UE. For example, the base station and the UE may exchange signaling information as in Table 4 in order to transfer information regarding the resource setting.

[Table 4]

```
-- ASN1START
-- TAG-CSI-RESOURCECONFIG-START

CSI-ResourceConfig ::=         SEQUENCE {
    csi-ResourceConfigId          CSI-ResourceConfigId,
    csi-RS-ResourceSetList        CHOICE {
        nzp-CSI-RS-SSB                  SEQUENCE {
            nzp-CSI-RS-ResourceSetList   SEQUENCE (SIZE (1..maxNrofNZP-CSI-RS-ResourceSetsPerConfig)) OF NZP-CSI-RS-ResourceSetId
                                                                                    OPTIONAL, -- Need R
            csi-SSB-ResourceSetList       SEQUENCE (SIZE (1..maxNrofCSI-SSB-ResourceSetsPerConfig)) OF CSI-SSB-ResourceSetId
                                                                                    OPTIONAL   -- Need R
        },
        csi-IM-ResourceSetList        SEQUENCE (SIZE (1..maxNrofCSI-IM-ResourceSetsPerConfig)) OF CSI-IM-ResourceSetId
    },

    bwp-Id                        BWP-Id,
    resourceType                  ENUMERATED { aperiodic, semiPersistent, periodic },
    ...
}

-- TAG-CSI-RESOURCECONFIG-STOP
-- ASN1STOP
```

In Table 4, signal information CSI-ResourceConfig may include information regarding each resource setting. According to the signaling information in Table 4, each resource setting may include a resource setting index (csi-ResourceConfigId), a BWP index (bwp-ID), a time domain transmission configuration (resourceType) of a resource, or a resource set list (csi-RS-ResourceSetList) including at least one resource set. The time domain transmission configuration of a resource may be configured as at least one of aperiodic transmission, semi-persistent transmission, or periodic transmission. A resource set list may be a set including resource sets for channel measurement or a set including resource sets for interference measurement. In case that the resource set list is a set including resource sets for channel measurement, each resource set may include at least one resource, and the at least one resource may be an index of a CSI reference signal (CSI-RS) resource or a synchronization/broadcast channel block (SS/PBCH block (SSB)). In case that the resource set list is a set including resource sets for interference measurement, each resource set may include at least one CSI interference measurement (CSI-IM) resource.

For example, in case that a resource set includes a CSI-RS, the base station and the UE may exchange signaling information as in Table 5 to transfer information regarding the resource set.

[Table 5]

```
-- ASN1START
-- TAG-NZP-CSI-RS-RESOURCESET-START
NZP-CSI-RS-ResourceSet ::=       SEQUENCE {
    nzp-CSI-ResourceSetId            NZP-CSI-RS-ResourceSetId,
    nzp-CSI-RS-Resources             SEQUENCE (SIZE (1..maxNrofNZP-CSI-RS-ResourcesPerSet)) OF NZP-CSI-RS-ResourceId,
    repetition                       ENUMERATED { on, off }                OPTIONAL,    -- Need S
    aperiodicTriggeringOffset        INTEGER(0..6)                         OPTIONAL,    -- Need S
    trs-Info                         ENUMERATED {true}                     OPTIONAL,    -- Need R
    ...
}

-- TAG-NZP-CSI-RS-RESOURCESET-STOP
-- ASN1STOP
```

In Table 5, signaling information NZP-CSI-RS-ResourceSet may include information regarding each resource set. According to the signaling information, each resource set may include at least information regarding a resource set index (nzp-CSI-ResourceSetId) or an index set (nzp-CSI-RS-Resources) of the CSI-RS included therein. In addition, each resource set may include a part of information (repetition) regarding the spatial domain transmission filter of the CSI-RS resource included therein, or whether the CSI-RS resource included therein is used for tracking (trs-Info).

The CSI-RS may be the most representative reference signal included in a resource set. The base station and the UE may exchange signaling information as in Table 6 in order to transfer information regarding a CSI-RS resource.

[Table 6]

```
-- ASN1START
-- TAG-NZP-CSI-RS-RESOURCE-START


NZP-CSI-RS-Resource ::=          SEQUENCE {
    nzp-CSI-RS-ResourceId            NZP-CSI-RS-ResourceId,
    resourceMapping                  CSI-RS-ResourceMapping,
    powerControlOffset               INTEGER (-8..15),
    powerControlOffsetSS             ENUMERATED{db-3, db0, db3, db6}          OPTIONAL,     -- Need R
    scramblingID                     ScramblingId,
    periodicityAndOffset             CSI-ResourcePeriodicityAndOffset        OPTIONAL,     -- Cond PeriodicOrSemiPersistent
    qcl-InfoPeriodicCSI-RS           TCI-StateId                             OPTIONAL,     -- Cond Periodic
    ...
}


-- TAG-NZP-CSI-RS-RESOURCE-STOP
-- ASN1STOP
```

In Table 6, signaling information NZP-CSI-RS-Resource may include information regarding each CSI-RS. The information included in the signaling information NZP-CSI-RS-Resource may have the following meanings.

- nzp-CSI-RS-ResourceId: A CSI-RS resource index
- resourceMapping: Resource mapping information of a CSI-RS resource
- powerControlOffset: A ratio between PDSCH energy per RE (EPRE) and CSI-RS EPRE
- powerControlOffsetSS: A ratio between SS/PBCH block EPRE and CSI-RS EPRE
- scramblingID: A scrambling index of a CSI-RS sequence
- periodicityAndOffset: A transmission periodicity and a slot offset of a CSI-RS resource
- qcl-InfoPeriodicCSI-RS: TCI-state information in case that a corresponding CSI-RS is a periodic CSI-RS

The resourceMapping included in signaling information NZP-CSI-RS-Resource may indicate resource mapping information of a CSI-RS resource, and may include at least one of a frequency resource's resource element (RE) mapping, the number of ports, symbol mapping, CDM type, frequency resource density, or frequency band mapping information. The number of ports configurable through resourceMapping, the frequency resource density, the CDM type, and the time-frequency domain RE mapping may have a value determined by one of the rows in Table 7 below.

[Table 7]

| Row | Ports $X$ | Density $\rho$ | cdm-Type | $(\bar{k},\bar{l})$ | CDM group index $j$ | $k'$ | $l'$ |
|---|---|---|---|---|---|---|---|
| 1 | 1 | 3 | No CDM | $(k_0,l_0),\ (k_0+4,l_0),\ (k_0+8,l_0)$ | 0,0,0 | 0 | 0 |
| 2 | 1 | 1, 0.5 | No CDM | $(k_0,l_0)$ | 0 | 0 | 0 |
| 3 | 2 | 1, 0.5 | FD-CDM2 | $(k_0,l_0)$ | 0 | 0,1 | 0 |
| 4 | 4 | 1 | FD-CDM2 | $(k_0,l_0),(k_0+2,l_0)$ | 0,1 | 0,1 | 0 |
| 5 | 4 | 1 | FD-CDM2 | $(k_0,l_0),(k_0,l_0+1)$ | 0,1 | 0,1 | 0 |
| 6 | 8 | 1 | FD-CDM2 | $(k_0,l_0),(k_1,l_0),(k_2,l_0),(k_3,l_0)$ | 0,1,2,3 | 0,1 | 0 |
| 7 | 8 | 1 | FD-CDM2 | $(k_0,l_0),(k_1,l_0),(k_0,l_0+1),(k_1,l_0+1)$ | 0,1,2,3 | 0,1 | 0 |
| 8 | 8 | 1 | CDM4 (FD2,TD2) | $(k_0,l_0),(k_1,l_0)$ | 0,1 | 0,1 | 0,1 |
| 9 | 12 | 1 | FD-CDM2 | $(k_0,l_0),(k_1,l_0),(k_2,l_0),(k_3,l_0),(k_4,l_0),(k_5,l_0)$ | 0,1,2,3,4,5 | 0,1 | 0 |
| 10 | 12 | 1 | CDM4 (FD2,TD2) | $(k_0,l_0),(k_1,l_0),(k_2,l_0)$ | 0,1,2 | 0,1 | 0,1 |
| 11 | 16 | 1, 0.5 | FD-CDM2 | $(k_0,l_0),(k_1,l_0),(k_2,l_0),(k_3,l_0),$ $(k_0,l_0+1),(k_1,l_0+1),(k_2,l_0+1),(k_3,l_0+1)$ | 0,1,2,3, 4,5,6,7 | 0,1 | 0 |
| 12 | 16 | 1, 0.5 | CDM4 (FD2,TD2) | $(k_0,l_0),(k_1,l_0),(k_2,l_0),(k_3,l_0)$ | 0,1,2,3 | 0,1 | 0,1 |
| 13 | 24 | 1, 0.5 | FD-CDM2 | $(k_0,l_0),(k_1,l_0),(k_2,l_0),(k_0,l_0+1),(k_1,l_0+1),(k_2,l_0+1),$ $(k_0,l_1),(k_1,l_1),(k_2,l_1),(k_0,l_1+1),(k_1,l_1+1),(k_2,l_1+1)$ | 0,1,2,3,4,5, 6,7,8,9,10,11 | 0,1 | 0 |
| 14 | 24 | 1, 0.5 | CDM4 (FD2,TD2) | $(k_0,l_0),(k_1,l_0),(k_2,l_0),(k_0,l_1),(k_1,l_1),(k_2,l_1)$ | 0,1,2,3,4,5 | 0,1 | 0,1 |
| 15 | 24 | 1, 0.5 | CDM8 (FD2,TD4) | $(k_0,l_0),(k_1,l_0),(k_2,l_0)$ | 0,1,2 | 0,1 | 0, 1, 2, 3 |
| 16 | 32 | 1, 0.5 | FD-CDM2 | $(k_0,l_0),(k_1,l_0),(k_2,l_0),(k_3,l_0),$ $(k_0,l_0+1),(k_1,l_0+1),(k_2,l_0+1),(k_3,l_0+1),$ $(k_0,l_1),(k_1,l_1),(k_2,l_1),(k_3,l_1),$ $(k_0,l_1+1),(k_1,l_1+1),(k_2,l_1+1),(k_3,l_1+1)$ | 0,1,2,3, 4,5,6,7, 8,9,10,11, 12,13,14,15 | 0,1 | 0 |
| 17 | 32 | 1, 0.5 | CDM4 (FD2,TD2) | $(k_0,l_0),(k_1,l_0),(k_2,l_0),(k_3,l_0),(k_0,l_1),(k_1,l_1),(k_2,l_1),(k_3,l_1)$ | 0,1,2,3,4,5,6,7 | 0,1 | 0,1 |
| 18 | 32 | 1, 0.5 | CDM8 (FD2,TD4) | $(k_0,l_0),(k_1,l_0),(k_2,l_0),(k_3,l_0)$ | 0,1,2,3 | 0,1 | 0,1, 2, 3 |

Table 7 include a frequency resource density configurable according to the number X of CSI-RS ports, a CDM type, the frequency-axis and time-axis starting positions $(\bar{k},\bar{l})$ of a CSI-RS component RE pattern, and the frequency-axis RE number k' and time-axis RE number l' of the CSI-RS component RE pattern. The CSI-RS component RE pattern described above may be a basic unit that constitutes a CSI-RS resource. Through Y=1+max(k') REs in the frequency domain and Z=1+max(1') REs in the time domain, the CSI-RS component RE pattern may be configured by as many REs as YZ. In case that the number of CSI-RS ports is one, the CSI-RS RE position may be specified without no limitation on subcarriers inside a physical resource block (PRB), and the CSI-RS RE position may be specified by a 12-bit bitmap. In case that the number of CSI-RS ports is {2, 4, 8, 12, 16, 24, 32} and Y=2, the CSI-RS RE position may be specified for every two subcarriers in the PRB, and the CSI-RS RE position may be specified by a 6-bit bitmap. In case that the number of CSI-RS ports is 4 and Y=4, the CSI-RS RE position may be designated for every four subcarriers within the PRB, and the CSI-RS RE position may be designated by a 3-bit bitmap. Similarly, the time-axis RE position may be designated by a bitmap including a total of 14 bits.

[CSI report configuration]

According to an embodiment of the disclosure, a report setting may refer to one or more ID of resource setting, thereby having a mutually connected relationship, and the resource setting(s) having a connection relation with the report setting may provide configuration information including information on a reference signal for channel information measurement. In case that the resource setting (s) having a connection relation with the report setting are used for channel information measurement, the measured channel information may be used for channel information reporting according to the reporting method configured in the report setting having the connection relation.

According to an embodiment of the disclosure, the report setting may include configuration information related to a CSI reporting method. For example, the base station and the UE may exchange signaling information such as Table 8 in order to transfer information regarding the report setting.

## [Table 8]

```
-- ASN1START
-- TAG-CSI-REPORTCONFIG-START

CSI-ReportConfig ::=              SEQUENCE {
    reportConfigId                   CSI-ReportConfigId,
    carrier                          ServCellIndex          OPTIONAL,   -- Need S
    resourcesForChannelMeasurement      CSI-ResourceConfigId,
    csi-IM-ResourcesForInterference      CSI-ResourceConfigId       OPTIONAL,   -- Need R
    nzp-CSI-RS-ResourcesForInterference   CSI-ResourceConfigId        OPTIONAL,     -- Need R
    reportConfigType                 CHOICE {
        periodic                         SEQUENCE {
            reportSlotConfig                 CSI-ReportPeriodicityAndOffset,
            pucch-CSI-ResourceList               SEQUENCE (SIZE (1..maxNrofBWPs)) OF PUCCH-CSI-Resource
        },
```

```
    semiPersistentOnPUCCH              SEQUENCE {
        reportSlotConfig                  CSI-ReportPeriodicityAndOffset,
        pucch-CSI-ResourceList            SEQUENCE (SIZE (1..maxNrofBWPs)) OF PUCCH-CSI-Resource
    },
    semiPersistentOnPUSCH              SEQUENCE {
        reportSlotConfig                  ENUMERATED {sl5, sl10, sl20, sl40, sl80, sl160, sl320},
        reportSlotOffsetList              SEQUENCE (SIZE (1.. maxNrofUL-Allocations)) OF INTEGER(0..32),
        p0alpha                           P0-PUSCH-AlphaSetId
    },
    aperiodic                          SEQUENCE {
        reportSlotOffsetList              SEQUENCE (SIZE (1..maxNrofUL-Allocations)) OF INTEGER(0..32)
    }
},
reportQuantity                         CHOICE {
    none                                  NULL,
    cri-RI-PMI-CQI                        NULL,
    cri-RI-i1                             NULL,
    cri-RI-i1-CQI                         SEQUENCE {
        pdsch-BundleSizeForCSI                ENUMERATED {n2, n4}                              OPTIONAL      -- Need S
    },
    cri-RI-CQI                            NULL,
    cri-RSRP                              NULL,
    ssb-Index-RSRP                        NULL,
    cri-RI-LI-PMI-CQI                     NULL
},
reportFreqConfiguration                SEQUENCE {
    cqi-FormatIndicator                   ENUMERATED { widebandCQI, subbandCQI }              OPTIONAL,    -- Need R
    pmi-FormatIndicator                   ENUMERATED { widebandPMI, subbandPMI }              OPTIONAL,    -- Need R
    csi-ReportingBand                     CHOICE {
        subbands3                             BIT STRING(SIZE(3)),
        subbands4                             BIT STRING(SIZE(4)),
        subbands5                             BIT STRING(SIZE(5)),
        subbands6                             BIT STRING(SIZE(6)),
        subbands7                             BIT STRING(SIZE(7)),
        subbands8                             BIT STRING(SIZE(8)),
        subbands9                             BIT STRING(SIZE(9)),
        subbands10                            BIT STRING(SIZE(10)),
        subbands11                            BIT STRING(SIZE(11)),
        subbands12                            BIT STRING(SIZE(12)),
        subbands13                            BIT STRING(SIZE(13)),
        subbands14                            BIT STRING(SIZE(14)),
        subbands15                            BIT STRING(SIZE(15)),
        subbands16                            BIT STRING(SIZE(16)),
        subbands17                            BIT STRING(SIZE(17)),
        subbands18                            BIT STRING(SIZE(18)),
        ...,
        subbands19-v1530                      BIT STRING(SIZE(19))
    } OPTIONAL      -- Need S
}                                                                                            OPTIONAL,    -- Need R
timeRestrictionForChannelMeasurements      ENUMERATED {configured, notConfigured},
timeRestrictionForInterferenceMeasurements ENUMERATED {configured, notConfigured},
codebookConfig                             CodebookConfig                                    OPTIONAL,    -- Need R
dummy                                      ENUMERATED {n1, n2}                               OPTIONAL,    -- Need R
groupBasedBeamReporting                    CHOICE {
    enabled                                   NULL,
    disabled                                  SEQUENCE {
        nrofReportedRS                            ENUMERATED {n1, n2, n3, n4}                 OPTIONAL      -- Need S
    }
},
cqi-Table                                  ENUMERATED {table1, table2, table3, spare1}       OPTIONAL,    -- Need R
subbandSize                                ENUMERATED {value1, value2},
non-PMI-PortIndication                     SEQUENCE (SIZE (1..maxNrofNZP-CSI-RS-ResourcesPerConfig)) OF PortIndexFor8Ranks OPTIONAL,  -- Need R
...,
[[

    semiPersistentOnPUSCH-v1530            SEQUENCE {
        reportSlotConfig-v1530                ENUMERATED {sl4, sl8, sl16}
    }                                                                                        OPTIONAL      -- Need R
]]
}
```

In Table 8, signal information CSI-ReportConfig may include information regarding each report setting. The information included in the signaling information CSI-ReportConfig may have the following meaning.

- reportConfigId: A report setting index
- carrier: A serving cell index
- resourcesForChannelMeasurement: A resource setting index for channel measurement having a connection relationship with the report setting

- csi-IM-ResourcesForInterference: A resource setting index having a CSI-IM resource for interference measurement having a connection relationship with the report setting
- nzp-CSI-RS-ResourcesForInterference: A resource setting index having a CSI-RS resource for interference measurement having a connection relationship with the report setting
- reportConfigType: indicates channel reporting's time domain transmission configuration and transmission channel, and may have an aperiodic transmission or semi-persistent physical uplink control channel (PUCCH) transmission or semi-persistent PUSCH transmission or periodic transmission configuration
- reportQuantity: indicates the type of channel information to be reported, and may have the type of channel information in case that no channel report is transmitted ("none") and in case that a channel report is transmitted ("cri-RI-PMI-CQI", "cri-RI-i1", "cri-RI-i1-CQI", "cri-RI-CQI", "cri-RSRP", "ssb-Index-RSRP", "cri-RI-LI-PMI-CQI"). Elements included in the type of channel information refer to a channel quality indicator (CQI), a precoding matrix indicator (PMI), a CSI-RS resource indicator (CRI), an SS/PBCH block resource indicator (SSBRI), a layer indicator (LI), a rank indicator (RI), and/or reference signal received power (L1-RSRP).
- reportFreqConfiguration: indicates whether the reported channel information includes only information regarding the entire bandwidth (wideband) or includes information regarding each subband, and in case of including information regarding each subband is included, the channel information may have configuration information regarding the included subband.
- timeRestrictionForChannelMeasurements: indicates whether there is a time domain restriction regarding a reference signal for channel measurement among reference signals to which the reported channel information refers
- timeRestrictionForInterferenceMeasurements: indicates whether there is a time domain restriction regarding a reference signal for interference measurement among reference signals to which the reported channel information refers
- codebookConfig: Codebook information to which the reported channel information refers
- groupBasedBeamReporting: indicates whether or not to beam-group the channel report
- cqi-Table: A CQI table index to which the reported channel information refers
- subbandSize: An index indicating the subband size of channel information
- non-PMI-PortIndication: Port mapping information to be referenced when reporting non-PMI channel information

In case that the base station indicates channel information reporting through upper layer signaling or L1 signaling, the UE may perform channel information reporting by referring to the above-described configuration information included in the indicated report setting.

The base station may instruct the UE to report channel state information (CSI) through upper layer signaling including radio resource control (RRC) signaling or medium access control (MAC) control element (CE) signaling, or L1 signaling (for example, common DCI, group-common DCI, or UE-specific DCI).

For example, the base station may indicate aperiodic channel information reporting (CSI report) to the UE through upper layer signaling or DCI using DCI format 0_1. The base station may configure a parameter for an aperiodic CSI report of the UE, or multiple CSI report trigger states including a parameter for a CSI report, through upper layer signaling. The parameter for a CSI report or the CSI report trigger states may include at least one of a slot interval between a PDCCH including DCI and a PUSCH including a CSI report, a set including possible slot intervals, a reference signal ID for channel state measurement, or the type of channel information included therein. If the base station indicates some of the multiple CSI report trigger states to the UE through DCI, the UE may report channel information according to the CSI report configuration of the report setting configured for the indicated CSI report trigger states. The channel information reporting may be performed through a PUSCH scheduled by DCI format 0_1. Time domain resource allocation of a PUSCH including the UE's CSI report may be performed by indicating at least one of the slot interval from the PDCCH indicated through DCI, or the starting symbol within the slot for time domain resource allocation of the PUSCH, and the symbol length. For example, the position of a slot in which a PUSCH including the UE's CSI report is transmitted may be indicated through the slot interval from the PDCCH indicated through DCI, and the starting symbol within the slot and the symbol length may be indicated through the above-described DCI's time domain resource assignment field.

For example, the base station may indicate a semi-persistent CSI report transmitted through a PUSCH to the UE through DCI using DCI format 0_1. The base station may activate or deactivate a semi-persistent CSI report transmitted through a PUSCH through DCI scrambled by an SP-CSI-RNTI. If a semi-persistent CSI report is activated, the UE may periodically report channel information according to the configured slot interval. If the semi-persistent CSI report is deactivated, the UE may stop the periodic channel information report that has been activated. The base station may configure, through upper layer signaling, a parameter for the UE's semi-persistent CSI report, or multiple CSI report trigger states including the parameter for the semi-persistent CSI report. The parameter for a CSI report or the CSI report trigger states may include at least one of a set including the slot interval between a PDCCH including DCI indicating a CSI report and a PUSCH including the CSI report or possible slot intervals, the slot interval between a slot in which upper layer signaling indicating the CSI report is activated and the PUSCH including the CSI report, the slot interval periodicity of the CSI report, or the type of channel information included therein. If the base station activates, for the UE, some of multiple CSI report trigger states or some of multiple report settings through upper layer signaling or DCI, the UE may report channel information according to the CSI report configuration configured in the report setting included in the indicated CSI report trigger state or the activated report setting. The channel information reporting may be performed through a PUSCH semi-persistently scheduled by DCI format 0_1 scrambled by an SP-CSI-RNTI. Time domain resource allocation of a PUSCH including the UE's CSI report may be performed by indicating at least one of the slot interval periodicity of the CSI report, the slot interval from the slot in which the upper layer signaling is activated, or the slot interval from the PDCCH indicated through DCI, or the starting symbol within the slot for time domain resource allocation of the PUSCH, and the symbol length. For example, the position of a slot in which a PUSCH including the UE's CSI report is transmitted may be indicated through the slot interval from the PDCCH indicated through DCI, and the starting symbol within the slot and the symbol length may be indicated through the time domain resource assignment field of DCI format 0_1 described above..

For example, the base station may indicate, to the UE, a semi-persistent CSI report transmitted through a PUCCH through upper layer signaling, such as a MAC-CE. The base station may activate or deactivate a semi-persistent CSI report transmitted through the PUCCH through MAC-CE signaling. If a semi-persistent CSI report is activated, the UE may periodically report channel information according to the configured slot interval. If the semi-persistent CSI report is deactivated, the UE may stop the periodic channel information reporting which has been activated. The base station may configure parameters for the UE's semi-persistent CSI report through upper layer signaling. Parameters for the CSI report may include at least one of a PUCCH resource in which the CSI report is transmitted, the slot interval periodicity of the CSI report, or the type of channel information included therein. The UE may transmit a CSI report through a PUCCH. Alternatively, in case that a PUCCH for a CSI report overlaps a PUSCH, the UE may transmit the CSI report through the PUSCH. The position of the PUCCH transmission slot including a CSI report may be indicated through the slot interval periodicity of the CSI report configured through upper layer signaling, and/or the slot interval between the slot in which upper layer signaling is activated and the PUCCH including the CSI report, and the starting symbol inside the slot and the symbol length may be indicated through the starting symbol to which a PUCCH resource configured through upper layer signaling is assigned, and the symbol length.

For example, the base station may indicate a periodic CSI report to the UE through upper layer signaling. The base station may activate or deactivate a periodic CSI report through upper layer signaling including RRC signaling. If a periodic CSI report is activated, the UE may periodically report channel information according to the configured slot interval. If the periodic CSI report is deactivated, the UE may stop the periodic channel information reporting that has been activated. The base station may configure a report setting including parameters for the UE's periodic CSI report through upper layer signaling. The parameters for the CSI report may include at least one of a PUCCH resource configuration for the CSI report, the slot interval between a slot in which upper layer signaling indicating the CSI report is activated and a PUCCH including the CSI report, a slot interval periodicity of the CSI report, a reference signal ID for channel state measurement, and the type of channel information included therein. The UE may transmit the CSI report through a PUCCH. Alternatively, in case that the PUCCH for the CSI report overlaps with the PUSCH, the UE may transmit the CSI report through the PUSCH. The position of a slot in which a PUCCH including a CSI report is transmitted may be indicated through the slot interval periodicity of the CSI report configured through upper layer signaling, and/or the slot interval between the slot in which upper layer signaling is activated and the PUCCH including the CSI report, and the starting symbol within the slot and the symbol length may be indicated through the starting symbol to which a PUCCH resource configured through upper layer signaling is assigned, and the symbol length.

With regard to the aforementioned CSI report configurations (CSI-ReportConfig), each report configuration CSI-ReportConfig may be associated with one downlink (DL) bandwidth part identified by a higher-layer parameter bandwidth part identifier (bwp-id) given by the CSI resource configuration CSI-ResourceConfig associated with the corresponding report configuration. As a time domain reporting operation for each report configuration CSI-ReportConfig, "aperiodic", "semi-persistent", and "periodic" schemes may be supported, and these schemes may be configured for the UE by the base station via a reportConfigType parameter configured from a higher layer. A semi-persistent CSI report method may support a "PUCCH-based semi-persistent (semi-PersistentOnPUCCH)" method and a "PUSCH-based semi-persistent (semi-PersistentOnPUSCH)" method. In case of the periodic or semi-persistent CSI report method, a PUCCH or PUSCH resource in which CSI is to be transmitted may be configured for the UE by the base station via higher-layer signaling. A periodicity and a slot offset of the PUCCH or PUSCH resource in which CSI is to be transmitted may be given by a numerology of an uplink (UL) bandwidth part configured for CSI report transmission. In case of the aperiodic CSI report method, a PUSCH resource in which CSI is to be transmitted may be scheduled for the UE by the base station via L1 signaling (aforementioned DCI format 0_1).

With regard to the aforementioned CSI resource configurations (CSI-ResourceConfig), each CSI resource configuration CSI-ReportConfig may include S(≥1) CSI resource sets (e.g., given via a higher-layer parameter of csi-RS-ResourceSetList). A CSI resource set list may include a non-zero power (NZP) CSI-RS resource set and an SS/PBCH block set or may include a CSI-interference measurement (CSI-IM) resource set. Each CSI resource setting may be positioned in a downlink (DL) bandwidth part identified by higher-layer parameter bwp-id and may be connected to CSI report setting in the same downlink bandwidth part. A time domain operation of a CSI-RS resource in CSI resource setting may be configured to be one of "aperiodic", "periodic", or "semi-persistent" from the higher-layer parameter resourceType. With regard to the periodic or semi-persistent CSI resource configuration, the number of CSI-RS resource sets may be limited to S=1, and the configured periodicity and slot offset may be given based on a numerology of the downlink bandwidth part identified by bwp-id. One or more CSI resource settings for channel or interference measurement may be configured for the UE by the base station via higher-layer signaling, and may include, for example, the following CSI resources.

- CSI-IM resource for interference measurement
- NZP CSI-RS resource for interference measurement
- NZP CSI-RS resource for channel measurement

With regard to CSI-RS resource sets associated with a resource configuration in which the higher-layer parameter of resourceType is configured to be "aperiodic", "periodic", or "semi-persistent", a trigger state of CSI report configuration having reportType configured to be "aperiodic", and a resource configuration for channel or interference measurement on one or multiple component cells (CCs) may be configured via the higher-layer parameter of CSI-AperiodicTriggerStateList.

Aperiodic CSI reporting of the UE may be performed using a PUSCH, periodic CSI reporting may be performed using a PUCCH, and semi-persistent CSI reporting may be performed using a PUSCH when triggered or activated via DCI, and may be performed using a PUCCH after activated via a MAC control element (MAC CE). As described above, CSI resource setting may also be configured to be aperiodic, periodic, or semi-persistent. A combination of CSI reporting setting and CSI resource configuration may be supported based on Table 9 below.

[Table 9]

Table 5.2.1.4-1: Triggering/Activation of CSI Reporting for the possible CSI-RS Configurations.

| CSI-RS Configuration | Periodic CSI Reporting | Semi-Persistent CSI Reporting | Aperiodic CSI Reporting |
|---|---|---|---|
| Periodic CSI-RS | No dynamic triggering/activation | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Semi-Persistent CSI-RS | Not Supported | For reporting on PUCCH, the UE receives an activation command [10, TS 38.321]; for reporting on PUSCH, the UE receives triggering on DCI | Triggered by DCI; additionally, activation command [10, TS 38.321] possible as defined in Subclause 5.2.1.5.1. |
| Aperiodic CSI-RS | Not Supported | Not Supported | Triggered by DCI; additionally, activation command [10, TS 38.321] possible as defined in Subclause 5.2.1.5.1. |

Aperiodic CSI reporting may be triggered by a "CSI request" field in DCI format 0_1 described above, which corresponds to scheduling DCI for a PUSCH. The UE may monitor a PDCCH, may acquire DCI format 0_1, and may acquire scheduling information of a PUSCH and a CSI request indicator. The CSI request indicator may be configured to have NTS (=0, 1, 2, 3, 4, 5, or 6) bits, and may be determined by higher-layer signaling (reportTriggerSize). One trigger state among one or multiple aperiodic CSI report trigger states which may be configured via higher-layer signaling (CSI-AperiodicTriggerStateList) may be triggered by the CSI request indicator.

- If all bits in the CSI request field are 0, this may indicate that CSI reporting is not requested.
- If the number M of configured CSI trigger states in CSI-AperiodicTriggerStateList is greater than 2NTs-1, M CSI trigger states may be mapped to 2NTs-1 trigger states according to a predefined mapping relation, and one trigger state among the 2NTs-1 trigger states may be indicated by the CSI request field.
- If the number M of configured CSI trigger states in CSI-AperiodicTriggerStateLite is less than or equal to 2NTs-1, one of the M CSI trigger states may be indicated by the CSI request field.

Table 10 below shows an example of a relationship between a CSI request indicator and a CSI trigger state that may be indicated by a corresponding indicator.

[Table 10]

| CSI request field | CSI trigger state | CSI-ReportConfigId | CSI-ResourceConfigId |
|---|---|---|---|
| 00 | no CSI request | N/A | N/A |
| 01 | CSI trigger state#1 | CSI report#1 | CSI resource#1, |
| | | CSI report#2 | CSI resource#2 |
| 10 | CSI trigger state#2 | CSI report#3 | CSI resource#3 |
| 11 | CSI trigger state#3 | CSI report#4 | CSI resource#4 |

The UE may measure a CSI resource in a CSI trigger state triggered via the CSI request field, and then generate CSI (including, for example, at least one of the CQI, PMI, CRI, SSBRI, LI, RI, or L1-RSRP described above) based on the measurement. The UE may transmit the acquired CSI by using the PUSCH scheduled via corresponding DCI format 0_1. If one bit corresponding to an uplink data indicator (UL-SCH indicator) in DCI format 0_1 indicates "1", the UE may multiplex uplink data (UL-SCH) and the acquired CSI on the PUSCH resource scheduled by DCI format 0_1 so as to transmit the same. If one bit corresponding to the uplink data indicator (UL-SCH indicator) in DCI format 0_1 indicates "0", the UE may map only CSI, without uplink data (UL-SCH), to the PUSCH resource scheduled by DCI format 0_1 so as to transmit the same.

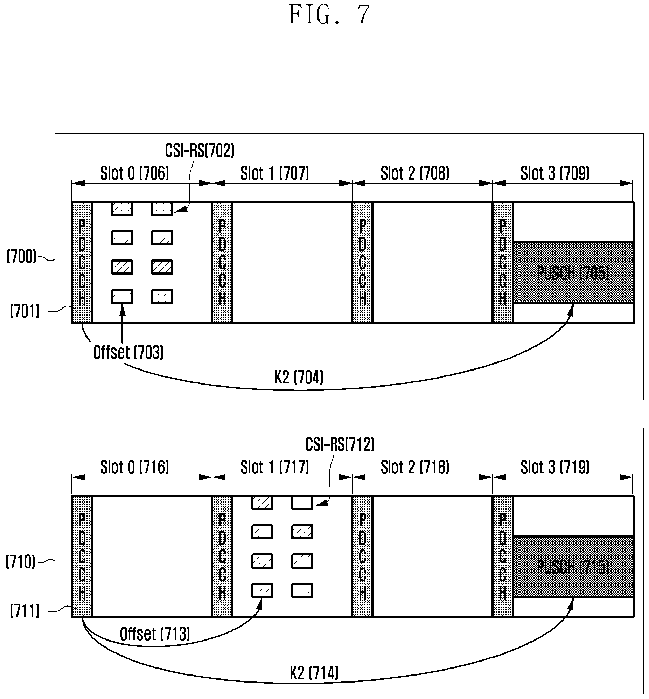

FIG. 7 illustrates an example of an aperiodic CSI reporting method.

In an example 700 of FIG. 7, a UE may acquire DCI format 0_1 by monitoring a PDCCH 701, and may acquire scheduling information and CSI request information for a PUSCH 705 therefrom. The UE may acquire resource information of a CSI-RS 702 to be measured, from a received CSI request indicator. The UE may determine a time point at which the UE needs to measure a resource of the CSI-RS 702, based on a time point at which DCI format 0_1 is received, and a parameter for an offset (e.g., aforementioned aperiodicTriggeringOffset) in a CSI resource set configuration (e.g., an NZP CSI-RS resource set configuration (NZP-CSI-RS-ResourceSet)). More specifically, the UE may be configured with an offset value X of the parameter, aperiodicTriggeringOffset, in the NZP-CSI-RS resource set configuration from a base station via higher-layer signaling, and the configured offset value X may refer to an offset between a slot in which DCI triggering aperiodic CSI reporting is received, and a slot in which the CSI-RS resource is transmitted. For example, aperiodicTriggeringOffset parameter values and offset values X may have mapping relationships as shown in Table 11 below.

[Table 11]

| aperiodicTriggeringOffset | Offset X |
|---|---|
| 0 | 0 slot |
| 1 | 1 slot |
| 2 | 2 slots |
| 3 | 3 slots |
| 4 | 4 slots |
| 5 | 16 slots |
| 6 | 24 slots |

The example 700 of FIG. 7 shows an example in which aforementioned offset value X is configured to be 0 (X=0). In this case, the UE may receive the CSI-RS 706 in a slot (corresponding to slot 0 702 of FIG. 7) in which DCI format 0_1 triggering aperiodic CSI reporting is received, and may report CSI information, which is measured based on the received CSI-RS, to the base station via the PUSCH 705. The UE may acquire, from DCI format 0_1, scheduling information (information corresponding to each field of DCI format 0_1 described above) on the PUSCH 705 for CSI reporting. For example, in DCI format 0_1, the UE may acquire information on a slot in which the PUSCH 705 is to be transmitted, from time domain resource allocation information for the PUSCH 705 described above. In the example 700 of FIG. 7, the UE acquires 3 as a K2 value corresponding to a slot offset value for PDCCH-to-PUSCH, and accordingly, the PUSCH 705 may be transmitted in slot 3 701, which is spaced 3 slots apart from slot 0 706, i.e., a time point at which the PDCCH 709 has been received.

In an example 710 of FIG. 7, a UE may acquire DCI format 0_1 by monitoring a PDCCH 711, and may acquire scheduling information and CSI request information for a PUSCH 715 therefrom. The UE may acquire resource information of a CSI-RS 712 to be measured, from a received CSI request indicator. The example 710 of FIG. 7 shows an example in which the offset value X for CSI-RS described above is configured to be 1 (X=1). In this case, the UE may receive the CSI-RS 716 in a slot (corresponding to slot 0 712 of FIG. 7) in which DCI format 0_1 triggering aperiodic CSI reporting is received, and may report CSI information, which is measured based on the received CSI-RS, to the base station via the PUSCH 715.

The aperiodic CSI report may include at least one of or both CSI part 1 and CSI part 2, and when the aperiodic CSI report is transmitted via the PUSCH, the aperiodic CSI report may be multiplexed on a transport block. After a CRC is inserted into an input bit of aperiodic CSI for multiplexing, encoding and rate matching may be performed, and then transmission may be performed by mapping to resource elements within the PUSCH in a specific pattern. The CRC insertion may be omitted depending on a coding method or a length of the input bit. The number of modulation symbols, which is calculated for rate matching during multiplexing of CSI part 1 or CSI part 2 included in the aperiodic CSI report, may be calculated as shown in Table 12 below.

[Table 12]

For CSI part 1 transmission on PUSCH not using repetition type B with UL-SCH, the number of coded modulation symbols per layer for CSI part 1 transmission, denoted as $Q'_{\text{CSI-part1}}$, is determined as follows:

$$Q'_{\text{CSI-1}} = \min \left\{ \left\lceil \frac{(O_{\text{CSI-1}} + L_{\text{CSI-1}}) \cdot \beta_{\text{offset}}^{\text{PUSCH}} \cdot \sum_{l=0}^{N_{\text{symb,all}}^{\text{PUSCH}}-1} M_{\text{sc}}^{\text{UCI}}(l)}{\sum_{r=0}^{C_{UL-SCH}-1} K_r} \right\rceil, \left\lceil \alpha \cdot \sum_{l=0}^{N_{\text{symb,all}}^{\text{PUSCH}}-1} M_{\text{sc}}^{\text{UCI}}(l) \right\rceil - Q'_{ACK/CG-UCI} \right\}$$

...

For CSI part 1 transmission on an actual repetition of a PUSCH with repetition Type B with UL-SCH, the number of coded modulation symbols per layer for CSI part 1 transmission, denoted as $Q'_{\text{CSI-part1}}$, is determined as follows:

$$Q'_{CSI-1} = \min\left\{\left\lceil\frac{(O_{CSI-1}+L_{CSI-1})\cdot\beta^{PUSCH}_{offset}\cdot\Sigma^{N^{PUSCH}_{symb,nominal}-1}_{l=0} M^{UCI}_{sc,nominal}(l)}{\Sigma^{C_{UL-SCH}-1}_{r=0}K_r}\right\rceil, \left\lceil\alpha\cdot\sum^{N^{PUSCH}_{symb,nominal}-1}_{l=0} M^{UCI}_{sc,nominal}(l)\right\rceil\right.$$

$$\left. - Q'_{ACK/CG-UCI}, \sum^{N^{PUSCH}_{symb,actual}-1}_{l=0} M^{UCI}_{sc,actual}(l) - Q'_{ACK/CG-UCI}\right\}$$

...

For CSI part 1 transmission on PUSCH without UL-SCH, the number of coded modulation symbols per layer for CSI part 1 transmission, denoted as $Q'_{CSI-part1}$, is determined as follows:

if there is CSI part 2 to be transmitted on the PUSCH,

$$Q'_{CSI-1} = \min\left\{\left\lceil\frac{(O_{CSI-1}+L_{CSI-1})\cdot\beta^{PUSCH}_{offset}}{R\cdot Q_m}\right\rceil, \sum^{N^{PUSCH}_{symb,all}-1}_{l=0} M^{UCI}_{sc}(l) - Q'_{ACK}\right\}$$

else

$$Q'_{CSI-1} = \sum^{N^{PUSCH}_{symb,all}-1}_{l=0} M^{UCI}_{sc}(l) - Q'_{ACK}$$

end if

...

For CSI part 2 transmission on PUSCH not using repetition type B with UL-SCH, the number of coded modulation symbols per layer for CSI part 2 transmission, denoted as $Q'_{CSI-part2}$, is determined as follows:

$$Q'_{CSI-2} = \min\left\{\left\lceil\frac{(O_{CSI-2}+L_{CSI-2})\cdot\beta^{PUSCH}_{offset}\cdot\Sigma^{N^{PUSCH}_{symb,all}-1}_{l=0} M^{UCI}_{sc}(l)}{\Sigma^{C_{UL-SCH}-1}_{r=0}K_r}\right\rceil, \left\lceil\alpha\cdot\Sigma^{N^{PUSCH}_{symb,all}-1}_{l=0} M^{UCI}_{sc}(l)\right\rceil - Q'_{ACK/CG-UCI} - \right.$$

$$\left. Q'_{CSI-1}\right\}$$

For CSI part 2 transmission on an actual repetition of a PUSCH with repetition Type B with UL-SCH, the number of coded modulation symbols per layer for CSI part 2 transmission, denoted as $Q'_{CSI-part2}$, is determined as follows:

$$Q'_{CSI-2} = \min\left\{\left\lceil\frac{(O_{CSI-2}+L_{CSI-2})\cdot\beta^{PUSCH}_{offset}\cdot\Sigma^{N^{PUSCH}_{symb,nominal}-1}_{l=0} M^{UCI}_{sc,nominal}(l)}{\Sigma^{C_{UL-SCH}-1}_{r=0}K_r}\right\rceil, \left\lceil\alpha\cdot\sum^{N^{PUSCH}_{symb,nominal}-1}_{l=0} M^{UCI}_{sc,nominal}(l)\right\rceil\right.$$

$$\left. - Q'_{ACK/CG-UCI} - Q'_{CSI-1}, \sum^{N^{PUSCH}_{symb,actual}-1}_{l=0} M^{UCI}_{sc,actual}(l) - Q'_{ACK/CG-UCI} - Q'_{CSI-1}\right\}$$

...

For CSI part 2 transmission on PUSCH without UL-SCH, the number of coded modulation symbols per layer for CSI part 2 transmission, denoted as $Q'_{CSI-part2}$, is determined as follows:

$$Q'_{CSI-2} = \sum^{N^{PUSCH}_{symb,all}-1}_{l=0} M^{UCI}_{sc}(l) - Q'_{ACK} - Q'_{CSI-1}$$

Specifically, for PUSCH repetition type A and B transmissions, the UE may multiplex the aperiodic CSI report only on the first repetition transmission among repetition PUSCH transmissions, so as to transmit the same. This is because aperiodic CSI report information to be multiplexed is encoded in a polar code scheme, and in this case, each PUSCH repetition needs to have the same frequency and time resource allocation in order to multiplex the aperiodic CSI report information on multiple PUSCH repetitions. Particularly, in the case of PUSCH repetition type B transmission, since each actual repetition may have different OFDM symbol durations, the aperiodic CSI report may be multiplexed only on the first repetition and then transmitted.

In addition, for PUSCH repetition type B transmission, when the UE receives DCI for activation of semi-persistent CSI reporting or scheduling of aperiodic CSI reporting without scheduling for a transport block, the UE may assume that a value of nominal repetition is 1 even if the number of PUSCH repetition transmissions, which is configured via higher-layer signaling, is greater than 1. In addition, if the aperiodic or semi-persistent CSI reporting is scheduled or activated without scheduling for a transport block, based on PUSCH repetition type B transmission, the UE may expect that a first nominal repetition is identical to the first actual repetition. With regard to the PUSCH transmitted while including semi-persistent CSI, based on repeated PUSCH transmission scheme B, without scheduling for DCI after the semi-persistent CSI reporting has been activated via the DCI, if the first nominal repetition is different from the first actual repetition, transmission for the first nominal repetition may be ignored.

[CSI computation time]

In case that the base station indicates an aperiodic CSI report or a semi-persistent CSI report to the UE through DCI, it may be determined whether the UE is able to perform a valid channel report through the indicated CSI report in consideration of the channel computation time required for the CSI report. With regard to an aperiodic CSI report or a semi-persistent CSI report indicated through DCI, the UE may perform a valid CSI report, starting from an uplink symbol after Z symbols, after the last symbol including a PDCCH including DCI indicating the CSI report is ended, and the Z symbols described above may vary according to the numerology of a downlink bandwidth part corresponding to a PDCCH including DCI indicating a CSI report, the numerology of an uplink bandwidth part corresponding to a PUSCH for transmitting the CSI report, and the type or characteristics (for example, report quantity, frequency band granularity, the number of ports of a reference signal, codebook type, etc.) of channel information reported in the CSI report. In other words, in order for a CSI report to be determined as a valid CSI report (e.g., for the CSI report to be a valid CSI report), the CSI report's uplink transmission should not be performed before the Zref symbol, including the timing advance. The Zref symbol is an uplink symbol that starts a cyclic prefix (CP) after time $T_{proc,CSI} = (Z)(2048 + 144) \cdot \kappa 2^{-\mu} \cdot T_C$ from the moment at which the last symbol of the triggering PDCCH ends. Here, the detailed value of Z follows the following description, $T_C = 1/(\Delta f_{max} \cdot N_f)$, $\Delta f_{max} = 480 \cdot 10^3$Hz, $N_f = 4096$, $\kappa = 64$, and $\mu$ is numerology. In this regard, $\mu$ may be preconfigured to maximize the $Tp_{proc,CSI}$ value among ($\mu_{PDCCH}$, $\mu_{CSI-RS}$, $\mu_{UL}$), $\mu_{PDCCH}$ may refer to a subcarrier spacing used for PDCCH transmission, $\mu_{CSI-RS}$ may refer to a subcarrier spacing used for CSI-RS transmission, and $\mu_{UL}$ may refer to the subcarrier spacing of an uplink channel used for uplink control information (UCI) transmission for CSI reporting. As another example, $\mu$ may be preconfigured to maximize the $T_{proc,CSI}$ value among ($\mu_{PDCCH}$, $\mu_{UL}$). The above description is referenced regarding definitions of $\mu_{PDCCH}$ and $\mu_{UL}$. For the sake of convenience of subsequent description, it may be assumed that, if the above condition is satisfied, CSI reporting validity condition 1 is satisfied.

In addition, in case that a reference signal for channel measurement regarding aperiodic CSI report indicated to the UE through DCI is an aperiodic reference signal, the UE may perform a valid CSI report starting from the uplink symbol after Z' symbols, after the last symbol including the reference signal is ended, and the Z' symbols may vary according to the numerology of the downlink bandwidth part corresponding to the PDCCH including DCI for indicating a CSI report, the numerology of the bandwidth corresponding to the reference signal for channel measurement regarding the CSI report, the numerology of the uplink bandwidth part corresponding to the PUSCH for transmitting the CSI report, or the type or characteristics (e.g., report quantity, frequency band granularity, the number of ports of the reference signal, or codebook type) of the channel information reported in the CSI report. In other words, in order for a CSI report to be determined as a valid CSI report (e.g., for the CSI report to be a valid CSI report), the CSI report's uplink transmission may not be supposed to be performed before the Zref' symbol, including a timing advance. In this regard, the Zref' symbol may be an uplink symbol that starts a cyclic prefix (CP) after time $T'_{\text{proc,CSI}} = (Z')(2048 + 144) \cdot \kappa 2^{-\mu} \cdot T_C$ from the moment the last symbol of the aperiodic CSI-RS or aperiodic CSI-IM triggered by the triggering PDCCH ends. Here, the detailed value of Z' follows the following description, $T_c = 1/(\Delta f_{max} \cdot N_f)$, $\Delta f_{max} = 480 \cdot 10^3$Hz, $N_f = 4096$, $\kappa = 64$, and $\mu$ may be numerology. In this regard, $\mu$ may be preconfigured to maximize the $T_{proc,CSI}$ value among ($\mu_{PDCCH}$, $\mu_{CSI-RS}$, $\mu_{UL}$), $\mu_{PDCCH}$ may refer to a subcarrier spacing used for triggering PDCCH transmission, $\mu_{CSI-RS}$ may refer to a subcarrier spacing used for CSI-RS transmission, and $\mu_{UL}$ may refer to the subcarrier spacing of an uplink channel used for uplink control information (UCI) transmission for CSI reporting. As another example, $\mu$ may be preconfigured to maximize the $T_{proc,CSI}$ value among ($\mu_{PDCCH}$, $\mu_{UL}$). The above description is referenced regarding definitions of $\mu_{PDCCH}$ and $\mu_{UL}$. For the sake of convenience of subsequent description, it may be assumed that, if the above condition is satisfied, CSI reporting validity condition 2 is satisfied.

If the base station indicates an aperiodic CSI report regarding an aperiodic reference signal to the UE through DCI, the UE may perform a valid CSI report starting from the first uplink symbol that satisfies both the timepoint after Z symbols after the last symbol included in the PDCCH including DCI indicating a CSI report is ended, and the timepoint after Z' symbols after the last symbol including the reference signal is ended. That is, in case of aperiodic CSI reporting based on an aperiodic reference signal, CSI a CSI report may be deemed to be valid only if the same satisfies both CSI reporting validity conditions 1 and 2.

In case that the CSI report timepoint indicated by the base station does not satisfy the CSI computation time requirement, the UE may determine that the CSI report which does not satisfy the CSI computation time requirement is invalid, and may not consider updating the channel information state for the CSI report.

The Z and Z' symbols for calculating the CSI computation time described above may follow Table 13 and Table 14 below. For example, in case that the channel information reported in the CSI report includes only wideband information, the number of ports of the reference signal is 4 or less, one reference signal resource is configured, and the codebook type is "typel-SinglePanel" or the type (report quantity) of the reported channel information is "cri-RI-CQI", the Z and Z' symbols may follow $Z_1$, $Z_1'$ values in Table 14. Hereinafter, this will be referred to as delay requirement 2. In addition, in case that a PUSCH including a CSI report does not include a TB or HARQ-ACK, and the UE's CPU occupation is 0, Z and Z' symbols may follow $Z_1$, $Z_1'$ values in Table 13, and this will be referred to as delay requirement 1. The above description regarding the CPU occupation may be described in detail below. In addition, in case that the report quantity is "cri-RSRP" or "ssb-Index-RSRP", Z and Z' symbols may follow $Z_3$, $Z_3'$ values in Table 14. In Table 14, X1, X2, X3, and X4 may refer to UE capability regarding a beam reporting time, and KB1 and KB2 in Table 14 may refer to UE capability regarding a beam change time. Z and Z' symbols may follow $Z_2$, $Z_2'$ values in Table 14 in case that the same do not corresponding to the type or characteristic of channel information reported in the CSI report described above.

[Table 13]

| μ | $Z_1$ [symbols] | |
|---|---|---|
| | $Z_1$ | $Z_1'$ |
| 0 | 10 | 8 |
| 1 | 13 | 11 |
| 2 | 25 | 21 |
| 3 | 43 | 36 |

[Table 14]

| μ | $Z_1$ [symbols] | | $Z_2$ [symbols] | | $Z_3$ [symbols] | |
|---|---|---|---|---|---|---|
| | $Z_1$ | $Z_1'$ | $Z_2$ | $Z_2'$ | $Z_3$ | $Z_3'$ |
| 0 | 22 | 16 | 40 | 37 | 22 | $X_1$ |
| 1 | 33 | 30 | 72 | 69 | 33 | $X_2$ |
| 2 | 44 | 42 | 141 | 140 | $\min(44, X_3 + KB_1)$ | $X_3$ |
| 3 | 97 | 85 | 152 | 140 | $\min(97, X_4 + KB_2)$ | $X_4$ |

[CSI reference resource]

When indicating an aperiodic/semi-persistent/periodic CSI report to the UE, the base station may configure a CSI reference resource to determine the reference time and frequency regarding a channel to be reported in the CSI report. The frequency of the CSI reference resource may be carrier and subband information for measuring CSI, indicated in a CSI report configuration, and the carrier and subband information for measuring CSI may correspond to carrier and reportFreqConfiguration in CSI-ReportConfig (upper layer signaling), respectively. The time of the CSI reference resource may be defined with reference to the time at which the CSI report is transmitted. For example, in case that CSI report #X is indicated to be transmitted in uplink slot n' of the carrier and BWP in which the CSI report is to be transmitted, the time of the CSI reference resource of CSI report #X may be defined as a downlink slot n-nCSI-ref of the carrier and BWP in which CSI is measured. Downlink slot $n$ may be calculated as $n = \left\lfloor n' \cdot 2^{\mu_{DL}} / 2^{\mu_{UL}} \right\rfloor$ assuming that the numerology of the carrier and BWP in which CSI is measured is referred to as $\mu$DL, and the numerology of the carrier and BWP in which CSI report #X is transmitted is referred to as $\mu_{UL}$. In case that CSI report #X transmitted in uplink slot $n'$ is a semi-persistent or periodic CSI report, the slot interval (nCSI-ref) between downlink slot $n$ and the CSI reference signal may follow $n_{CSI-ref} = 4 \cdot 2^{\mu_{DL}}$ in case that a single CSI-RS/SSB resource is connected to the CSI report according to the number of CSI-RS/SSB resources for channel measurement, and may follow $n_{CSI-ref} = 5 \cdot 2^{\mu_{DL}}$ in case that multiple CSI-RS/SSB resources are connected to the CSI report. In case that CSI report #X transmitted in uplink slot n' is an aperiodic CSI report, $n_{CSI-ref} = \left\lfloor Z' / N_{symb}^{slot} \right\rfloor$ may be calculated in consideration of the CSI computation time Z' for channel measurement. The above-described $N_{symb}^{slot}$ is the number of symbols included in one slot, and in NR, $N_{symb}^{slot} = 14$ may be assumed.

In case that the base station indicates the UE to transmit a specific CSI report in uplink slot n' through upper layer signaling or DCI, the UE may report CSI by performing channel measurement or interference measurement with regard to CSI-RS resources, CSI-IM resources, or SSB resources transmitted not later than the CSI reference resource slot of the CSI report transmitted in uplink slot n', among CSI-RS resources, CSI-IM resources, or SSB resources associated with the corresponding CSI report. The CSI-RS resources, CSI-IM resources, or SSB resources associated with the corresponding CSI report may be CSI-RS resources, CSI-IM resources, or SSB resources included in a resource set configured in a resource setting referenced by the report setting for the UE's CSI report configured through upper layer, or may refer to CSI-RS resources, CSI-IM resources, or SSB resources referenced by a CSI report trigger state including parameters for the CSI report, or CSI-RS resources, CSI-IM resources, or SSB resources indicated by the ID of the reference signal (RS) set..

In embodiments of the disclosure, a CSI-RS/CSI-IM/SSB occasion may refer to a transmission timepoint of CSI-RS/CSI-IM/SSB resource(s) determined by upper layer configurations or a combination of upper layer configurations and DCI triggering. For example, a semi-persistent or periodic CSI-RS resource may be configured such that the transmission slot is determined according to the slot periodicity and slot offset configured by upper layer signaling, and the transmission symbol(s) inside the slot may be determined according to resource mapping information (resourceMapping). As another example, an aperiodic CSI-RS resource may be configured such that the transmission slot is determined according to the slot offset from a PDCCH including DCI indicating a channel report configured by upper layer signaling, and transmission symbol (s) in the slot may be determined according to resource mapping information (resourceMapping).

The CSI-RS occasion described above may be determined by considering the transmission timepoint of each CSI-RS resource independently, or by considering the transmission timepoint of one or more CSI-RS resources included in a resource set in a comprehensive manner, and accordingly, the following two interpretations may be possible with regard to a CSI-RS occasion based on each resource set configuration.

- Interpretation 1-1: From the starting timepoint of the earliest symbol used to transmit a specific resource among one or more CSI-RS resources included in resource set(s) configured in the resource setting referenced by the report setting configured for the CSI report, to the ending timepoint of the latest symbol.
- Interpretation 1-2: from the starting timepoint of the earliest symbol used to transmit a CSI-RS resource that is transmitted at the earliest timepoint among all CSI-RS resources included in resource set(s) configured in the resource setting referred to by the report setting configured for the CSI report, to the ending timepoint of the latest symbol used to transmit a CSI-RS resource that is transmitted at the latest timepoint.

In the following embodiments of the disclosure, both interpretations regarding the CSI-RS occasion may be considered and applied individually. In addition, although it is possible to consider the two interpretations with regard to the CSI-IM occasion and SSB occasion, as in the CSI-RS occasion, the principle is similar to the above description, and repeated descriptions thereof will accordingly be omitted hereinafter.

In embodiments of the disclosure, a "CSI-RS/CSI-IM/SSB occasion for CSI report #X transmitted in uplink slot n" may refer to a set of at least one of a CSI-RS occasion, a CSI-IM occasion, or an SSB occasion which is not later than the CSI reference resource of CSI report #X transmitted in uplink slot n' among CSI-RS occasions, CSI-IM occasions, and SSB occasions of CSI-RS resources, CSI-IM resources, and SSB resources included in a resource set configured in a resource setting referenced by a report setting configured for CSI report #X.

In embodiments of the disclosure, "the latest CSI-RS/CSI-IM/SSB occasion among CSI-RS/CSI-IM/SSB occasions for CSI report #X transmitted in uplink slot n" may be interpreted in two ways as follows.

- Interpretation 2-1: A set of occasions including the latest CSI-RS occasion among CSI-RS occasions for CSI report #X transmitted in uplink slot n', the latest CSI-IM occasion among CSI-IM occasions for CSI report #X to be transmitted in uplink slot n', and the latest SSB occasion among SSB occasions for CSI report #0 to be transmitted in uplink slot n'.
- Interpretation 2-2: the latest occasion among all CSI-RS occasions, CSI-IM occasions, and SSB occasions for CSI report #X transmitted in uplink slot n'.

In the following embodiments of the disclosure, two interpretations of the "latest CSI-RS/CSI-IM/SSB occasion among CSI-RS/CSI-IM/SSB occasions for CSI report #X transmitted in uplink slot n'" may be considered and applied separately. In addition, when the two interpretations (interpretation 1-1 and interpretation 1-2) described above regarding CSI-RS occasions, CSI-IM occasions, and SSB occasions are considered, the "latest CSI-RS/CSI-IM/SSB occasion among CSI-RS/CSI-IM/SSB occasions for CSI report #X transmitted in uplink slot n'" in the embodiments of the disclosure may be applied individually in consideration of all four different interpretations (e.g., applying interpretation 1-1 and interpretation 2-1, applying interpretation 1-1 and interpretation 2-2, applying interpretation 1-2 and interpretation 2-1, and applying interpretation 1-2 and interpretation 2-2).

The base station may indicate a CSI report in consideration of the amount of channel information that the UE can simultaneously calculate for the CSI report (for example, the number of CSI processing units (CPUs) of the UE). Assuming that the number of channel information calculation units that the UE can calculate simultaneously is $N_{CPU}$, the UE may not expect a CSI report indication from the base station that requires more channel information calculations than $N_{CPU}$, or may not consider the update of channel information that requires more channel information calculations $N_{CPU}$. The $N_{CPU}$ may be reported to the base station by the UE through upper layer signaling or configured by the base station through upper layer signaling.

The CSI report indicated by the base station to the UE may be assumed to occupy part or all of the CPUs for channel information calculation, among the total number $N_{CPU}$ of channel information that the UE can calculate simultaneously. Assuming that, with regard to each CSI report, the number of channel information calculation units required for a CSI report n (n = 0, 1, ... , N - 1), for example, is $O_{CPU}^{(n)}$, the number of channel information calculation units required for the total N CSI reports may be $\sum_{n=0}^{N-1} O_{CPU}^{(n)}$. The channel information calculation unit required for each reportQuantity configured in a CSI report may be configured as in Table 15.

[Table 15]

| |
|---|
| - $O_{CPU}^{(n)} = 0$ : in case that reportQuantity is configured in a CSI report as "none", and trs-Info is configured in a CSI-RS resource set connected to the CSI report |
| - $O_{CPU}^{(n)} = 1$ : in case that reportQuantity is configured in a CSI report as "none", "cri-RSRP", "ssb-Index-RSRP", and trs-Info is not configured in a CSI-RS resource set connected to the CSI report |
| - in case that reportQuantity is configured in a CSI report as "cri-RI-PMI-CQI", "cri-RI-i1", "cri-RI-i1-CQI", "cri-RI-CQI", or "cri-RI-LI-PMI-CQI" |
| >> $O_{CPU}^{(n)} = N_{CPU}$ : in case that an aperiodic CSI report is triggered, and the CSI report is not multiplexed with one or all of TB / HARQ-ACK. In case that the CSI report is a wideband CSI, corresponds to a maximum of 4 CSI-RS ports, corresponds to a single resource having no CRI report, and codebookType corresponds to "typel-Single-Panel" or reportQuantity corresponds to "cri-RI-CQI" |
| (corresponding cases may be regarded as corresponding to above-described delay requirement 1, wherein the UE quickly calculates CSI by using all available CPUs and reports the same) |
| >> $O_{CPU}^{(n)} = K_s$ : remaining cases other than above cases. $K_s$ indicates the number of CSI-RS resources in the CSI-RS resource set for channel measurement |

In case that the number of channel information calculations required by the UE for multiple CSI reports at a particular timepoint is greater than the number $N_{CPU}$ of channel information calculation units that the UE can calculate simultaneously, the UE may not consider updating channel information for some CSI reports. Among the multiple indicated CSI reports, CSI reports regarding which channel information update is not considered may be determined by considering at least the time during which channel information calculation required for the CSI reports occupies CPUs and the priority of reported channel information. For example, in connection with calculating channel information required for CSI reports, channel information update may not be considered regarding CSI reports having the CPU occupancy time started at the latest timepoint, and channel information update may not be considered preferentially regarding CSI reports having low channel information priority.

The channel information priority may be determined with reference to Table 16.

[Table 16]

| |
|---|
| CSI priority value $Pri_{iCSI}$ (y, k, c, s) = $2 \cdot N_{cells} \cdot M_s \cdot y + N_{cells} \cdot M_s \cdot k + M_s \cdot c + s$, |
| - in the case of an aperiodic CSI report transmitted through y = 0 PUSCH, in the case of a semi-persistent CSI report transmitted through y = 1 PUSCH, in the case of a semi-persistent CSI report transmitted through y = 2 PUCCH, in the case of a periodic CSI report transmitted through y = 3 PUCCH; |
| - in case that k = 0 CSI report includes L1-RSRP, in case that k = 1 CSI report does not include L1-RSRP; |
| - c : serving cell index, $N_{cells}$ : the maximum number of serving cells configured by upper layer signaling (maxNrof-ServingCells); |

(continued)

| - s : CSI report configuration index (reportConfigID), $M_s$ : the maximum number of CSI report configurations configured by upper layer signaling (maxNrofCSI-ReportConfigurations). |
|---|

The CSI priority regarding CSI reports may be determined through the priority value $\text{Pri}_{iCSI}$ (y, k, c, s) in Table 16. Referring to Table 16, the CSI priority value may be determined by at least one of the type of channel information included in a CSI report, time domain reporting characteristics (aperiodic, semi-persistent, periodic) of the CSI report, the channel (PUSCH, PUCCH) in which the CSI report is transmitted, the serving cell index, or the CSI report configuration index. The CSI priority regarding CSI reports may be determined such that, by comparing the priority value $\text{Pri}_{iCSI}$ (y, k, c, s), CSI reports having small priority values have higher priorities.

Assuming that the time of occupancy of CPUs for calculate channel information necessary for the CSI report indicated to the UE by the base station is CPU occupation time, the CPU occupation time may be determined by considering at least one of the type (report quantity) of channel information included in the CSI report, the time axis characteristics (aperiodic, semi-persistent, periodic) of the CSI report, slots or symbols occupied by upper layer signaling or DCI indicating the CSI report, or part or all of slots or symbols occupied by reference signals for channel state measurement.

[PDCCH: regarding DCI]

Next, downlink control information (DCI) in a 5G communication system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 17 below, for example.

[Table 17]

| - Identifier for DCI formats - [1] bit<br><br>- Frequency domain resource assignment- $\left\lceil \log_2 (N_{\text{RB}}^{\text{UL,BWP}} (N_{\text{RB}}^{\text{UL,BWP}} + 1)/2) \right\rceil$ bits<br><br>- Time domain resource assignment - X bits<br>- Frequency hopping flag - 1 bit.<br>- Modulation and coding scheme - 5 bits<br>- New data indicator - 1 bit<br>- Redundancy version - 2 bits<br>- HARQ process number - 4 bits<br>- Transmit power control (TPC) command for scheduled PUSCH - [2] bits<br>- Uplink/ supplementary uplink (UL/SUL) indicator - 0 or 1 bit |
|---|

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 18 below, for example.

[Table 18]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

\* For resource allocation type 0, $\lceil N_{\mathrm{RB}}^{\mathrm{UL,BWP}}/P \rceil$ bits

\* For resource allocation type 1, $\lceil \log_2(N_{\mathrm{RB}}^{\mathrm{UL,BWP}}(N_{\mathrm{RB}}^{\mathrm{UL,BWP}}+1)/2) \rceil$ bits

- Time domain resource assignment -1, 2, 3, or 4 bits
- Virtual resource block (VRB)-to-physical resource block (PRB) mapping - 0 or 1 bit, only for resource allocation type 1.
\* 0 bit if only resource allocation type 0 is configured;
\* 1 bit otherwise.
- Frequency hopping flag - 0 or 1 bit, only for resource allocation type 1.
\* 0 bit if only resource allocation type 0 is configured;
\* 1 bit otherwise.
- Modulation and coding scheme - 5 bits
- New data indicator - 1 bit
- Redundancy version - 2 bits
- HARQ process number - 4 bits
- 1st downlink assignment index- 1 or 2 bits
\* 1 bit for semi-static HARQ-ACK codebook;
\* 2 bits for dynamic HARQ-ACK codebook with single HARQ-ACK codebook.
- 2nd downlink assignment index - 0 or 2 bits
\* 2 bits for dynamic HARQ-ACK codebook with two HARQ-ACK sub-codebooks;
\* 0 bit otherwise.
- TPC command for scheduled PUSCH - 2 bits

- SRS resource indicator - $\left\lceil \log_2\left(\sum_{k=1}^{L_{\max}}\binom{N_{\mathrm{SRS}}}{k}\right)\right\rceil$ or $\lceil \log_2(N_{\mathrm{SRS}})\rceil$ bits

\* $\left\lceil \log_2\left(\sum_{k=1}^{L_{\max}}\binom{N_{\mathrm{SRS}}}{k}\right)\right\rceil$ bits for non-codebook based PUSCH transmission;

\* $\lceil \log_2(N_{\mathrm{SRS}})\rceil$ bits for codebook based PUSCH transmission.
- Precoding information and number of layers - up to 6 bits
- Antenna ports - up to 5 bits
- SRS request - 2 bits
- Channel state information (CSI) request - 0, 1, 2, 3, 4, 5, or 6 bits
- Code block group (CBG) transmission information - 0, 2, 4, 6, or 8 bits
- Phase tracking reference signal (PTRS)-demodulation reference signal (DMRS) association - 0 or 2 bits.
- beta_offset indicator - 0 or 2 bits
- DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 19 below, for example.

[Table 19]

- Identifier for DCI formats - [1] bit

- Frequency domain resource assignment - $\left\lceil \log_2 (N_{RB}^{DL,BWP} (N_{RB}^{DL,BWP} + 1)/2) \right\rceil$ bits

- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 20 below, for example.

[Table 20]

- Carrier indicator - 0 or 3 bits
- Identifier for DCI formats - [1] bits
- Bandwidth part indicator - 0, 1 or 2 bits
- Frequency domain resource assignment

* For resource allocation type 0, $\left\lceil N_{RB}^{DL,BWP} / P \right\rceil$ bits

* For resource allocation type 1, $\left\lceil \log_2 (N_{RB}^{DL,BWP} (N_{RB}^{DL,BWP} + 1)/2) \right\rceil$ bits

- Time domain resource assignment -1, 2, 3, or 4 bits
- VRB-to-PRB mapping - 0 or 1 bit, only for resource allocation type 1.
* 0 bit if only resource allocation type 0 is configured;
* 1 bit otherwise.
- Physical resource block (PRB) bundling size indicator - 0 or 1 bit
- Rate matching indicator - 0, 1, or 2 bits
- Zero power (ZP) channel state information (CSI)-reference signal (RS) trigger - 0, 1, or 2 bits
For transport block 1:
- Modulation and coding scheme - 5 bits
- New data indicator - 1 bit
- Redundancy version - 2 bits
For transport block 2:
- Modulation and coding scheme - 5 bits
- New data indicator - 1 bit
- Redundancy version - 2 bits
- HARQ process number - 4 bits
- Downlink assignment index - 0 or 2 or 4 bits
- TPC command for scheduled PUCCH - 2 bits
- PUCCH resource indicator - 3 bits
- PDSCH-to-HARQ_feedback timing indicator - 3 bits
- Antenna ports - 4, 5 or 6 bits
- Transmission configuration indication - 0 or 3 bits
- SRS request - 2 bits
- CBG transmission information - 0, 2, 4, 6, or 8 bits

(continued)

| |
|---|
| - CBG flushing out information - 0 or 1 bit<br>- DMRS sequence initialization - 1 bit |

[PDCCH: CORESET, REG, CCE, and Search Space]

Hereinafter, a downlink control channel in a 5G communication system will be described in more detail with reference to the accompanying drawings.

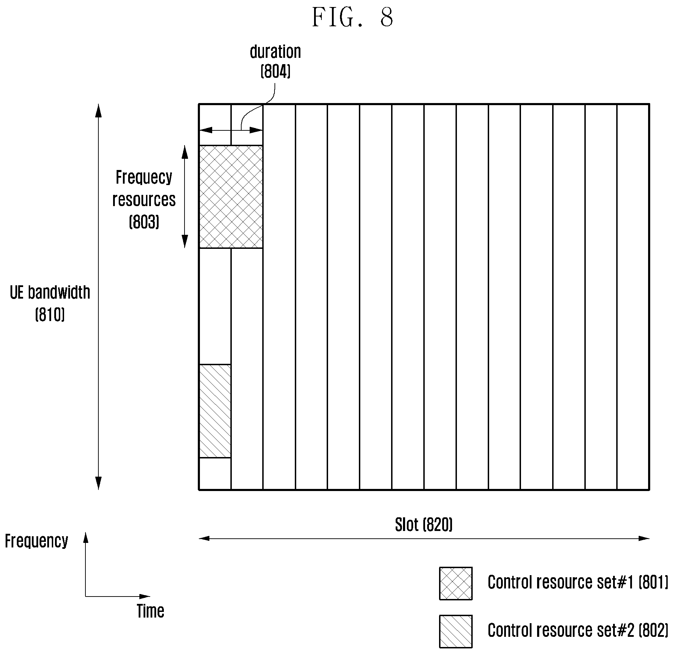

FIG. 8 illustrates an example of a control resource set (CORESET) used to transmit a downlink control channel in a 5G wireless communication system. FIG. 8 illustrates an example in which a UE bandwidth part 810 is configured along the frequency axis, and two control resource sets (control resource set #1 801 and control resource set #2 802) are configured within one slot 820 along the time axis. The control resource sets 801 and 802 may be configured in a specific frequency resource 803 within the entire UE bandwidth part 810 along the frequency axis. The control resource sets 801 and 802 may be each configured as one or multiple OFDM symbols along the time domain, and the number of the OFDM symbols may be defined as a control resource set duration 804. Referring to the example illustrated in FIG. 8, control resource set #1 801 is configured to have a control resource set duration corresponding to two symbols, and control resource set #2 802 is configured to have a control resource set duration corresponding to one symbol.

A control resource set in 5G described above may be configured for a UE by a base station through upper layer signaling (for example, system information, master information block (MIB), radio resource control (RRC) signaling). The description that a control resource set is configured for a UE means that information such as a control resource set identity, the control resource set's frequency location, and the control resource set's symbol duration is provided. For example, this information may include the following pieces of information given in Table 21 below.

[Table 21]

```
ControlResourceSet ::=                     SEQUENCE {
      -- Corresponds to L1 parameter 'CORESET-ID'


      controlResourceSetId          ControlResourceSetId,
(control resource set identity))
      frequencyDomainResources      BIT STRING (SIZE (45)),
(frequency domain resource assignment information)
      duration                      INTEGER
(1..maxCoReSetDuration),
   (time domain resource assignment information )
      cce-REG-MappingType                  CHOICE {
(CCE-to-REG mapping scheme)
      interleaved                   SEQUENCE {


      reg-BundleSize                ENUMERATED {n2, n3, n6},
      (REG bundle size)


      precoderGranularity           ENUMERATED    {sameAsREG-
bundle, allContiguousRBs},


      interleaverSize               ENUMERATED {n2, n3, n6}
      (interleaver size)


      shiftIndex          INTEGER(0..maxNrofPhysicalResourceBlocks-
1)        OPTIONAL
```

```
        (interleaver shift)

        },

        nonInterleaved              NULL

        },

        tci-StatesPDCCH             SEQUENCE(SIZE
(1..maxNrofTCI-StatesPDCCH)) OF TCI-StateId
                OPTIONAL,
    (QCL configuration information)
        tci-PresentInDCI            ENUMERATED {enabled}
                                    OPTIONAL,    -- Need S
        }
```

In Table 21, tci-StatesPDCCH(simply referred to as transmission configuration indication (TCI) state)configuration information may include information of one or multiple SS/PBCH block indexes or channel state information reference signal (CSI-RS) indexes, which are quasi-co-located (QCLed) with a DMRS transmitted in a corresponding CORESET.

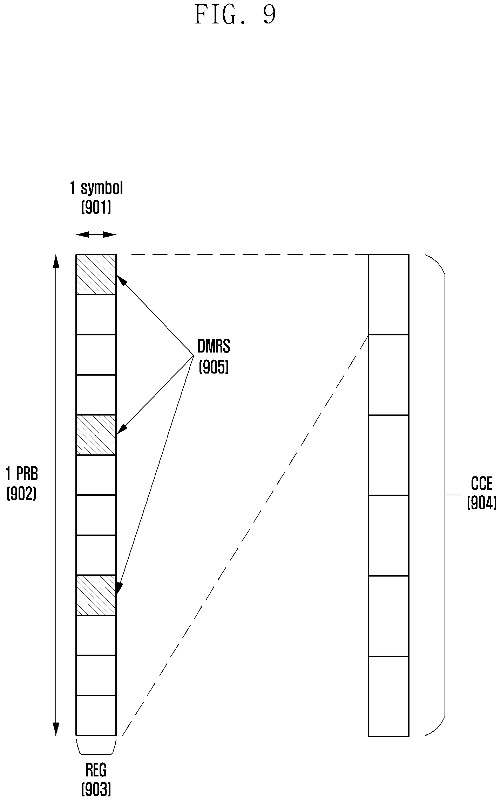

FIG. 9 illustrates an example of a basic unit of time and frequency resources constituting a downlink control channel available in 5G. According to FIG. 9, the basic unit of time and frequency resources constituting a control channel may be referred to as a resource element group (REG) 903, and the REG 903 may be defined by one OFDM symbol 901 along the time axis and one physical resource block (PRB) 902, that is, 12 subcarriers, along the frequency axis. The base station may configure a downlink control channel allocation unit by concatenating the REGs 903.

Provided that the basic unit of downlink control channel allocation in 5G is a control channel element (CCE) 904 as illustrated in FIG. 9, one CCE 004 may include multiple REGs 903. To describe the REG 903 illustrated in FIG. 9, for example, the REG 903 may include 12 REs, and if one CCE 904 includes six REGs 903, one CCE 904 may then include 72 REs. A downlink control resource set, once configured, may include multiple CCEs 904, and a specific downlink control channel may be mapped to one or multiple CCEs 904 and then transmitted according to the aggregation level (AL) in the control resource set. The CCEs 904 in the control resource set are distinguished by numbers, and the numbers of CCEs 904 may be allocated according to a logical mapping scheme.

The basic unit of the downlink control channel illustrated in FIG. 9, that is, the REG 903, may include both REs to which DCI is mapped, and an area to which a reference signal (DMRS 905) for decoding the same is mapped. As in FIG. 9, three DRMSs 905 may be transmitted inside one REG 903. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs has been defined for blind decoding. The search space is a set of downlink control channel candidates including CCEs which the UE needs to attempt to decode at a given AL, and since 1, 2, 4, 8, or 16 CCEs may constitute a bundle at various ALs, the UE may have multiple search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In 5G, parameters for a search space regarding a PDCCH may be configured for the UE by the base station through upper layer signaling (for example, SIB, MIB, or RRC signaling). For example, the base station may provide the UE with configurations such as the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, a control resource set index for monitoring the search space, and the like. For example, this information may include the following pieces of information: given in Table 22 below.

[Table 22]

```
SearchSpace ::=                    SEQUENCE {
      -- Identity of the search space. SearchSpaceId = 0 identifies the
SearchSpace configured via PBCH (MIB) or ServingCellConfigCommon.
      searchSpaceId              SearchSpaceId,
   (search space identity)
      controlResourceSetId       ControlResourceSetId,
   (control resource set identity)
      monitoringSlotPeriodicityAndOffset       CHOICE {
```

```
(monitoring slot level periodicity)
            sl1                          NULL,
            sl2                          INTEGER (0..1),
            sl4                          INTEGER (0..3),
            sl5                      INTEGER (0..4),
            sl8                      INTEGER (0..7),
            sl10                     INTEGER (0..9),
            sl16                     INTEGER (0..15),
            sl20                     INTEGER (0..19)

        }


                    OPTIONAL,
    duration(monitoring duration)       INTEGER (2..2559)
        monitoringSymbolsWithinSlot     BIT  STRING  (SIZE  (14))
                    OPTIONAL,
    (monitoring symbols within slot)
        nrofCandidates          SEQUENCE {
    (number of PDCCH candidates for each aggregation level)
        aggregationLevel1           ENUMERATED  {n0,  n1,  n2,  n3,
n4, n5, n6, n8},
        aggregationLevel2           ENUMERATED  {n0,  n1,  n2,  n3,
n4, n5, n6, n8},
        aggregationLevel4           ENUMERATED  {n0,  n1,  n2,  n3,
n4, n5, n6, n8},
        aggregationLevel8           ENUMERATED  {n0,  n1,  n2,  n3,
n4, n5, n6, n8},
        aggregationLevel16          ENUMERATED  {n0,  n1,  n2,  n3,
n4, n5, n6, n8}
        },
```

```
        searchSpaceType              CHOICE {
        (search space type)
        -- Configures this search space as common search space (CSS) and
DCI formats to monitor.
              common                 SEQUENCE {
        (common search space)
        }
              ue-Specific            SEQUENCE {
        (UE-specific search space)
        -- Indicates whether the UE monitors in this USS for DCI formats 0-
0 and 1-0 or for formats 0-1 and 1-1.
              formats                ENUMERATED {formats0-0-And-
1-0, formats0-1-And-1-1},
              ...
        }
```

According to configuration information, the base station may configure one or multiple search space sets for the UE. According to some embodiments, the base station may configure search space set 1 and search space set 2 for the UE, may configure DCI format A scrambled by an X-RNTI to be monitored in a common search space in search space set 1, and may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Obviously, the examples given below are not limiting.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Obviously, the examples given below are not limiting.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

Cell RNTI (C-RNTI): used to schedule a UE-specific PDSCH

Temporary cell RNTI (TC-RNTI): used to schedule a UE-specific PDSCH

Configured scheduling RNTI (CS-RNTI): used to schedule a semi-statically configured UE-specific PDSCH

Random access RNTI (RA-RNTI): used to schedule a PDSCH in a random access step

Paging RNTI (P-RNTI): used to schedule a PDSCH in which paging is transmitted

System information RNTI (SI-RNTI): used to schedule a PDSCH in which system information is transmitted

Interruption RNTI (INT-RNTI): used to indicate whether a PDSCH is punctured

Transmit power control for PUSCH RNTI (TPC-PUSCH-RNTI): used to indicate a power control command regarding a PUSCH

Transmit power control for PUCCH RNTI (TPC-PUCCH-RNTI): used to indicate a power control command regarding a PUCCH

Transmit power control for SRS RNTI (TPC-SRS-RNTI): used to indicate a power control command regarding an SRS

The DCI formats enumerated above may follow the definitions given in Table 23 below.

[Table 23]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In 5G, the search space at aggregation level L in connection with control resource set p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) \bmod \left\lfloor \frac{N_{CCE,p}}{L} \right\rfloor \right\} + i$$

- L: aggregation level
- $n_{CI}$: carrier index
- $N_{CCE,p}$: total number of CCEs existing in control resource set *p*
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} -1$ : PDCCH candidate index at aggregation level L
- i = 0, ..., L -1
-

$$Y_{p,n_{s,f}^{\mu}} = \left( A_p \cdot Y_{p,n_{s,f}^{\mu}-1} \right) \bmod D ,$$

$Y_{p,-1} = n_{RNTI} \neq 0$, $A_p$ = 39827 *for pmod*3 = 0 , $A_p$ = 39829 *for pmod*3 = 1 , $A_p$ = 39839 *for pmod*3 = 2, *D* = 65537

- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 22), and the group of search space sets monitored by the UE at each time point may differ accordingly. For example, if search space set #1 is configured at X-slot periodicity, if search space set #2 is configured at Y-slot periodicity, and if X and Y are different, the UE may monitor search space set #1 and search space set #2 both in a specific slot, and may monitor one of search space set #1 and search space set #2 both in another specific slot.

[PDSCH/PUSCH: regarding frequency resource allocation]

Next, frequency domain resource assignment (FDRA) for a physical downlink shared channel (PDSCH) and a physical uplink shared channel (PUSCH) in NR will be described.

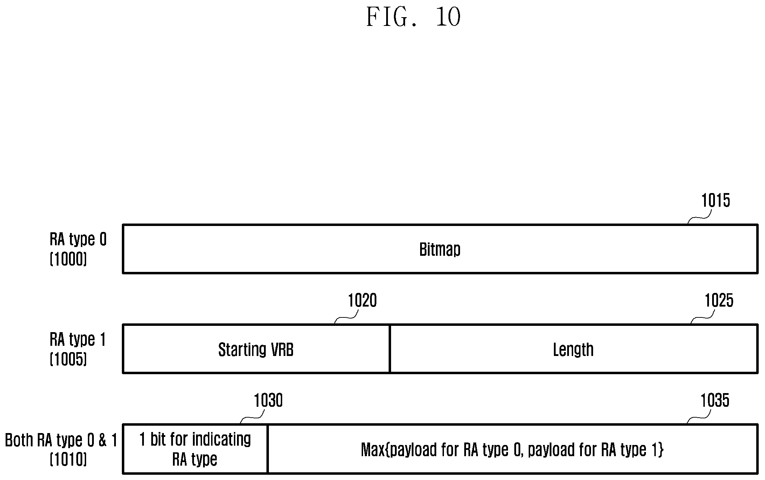

FIG. 10 illustrates an example of frequency domain resource allocation with regard to a PDSCH or PUSCH in a wireless communication system according to an embodiment of the disclosure.

FIG. 10 illustrates three frequency domain resource allocation methods of FDRA type 0 1000, FDRA type 1 1005, and dynamic switch 1010, which are configurable through a higher layer in an NR wireless communication system.

Referring to FIG. 10, in case that a UE is configured to use only FDRA type 0 through higher-layer signaling (1000), partial downlink control information (DCI) for scheduling a PDSCH or a PUSCH for the UE includes a bitmap configured by $N_{RBG}$ bits. The conditions for this will be described again later. As used herein, $N_{RBG}$ refers to the number of resource block groups (RBGs) determined according to the size of the bandwidth part indicated by the bandwidth part indicator and higher layer parameter rbg-Size, as in Table 24 below, and data is transmitted in the RBG marked as 1 by the bitmap.

[Table 24]

| Bandwidth Part Size | Configuration 1 | Configuration 2 |
|---|---|---|
| 1 – 36 | 2 | 4 |
| 37 – 72 | 4 | 8 |
| 73 – 144 | 8 | 16 |
| 145 – 275 | 16 | 16 |

The size of the frequency resource of a bandwidth part may be defined as the number of RBs that the bandwidth part includes. More specifically, in case that FDRA type-0 resource allocation is indicated to a UE, the length of the FDRA field of the DCI received by the UE is equal to the number of RBGs ($N_{RBG}$) within the bandwidth part, and $N_{RBG}$ = $\left\lceil (N_{BWP}^{size} + (N_{BWP}^{start} \bmod P))/P \right\rceil$ . The first RBG in the bandwidth part includes as many RBs as $RBG_0^{size} = P - N_{BWP}^{size} \bmod P$ , and the last RBG in the bandwidth part includes as many RBs as $RBG_{last}^{size} = \left(N_{BWP}^{start} + N_{BWP}^{size}\right) \bmod P$ if $\left(N_{BWP}^{start} + N_{BWP}^{size}\right) \bmod P > 0$ , and includes as many RBs as $RBG_{last}^{size} = P$ otherwise. The other RBGs within the bandwidth part include P RBs. Here, P is the number of nominal RBGs determined according to Table 24 above.

In case that the UE is configured to use only FDRA type 1 through higher-layer signaling (1005), the DCI for allocating a PDSCH or a PUSCH to the UE includes frequency domain resource allocation (FDRA) information configured by as many bits as $\left\lceil \log_2(N_{RB}^{BWP} * (N_{RB}^{BWP} + 1)/2 \right\rceil$ . Here, $N_{RB}^{BWP}$ refers to the number of RBs included in the bandwidth part. The base station may thereby configure a starting VRB 1020 and the length 1025 of a frequency domain resource allocated consecutively therefrom.

In case that the UE is configured to use both FDRA type-0 resource allocation and FDRA type-1 resource allocation through higher layer signaling (1010), partial DCI for allocating a PDSCH/PUSCH to the corresponding UE includes frequency domain resource allocation information including as many bits as the larger value 1035 among the payload 1015 for configuring FDRA type-0 resource allocation and the payload 1020 and 1025 for configuring FDRA type-1 resource allocation. The conditions for this will be described again later. In this case, one bit may be added to the foremost part (MSB) of the frequency domain resource assignment information in the DCI, and the corresponding bit having a value of '0' indicates that FDRA type-0 resource allocation is to be used, and a value of '1' indicates that FDRA type-1 resource allocation is to be used.

In case that an FDRA type-2 resource allocation method is configured for the UE through higher layer signaling, the FDRA type-2 resource allocation method may be indicated to the UE from the base station according to the following method.

The UE may receive indication of M interlace index sets as RB allocation information from the base station.

The interlace index $m \in \{0, 1, ..., M - 1\}$ may be configured by common RBs $\{m, M + m, 2M + m, 3M + m, ...\}$, and $M$ may be defined as in Table 25.

[Table 25]

| $\mu$ | $M$ |
|-------|-----|
| 0 | 10 |
| 1 | 5 |

The relationship of RB $n_{\text{IRB},m}^{\mu} \in \{0, 1, ...\}$ in interlace $m$ and bandwidth part i and the common RB $n_{\text{CRB}}^{\mu}$ may be defined as follows.

- 

$$n_{\text{CRB}}^{\mu} = M n_{\text{IRB},m}^{\mu} + N_{\text{BWP},i}^{\text{start},\mu} + \left( \left( m - N_{\text{BWP},i}^{\text{start},\mu} \right) \bmod M \right)$$

- where $N_{\text{BWP},i}^{\text{start},\mu}$ is the common resource block where bandwidth part starts relative to common

resource block 0. u is subcairre spacing index

If the subcarrier spacing is 15kHz ($\mu$=0), the base station may notify the UE of the RB allocation information for the interlace set with (m0 + l) indexes. In addition, the resource allocation field may be configured by a resource indication value (RIV). If the RIV is $0 \le RIV < M(M + 1)/2$, $l = 0, 1, \cdots L - 1$, the same may be configured by the starting interlace $m_0$ and the number $L(L \ge 1)$ of continuous interlaces, and the value is as follows.

$$\text{if } (L - 1) \le \lfloor M/2 \rfloor \text{ then}$$

$$RIV = M(L - 1) + m_0$$

$$\text{else}$$

$$RIV = M(M - L + 1) + (M - 1 - m_0)$$

If the RIV is $RIV \ge M(M + 1)/2$, the RIV is configured by the starting interlace index $m_0$ and $l$ values, and may be configured as in Table 26.

[Table 26]

| RIV - M(M + 1)/2 | m0 | l |
|------------------|-----|--------------------------|
| 0 | 0 | {0, 5} |
| 1 | 0 | {0, 1, 5, 6} |
| 2 | 1 | {0, 5} |
| 3 | 1 | {0, 1, 2, 3, 5, 6, 7, 8} |
| 4 | 2 | {0, 5} |

(continued)

| RIV - M(M + 1)/2 | m0 | l |
|---|---|---|
| 5 | 2 | {0, 1, 2, 5, 6, 7} |
| 6 | 3 | {0, 5} |
| 7 | 4 | {0, 5} |

If the subcarrier spacing is 30kHz ($\mu$=1), the base station may notify the UE of the RB allocation information in the form of a bitmap indicating the interlaces allocated to the UE. The size of the bitmap is M, and each 1 bit of the bitmap corresponds to an interlace. The order of the interlace bitmap may be mapped from interlace index 0 to M-1 (from MSB to LSB).

In addition, with regard to 15kHz and 30kHz, the least significant bit (LSB)

$$Y = \left\lceil log2 \frac{N_{RB-set}^{BWP}(N_{RB-set}^{BWP}+1)}{2} \right\rceil$$

of the FDRA field may refer to consecutive RB sets scheduled by DCI format 0_1.  The  Y  bit  may  be  configured  by  a  resource  indication  value  (RIV$_{RBset}$).  In

$$0 \leq RIV_{RBset} < N_{RB-set}^{BWP}(N_{RB-set}^{BWP}+1)/2 \ , \ l = 0,1,\cdots L_{RBset}-1$$  , the RIV$_{RBset}$ value may be determined by the starting RB set (RBset$_{START}$) and the number ($L_{RBset}(L_{RBset} \geq 1)$) of consecutive RB sets. The RIVRBset value may be defined as follows.

if $(L_{RBset}-1) \leq \lfloor N_{RB-set}^{BWP}/2 \rfloor$ then

$$RIV_{RBset} = N_{RB-set}^{BWP}(L_{RBset}-1) + RBset_{START}$$

else

$$RIV_{RBset} = N_{RB-set}^{BWP}(N_{RB-set}^{BWP} - L_{RBset} + 1) + (N_{RB-set}^{BWP} - 1 - RBset_{START})$$

$N_{RB-set}^{BWP}$ refers to the number of RB sets included in the bandwidth part, and may be determined by the number of guard gaps (or bands) within the carrier configured by higher-layer signaling (or preconfigured).

[PDSCH/PUSCH: regarding time resource allocation]

Hereinafter, a time domain resource allocation method regarding a data channel in a next-generation mobile communication system (5G or NR system) will be described.

A base station may configure a table for time domain resource allocation information regarding a physical downlink shared channel (PDSCH) and a physical uplink shared channel (PUSCH) for a UE through higher layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a time point at which a PDCCH is received and a time point at which a PDSCH scheduled by the received PDCCH is transmitted; labeled K0), PDCCH-to-PUSCH slot timing (for example, corresponding to a slot-unit time interval between a time point at which a PDCCH is received and a time point at which a PUSCH scheduled by the received PDCCH is transmitted; hereinafter labeled K2), information regarding the location and length of the start symbol by which a PDSCH or PUSCH is scheduled inside a slot, the mapping type of a PDSCH or PUSCH, and the like. For example, information such as in Table 27 or Table 28 below may be transmitted from the base station to the UE.

[Table 27]

| ***PDSCH-TimeDomainResourceAllocationList* information element** |
|---|
| PDSCH-TimeDomainResourceAllocationList ::= SEQUENCE (SIZE(1..maxNrofDL-Allocations)) OF PDSCH-TimeDomainResourceAllocation |
| PDSCH-TimeDomainResourceAllocation ::= SEQUENCE { |
| k0 INTEGER(0..32) |
| OPTIONAL, -- Need S |
| (PDCCH-to-PDSCH timing, slot unit) |
| mappingType ENUMERATED {typeA, typeB}, |
| (PDSCH mapping type) |

| startSymbolAndLength INTEGER (0..127) |
|---|
| (start symbol and length of PDSCH) |
| } |

[Table 28]

| *PUSCH-TimeDomainResourceAllocation information element* |
| --- |
| PUSCH-TimeDomainResourceAllocationList ::=          SEQUENCE (SIZE(1..maxNrofUL-Allocations))                     OF                    PUSCH-TimeDomainResourceAllocation |
| PUSCH-TimeDomainResourceAllocation ::=      SEQUENCE { |
|     k2                                                                                INTEGER(0..32) OPTIONAL,      -- Need S |
|     (PDCCH-to-PUSCH timing, slot unit) |
|     mappingType                                                        ENUMERATED {typeA, typeB}, |
|     (PUSCH mapping type) |
|     startSymbolAndLength                            INTEGER (0..127) |
|     (start symbol and length of PUSCH) |
|     } |

The base station may notify the UF of one of the entries of the table regarding time domain resource allocation information described above through L1 signaling (for example, DCI)(for example, "time domain resource allocation" field in DCI may indicate the same). The UE may acquire time domain resource allocation information regarding a PDSCH or PUSCH, based on the DCI acquired from the base station.

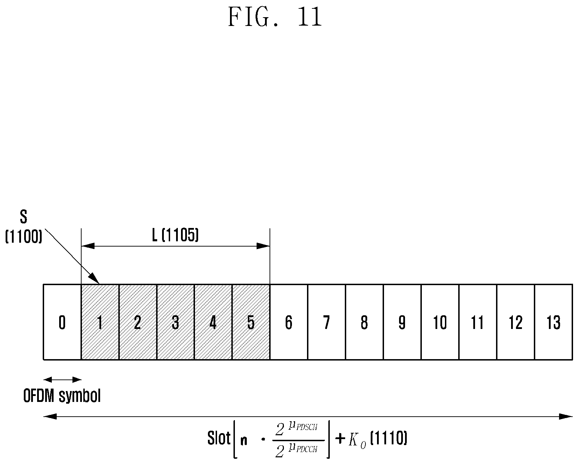

FIG. 11 illustrates an example of time domain resource allocation with regard to a PDSCH in a wireless communication system according to an embodiment of the disclosure.

Referring to FIG. 11, the base station may indicate the time domain location of a PDSCH resource according to the subcarrier spacing (SCS) ($\mu_{PDSCH}$, $\mu_{PDCCH}$) of a data channel and a control channel configured by using a higher layer, the scheduling offset (K0) value, and the OFDM symbol start location 1100 and length 1105 within one slot dynamically indicated through DCI.

[PUSCH: regarding transmission scheme]

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

Configured grant Type 1 PUSCH transmission may be configured semi-statically by receiving configuredGrant-Config including rrc-ConfiguredUplinkGrant in Table 29 through higher signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 29 through upper signaling. If PUSCH transmission is operated by a configured grant, parameters applied to the PUSCH transmission are applied through configuredGrantConfig (upper signaling) in Table 29 except for dataScramblingIdentityPUSCH, txConfig, codebookSubset, maxRank, and scaling of UCI-OnPUSCH, which are provided by pusch-Config (upper signaling) in Table 30. If provided with transformPrecoder inside configuredGrantConfig (higher signaling) in Table 29, the UE applies tp-pi2BPSK inside pusch-Config in Table 30 to PUSCH transmission operated by a configured grant.

[Table 29]

```
ConfiguredGrantConfig ::=            SEQUENCE {
    frequencyHopping                 ENUMERATED {intraSlot, interSlot}
OPTIONAL,    -- Need S,
    cg-DMRS-Configuration            DMRS-UplinkConfig,
    mcs-Table                        ENUMERATED {qam256, qam64LowSE}
OPTIONAL,    -- Need S
    mcs-TableTransformPrecoder       ENUMERATED {qam256, qam64LowSE}
OPTIONAL,    -- Need S
    uci-OnPUSCH                      SetupRelease { CG-UCI-OnPUSCH }
OPTIONAL,    -- Need M
    resourceAllocation               ENUMERATED { resourceAllocationType0,
resourceAllocationType1, dynamicSwitch },
    rbg-Size                         ENUMERATED {config2}
OPTIONAL,    -- Need S
    powerControlLoopToUse            ENUMERATED {n0, n1},
    p0-PUSCH-Alpha                   P0-PUSCH-AlphaSetId,
    transformPrecoder                ENUMERATED {enabled, disabled}
OPTIONAL,    -- Need S
    nrofHARQ-Processes               INTEGER(1..16),
    repK                             ENUMERATED {n1, n2, n4, n8},
    repK-RV                          ENUMERATED {s1-0231, s2-0303, s3-0000}
OPTIONAL,    -- Need R
    periodicity                      ENUMERATED {
                                     sym2, sym7, sym1x14, sym2x14, sym4x14,
sym5x14, sym8x14, sym10x14, sym16x14, sym20x14,
                                     sym32x14, sym40x14, sym64x14, sym80x14,
sym128x14, sym160x14, sym256x14, sym320x14, sym512x14,
                                     sym640x14, sym1024x14, sym1280x14,
sym2560x14, sym5120x14,
                                     sym6, sym1x12, sym2x12, sym4x12, sym5x12,
sym8x12, sym10x12, sym16x12, sym20x12, sym32x12,
                                     sym40x12, sym64x12, sym80x12, sym128x12,
sym160x12, sym256x12, sym320x12, sym512x12, sym640x12,
                                     sym1280x12, sym2560x12
    },
    configuredGrantTimer             INTEGER (1..64)
OPTIONAL,    -- Need R
    rrc-ConfiguredUplinkGrant        SEQUENCE {
        timeDomainOffset             INTEGER (0..5119),
        timeDomainAllocation         INTEGER  (0..15),
        frequencyDomainAllocation    BIT STRING (SIZE(18)),
        antennaPort                  INTEGER (0..31),
        dmrs-SeqInitialization       INTEGER (0..1)
OPTIONAL,    -- Need R
        precodingAndNumberOfLayers       INTEGER (0..63),
        srs-ResourceIndicator        INTEGER (0..15)
OPTIONAL,    -- Need R
        mcsAndTBS                        INTEGER (0..31),
        frequencyHoppingOffset       INTEGER (1.. maxNrofPhysicalResourceBlocks-1)
OPTIONAL,    -- Need R
        pathlossReferenceIndex           INTEGER (0..maxNrofPUSCH-
PathlossReferenceRSs-1),
        ...
    }
```

```
OPTIONAL,    -- Need R
    ...
}
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 30, which is higher signaling, is"codebook" or "nonCodebook".

As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 30, the UE does not expect scheduling through DCI format 0_1.

## [Table 30]

```
PUSCH-Config ::=                              SEQUENCE {
        dataScramblingIdentityPUSCH                  INTEGER (0..1023)
OPTIONAL,     -- Need S
        txConfig                                 ENUMERATED {codebook, nonCodebook}
OPTIONAL,     -- Need S
        dmrs-UplinkForPUSCH-MappingTypeA            SetupRelease { DMRS-UplinkConfig }
OPTIONAL,     -- Need M
        dmrs-UplinkForPUSCH-MappingTypeB            SetupRelease { DMRS-UplinkConfig }
OPTIONAL,     -- Need M

        pusch-PowerControl                       PUSCH-PowerControl
OPTIONAL,     -- Need M
        frequencyHopping                         ENUMERATED {intraSlot, interSlot}
OPTIONAL,     -- Need S
        frequencyHoppingOffsetLists              SEQUENCE (SIZE (1..4)) OF INTEGER (1..
maxNrofPhysicalResourceBlocks-1)

OPTIONAL,     -- Need M
        resourceAllocation                       ENUMERATED { resourceAllocationType0,
resourceAllocationType1, dynamicSwitch},
        pusch-TimeDomainAllocationList            SetupRelease { PUSCH-
TimeDomainResourceAllocationList }           OPTIONAL,    -- Need M
        pusch-AggregationFactor                  ENUMERATED { n2, n4, n8 }
OPTIONAL,     -- Need S
        mcs-Table                                ENUMERATED {qam256, qam64LowSE}
OPTIONAL,     -- Need S
        mcs-TableTransformPrecoder               ENUMERATED {qam256, qam64LowSE}
OPTIONAL,     -- Need S
        transformPrecoder                        ENUMERATED {enabled, disabled}
OPTIONAL,     -- Need S
        codebookSubset                           ENUMERATED {fullyAndPartialAndNonCoherent,
partialAndNonCoherent,nonCoherent}

OPTIONAL, -- Cond codebookBased
        maxRank                                  INTEGER (1..4)
OPTIONAL, -- Cond codebookBased
        rbg-Size                                 ENUMERATED { config2}
OPTIONAL, -- Need S
        uci-OnPUSCH                              SetupRelease { UCI-OnPUSCH}
OPTIONAL, -- Need M
        tp-pi2BPSK                               ENUMERATED {enabled}
OPTIONAL, -- Need S
        ...
}
```

Hereinafter, codebook-based PUSCH transmission will be described. The codebook-based PUSCH transmission may be dynamically scheduled through DCI format 0_0 or 0_1, and may be operated semi-statically by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

The SRI may be given through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. In addition, the TPMI and the transmission rank may be given through "precoding information and number of layers" (a field inside DCI) or configured through precodingAndNumberOfLayers (upper signaling). The TPMI is used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI is used to indicate a precoder to be applied in an SRS resource indicated through the SRI.

The precoder to be used for PUSCH transmission is selected from an uplink codebook having the same number of antenna ports as the value of nrofSRS-Ports inside SRS-Config (higher signaling). In connection with codebook-based PUSCH transmission, the UE determines a codebook subset, based on codebookSubset inside pusch-Config (higher signaling) and TPMI. The codebookSubset inside pusch-Config (higher signaling) may be configured to be one of "fullyAndPartialAndNonCoherent", "partialAndNonCoherent", or "nonCoherent", based on UE capability reported by the UE to the base station. If the UE reported "partialAndNonCoherent'" as UE capability, the UE does not expect that the value of codebookSubset (upper signaling) will be configured as "fullyAndPartialAndNonCoherent". In addition, if the UE reported "nonCoherent" as UE capability, UE does not expect that the value of codebookSubset (upper signaling) will be configured as "fullyAndPartialAndNonCoherent" or "partialAndNonCoherent". If nrofSRS-Ports inside SRS-ResourceSet (higher signaling) indicates two SRS antenna ports, the UE does not expect that the value of codebookSubset (higher signaling) will be configured as "partialAndNonCoherent".

The UE may have one SRS resource set configured therefor, wherein the value of usage inside SRS-ResourceSet (upper signaling) is "codebook", and one SRS resource may be indicated through an SRI inside the corresponding SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical for all SRS resources.

The UE transmits, to the base station, one or multiple SRS resources included in the SRS resource set wherein the value of usage is configured as "codebook" according to higher signaling, and the base station selects one from the SRS resources transmitted by the UE and indicates the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be operated semi-statically by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

With regard to the SRS resource set wherein the value of usage inside SRS-ResourceSet (higher signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (upper signaling) is "aperiodic", the connected NZP CSI-RS is indicated by an SRS request which is a field inside DCI format 0_1 or 1_1. If the connected NZP CSI-RS resource is an aperiodic NZP CSI-RS resource, the existence of the connected NZP CSI-RS is indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is located in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (upper signaling). With regard to non-codebook-based transmission, the UE does not expect that spatialRelationInfo which is upper signaling regarding the SRS resource and associatedCSI-RS inside SRS-ResourceSet (higher signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (higher signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (higher signaling) is "nonCodebook", and a maximum of four SRS resources may be configured for non-codebook-based PUSCH transmission.

The base station transmits one NZP-CSI-RS connected to the SRS resource set to the UE, and the UE calculates the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is"nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE transmits the PUSCH by applying the precoder applied to SRS resource transmission to each layer.

[PUSCH: preparation procedure time]

Next, a PUSCH preparation procedure time will be described. If a base station schedules a UE so as to transmit a PUSCH by using DCI format 0_0, 0_1, or 0_2, the UE may require a PUSCH preparation procedure time such that a PUSCH is transmitted by applying a transmission method (SRS resource transmission precoding method, the number of transmission layers, spatial domain transmission filter) indicated through DCI. The PUSCH preparation procedure time is defined in NR in consideration thereof. The PUSCH preparation procedure time of the UE may follow Equation 2 given below.

$$T_{proc,2} = \max(( N_2 + d_{2,1} + d_2)( 2048 + 144 ) \kappa 2^{-\mu} T_c + T_{ext} + T_{switch}, d_{2,2} ) \qquad \text{[Equation 2]}$$

Each parameter in $T_{proc,2}$ described above in Equation 2 may have the following meaning.

- $N_2$: the number of symbols determined according to UE processing capability 1 or 2, based on the UE's capability, and numerology $\mu$. $N_2$ may have a value in Table 31 if UE processing capability 1 is reported according to the UE's capability report, and may have a value in Table 32 if UE processing capability 2 is reported, and if availability of UE processing capability 2 is configured through higher layer signaling.

[Table 31]

| $\mu$ | PUSCH preparation time $N_2$ [symbols] |
|---|---|
| 0 | 10 |
| 1 | 12 |
| 2 | 23 |
| 3 | 36 |

[Table 32]

| $\mu$ | PUSCH preparation time $N_2$ [symbols] |
|---|---|
| 0 | 5 |
| 1 | 5.5 |
| 2 | 11 for frequency range 1 |

- $d_{2,1}$: the number of symbols determined to be 0 if all resource elements of the first OFDM symbol of PUSCH transmission include DMRSs, and to be 1 otherwise.
- $\kappa$: 64
- $\mu$: follows a value, among $\mu_{DL}$ and $\mu_{UL}$, which makes $T_{proc,2}$ larger. $\mu_{DL}$ refers to the numerology of a downlink used to transmit a PDCCH including DCI that schedules a PUSCH, and $\mu_{UL}$ refers to the numerology of an uplink used to transmit a PUSCH.
- $T_c$: has $1/(\Delta f_{max} \cdot N_f)$, $\Delta f_{max} = 480 \cdot 10^3 Hz$, $N_f = 4096$..
- $d_{2,2}$: follows a BWP switching time if DCI that schedules a PUSCH indicates BWP switching, and has 0 otherwise.

- $d_2$: if OFDM symbols overlap temporally between a PUSCH having a high priority index and a PUCCH having a low priority index, the $d_2$ value of the PUSCH having a high priority index is used. Otherwise, $d_2$ is 0.
- $T_{ext}$: if the UE uses a shared spectrum channel access scheme, the UE may calculate $T_{ext}$ and apply the same to a PUSCH preparation procedure time. Otherwise, $T_{ext}$ is assumed to be 0.
- $T_{switch}$: if an uplink switching spacing has been triggered, $T_{switch}$ is assumed to be the switching spacing time. Otherwise, $T_{switch}$ is assumed to be 0.

The base station and the UE determine that the PUSCH preparation procedure time is insufficient if the first symbol of a PUSCH starts earlier than the first uplink symbol in which a CP starts after $T_{proc,2}$ from the last symbol of a PDCCH including DCI that schedules the PUSCH, in view of the influence of timing advance between the uplink and the downlink and time domain resource mapping information of the PUSCH scheduled through the DCI. Otherwise, the base station and the UE determine that the PUSCH preparation procedure time is sufficient. The UE may transmit the PUSCH only if the PUSCH preparation procedure time is sufficient, and may ignore the DCI that schedules the PUSCH if the PUSCH preparation procedure time is insufficient.

[PUSCH: regarding repetition transmission]

Hereinafter, repetition transmission of an uplink data channel in a 5G system will be described in detail. A 5G system supports two types of uplink data channel repetition transmission methods, PUSCH repetition type A transmission and PUSCH repetition type B transmission. One of PUSCH repetition type A transmission and PUSCH repetition type B transmission may be configured for a UE through upper layer signaling.

1. PUSCH repetition type A transmission

- As described above, the symbol length of an uplink data channel and the location of the start symbol may be determined by a time domain resource allocation method in one slot, and a base station may notify a UE of the number of repetition transmissions through upper layer signaling (for example, RRC signaling) or L1 signaling (for example, DCI).
- Based on the number of repetition transmissions received from the base station, the UE may repetitively transmit an uplink data channel having the same length and start symbol as the configured uplink data channel, in a continuous slot. If the base station configured a slot as a downlink for the UE, or if at least one of symbols of the uplink data channel configured for the UE is configured as a downlink, the UE omits uplink data channel transmission, but counts the number of repetition transmissions of the uplink data channel. That is, although included in the number of repetition transmissions of the uplink data channel, the uplink data channel may not be transmitted. Contrarily, the UE supporting Rel-17 uplink data repetition transmission may determine a slot capable of uplink data repetition transmission as an available slot, and may count the number of transmissions during uplink data channel repetition transmission in the slot determined as an available slot. If uplink data channel repetition transmission is omitted in the slot determined as an available slot, the UE may postpone uplink data channel repetition transmission till a next available slot without counting the corresponding omitted repetition transmission and then transmit same.
- In order to determine an available slot as described above, if at least one symbol configured for a PUSCH by time domain resource allocation (TDRA) in a slot for PUSCH transmission overlaps a symbol for purposes other than uplink transmission (for example, downlink transmission), the corresponding slot is determined as an unavailable slot (for example, a slot other than an available slot, which is determined as being unavailable for PUSCH transmission). In addition, an available slot may be considered a resource for PUSCH transmission and an uplink resource for determining a transport block size (TBS) in PUSCH repetition transmission and multi-slot PUSCH transmission including one TB (TBoMS (transport block on multiple slots)).

2. PUSCH repetition type B transmission

- As described above, the symbol length of an uplink data channel and the location of the start symbol may be determined by a time domain resource allocation method in one slot, and a base station may notify a UE of the number of repetition transmissions (numberofrepetitions) through upper layer signaling (for example, RRC signaling) or L1 signaling (for example, DCI).
- The nominal repetition of the uplink data channel is determined as follows, based on the previously configured start symbol and length of the uplink data channel. The slot in which the nth nominal repetition starts is given by

$$K_s + \left\lfloor \frac{S + n \cdot L}{N_{symb}^{slot}} \right\rfloor$$, and the symbol starting in that slot is given by $mod\left(S + n \cdot L, N_{symb}^{slot}\right)$. The slot in which the $n^{th}$ nominal repetition ends is given by $K_s + \left\lfloor \frac{S+(n+1)\cdot L-1}{N_{symb}^{slot}} \right\rfloor$, and the symbol ending in that slot is given by $mod\left(S + (n+1)\cdot L - 1, N_{symb}^{slot}\right)$. In this regard, n=0,..., numberofrepetitions-1, S refers to the start symbol of the configured uplink data channel, and L refers to the symbol length of the configured uplink data channel. $K_s$ refers to the slot in which PUSCH transmission starts, and $N_{symb}^{slot}$ refers to the number of symbols per slot.

- For PUSCH repetition type B transmission, the UE may determine a specific OFDM symbol as an invalid symbol in the following cases.

  ○ A symbol configured as a downlink by tdd-UL-DL-ConfigurationCommon or tdd-UL-DL-ConfigurationDedicated may be determined as the invalid symbol for PUSCH repetition type B transmission.
  o In order to receive an SSB in an unpaired spectrum (TDD spectrum), symbols indicated by ssb-PositionInBurst within SIB1 or ssb-PositionInBurst within ServingCellConfigCommon (higher layer signaling) may be determined as invalid symbols for PUSCH repetition type B transmission.
  o In order to transmit a control resource set associated with a Type0-PDCCH CSS set in an unpaired spectrum (TDD spectrum), symbols indicated through by pdsch-ConfigSIB1 within an MIB may be determined as invalid symbols for PUSCH repetition type B transmission.
  ○ In an unpaired spectrum (TDD spectrum), if numberOfInvalidSymbolsForDL-UL-Switching (upper layer signaling) is configured, as many symbols as numberOfInvalidSymbolsForDL-UL-Switching from symbols configured as a downlink by tdd-UL-DL-ConfigurationCommon or tdd-UL-DL-ConfigurationDedicated may be determined as invalid symbols.

- Additionally, the invalid symbol may be configured in an upper layer parameter (for example, InvalidSymbolPattern). The upper layer parameter (for example, InvalidSymbolPattern) may provide a symbol level bitmap across one or two slots, thereby configuring the invalid symbol. In the bitmap, 1 represents the invalid symbol. Additionally, the periodicity and pattern of the bitmap may be configured through the upper layer parameter (for example, InvalidSymbolPattern). If a higher layer parameter (for example, InvalidSymbolPattern) is configured, and if parameter InvalidSymbolPatternIndicator-ForDCIFormat0_1 or InvalidSymbolPatternIndicator-ForDCIFormat0_2 indicates 1, the UE applies an invalid symbol pattern, and if the above parameter indicates 0, the UE does not apply the invalid symbol pattern. If an upper layer parameter (for example, InvalidSymbolPattern) is configured, and if parameter InvalidSymbolPatternIndicator-ForDCIFormat0_1 or InvalidSymbolPatternIndicator-ForDCIFormat0_2 is not configured, the UE applies the invalid symbol pattern.

After an invalid symbol is determined, the UE may consider, with regard to each nominal repetition, that symbols other than the invalid symbol are valid symbols. If one or more valid symbols are included in each nominal repetition, the nominal repetition may include one or more actual repetitions. Each actual repetition includes a set of consecutive valid symbols available for PUSCH repeated transmission type B in one slot. In the case where the OFDM symbol length of the nominal repetition is not 1, if the length of the actual repetition is 1, the UE may ignore transmission for the actual repetition.

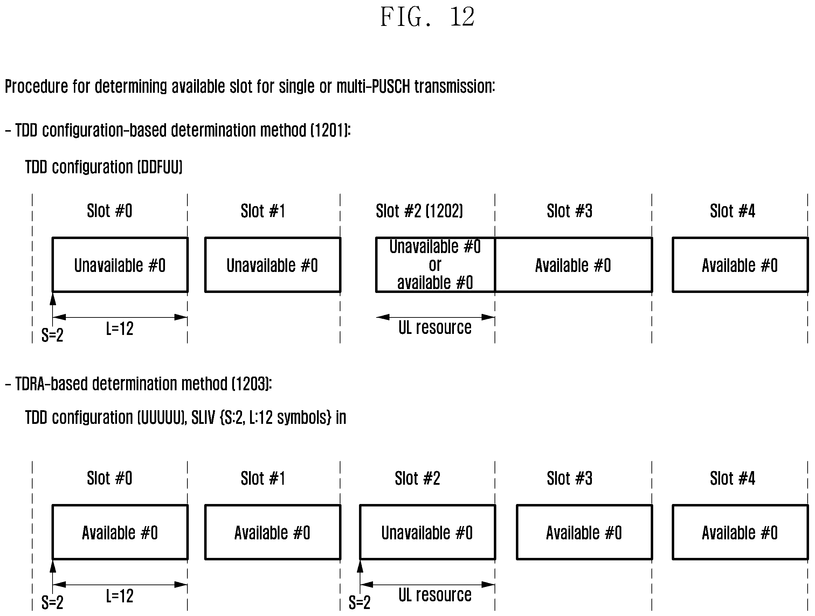

FIG. 12 is a diagram illustrating a method for determining an available slot at the time of PUSCH repetition type A transmission by a UE in a 5G system according to an embodiment of the disclosure.

When a base station configures an uplink resource through higher layer signaling (e.g., tdd-UL-DL-ConfigurationCommon or tdd-UL-DL-ConfigurationDedicated) or L1 signaling (e.g., dynamic slot format indicator), the base station and a UE may determine an available slot according to the following two methods with respect to the configured uplink resource.

- An available slot determination method based on a TDD configuration
- An available slot determination method considering a TDD configuration, time domain resource allocation (TDRA), and a configured grant (CG) configuration or activation DCI

As an example of the available slot determination method based on a TDD configuration, as illustrated in FIG. 12, if a TDD configuration is configured to be "DDFUU" through higher layer signaling, the base station and the UE may determine, as available slots, slot #3 and slot #4 configured as uplink "U", based on the TDD configuration (1201). Slot #2 1202 configured as flexible slot "F", based on the TDD configuration may be determined as an unavailable slot or an available slot, and for example, may be predefined through a base station configuration.

As an example of the available slot determination method considering a TDD configuration, time domain resource allocation (TDRA), and a configured grant (CG) configuration or activation DCI, as illustrated in FIG. 12, if a TDD configuration is configured to be "UUUUU" through higher layer signaling and a start and length indicator value (SLIV) of PUSCH transmission is configured to be {S: 2, L: 12 symbols} through L1 signaling, the base station and the UE may determine, for the configured uplink slot "U", slot #0, slot #1, slot #3, and slot #4 satisfying the SLIV of the PUSCH as available slots. The base station and the UE may determine, as an unavailable slot, slot #2 ("L=9" ≤ SLIV "L=12") not satisfying a SLIV that is a TDRA condition for PUSCH transmission (1203). This is merely for an example and does not limit the scope of the disclosure to PUSCH transmission, and may be also applied to PUCCH transmission, PUSCH/PUCCH repeated transmission, nominal repetition of PUSCH repetition type B, and TBoMS.

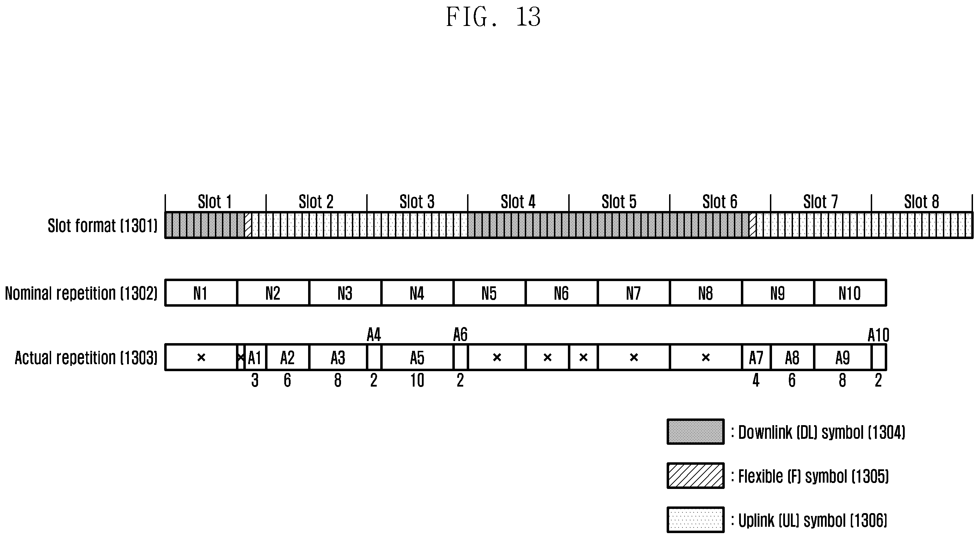

FIG. 13 illustrates an example of PUSCH repetitive type B transmission in a wireless communication system according to an embodiment of the disclosure.

FIG. 13 exemplifies a case where, for nominal repetitions, a start symbol S of 0, a transmission symbol length L of 10, and a number of repetitions of 10 are configured for the UE, which may be represented by N1 to N10 in the drawing (1302). In this case, the UE may determine actual repetitions by determining invalid symbols in consideration of the slot format 1301, which may be represented by A1 to A10 in the drawing (1303). According to the invalid symbol and actual repetition determination scheme as described above, PUSCH repetition type B is not transmitted in symbols the slot format of which is determined as a downlink (DL), and if a slot boundary exists in a nominal repetition, the nominal repetition may be divided into two actual repetitions with respect to the slot boundary and the divided actual repetitions may be transmitted. As an example, A1 denoting the first actual repetition may include 3 OFDM symbols, and subsequently transmittable A2 may include 6 OFDM symbols.

In addition, with regard to PUSCH repeated transmission, additional methods may be defined in NR Release 16 with regard to UL grant-based PUSCH transmission and configured grant-based PUSCH transmission, across slot boundaries, as follows:

- Method 1 (mini-slot level repetition): Through one UL grant, two or more PUSCH repetition transmissions are scheduled inside one slot or across the boundary of consecutive slots. In connection with method 1, time domain resource allocation information inside DCI indicates resources of the first repetition transmission. In addition, time domain resource information of remaining repetition transmissions may be determined according to time domain resource information of the first repetition transmission, and the uplink or downlink direction determined with regard to each symbol of each slot. Each repetition transmission occupies consecutive symbols.

- Method 2 (multi-segment transmission): Through one UL grant, two or more PUSCH repetition transmissions are scheduled in consecutive slots. Transmission no. 1 may be designated for each slot, and the start point or repetition length may differ between respective transmissions. In method 2, time domain resource allocation information inside DCI indicates the start point and repetition length of all repetition transmissions. In the case of performing repetition transmissions inside a single slot through method 2, if there are multiple bundles of consecutive uplink symbols in the corresponding slot, respective repetition transmissions may be performed with regard to respective uplink symbol bundles. If there is a single bundle of consecutive uplink symbols in the corresponding slot, PUSCH repetition transmission is performed once according to the method of NR Release 15.

- Method 3: Two or more PUSCH repetition transmissions are scheduled in consecutive slots through two or more UL grants. Transmission no. 1 may be designated with regard to each slot, and the nth UL grant may be received before PUSCH transmission scheduled by the (n-1)th UL grant is over.

- Method 4: Through one UL grant or one configured grant, one or multiple PUSCH repetition transmissions inside a single slot, or two or more PUSCH repetition transmissions across the boundary of consecutive slots may be supported. The number of repetitions indicated to the UE by the base station is only a nominal value, and the UE may actually perform a larger number of PUSCH repetition transmissions than the nominal number of repetitions. Time domain resource allocation information inside DCI or configured grant refers to resources of the first repetition transmission indicated by the base station. Time domain resource information of remaining repetition transmissions may be determined with reference to resource information of the first repetition transmission and the uplink or downlink direction of symbols. If time domain resource information of repetition transmission indicated by the base station spans a slot boundary or includes an uplink/downlink switching point, the corresponding repetition transmission may be divided into multiple repeated transmissions. One repetition transmission may be included in one slot with regard to each uplink period.

[PUSCH: frequency hopping process]

Hereinafter, frequency hopping of a physical uplink shared channel (PUSCH) in a 5G system will be described in detail.

5G supports two kinds of PUSCH frequency hopping methods with regard to each PUSCH repeated transmission type. First of all, in PUSCH repetition type A transmission, intra-slot frequency hopping and inter-slot frequency hopping are supported, and in PUSCH repetition type B transmission, inter-repetition frequency hopping and inter-slot frequency hopping are supported.

The intra-slot frequency hopping method supported in PUSCH repetition type A transmission may include a method in which a UE transmits allocated resources in the frequency domain, after changing the same by a configured frequency offset, by two hops in one slot. The start RB of each hop in connection with intra-slot frequency hopping may be expressed by Equation 3 below.

[Equation 3]

$$
\mathrm{RB}_{\mathrm{start}} = \begin{cases} \mathrm{RB}_{\mathrm{start}} & i = 0 \\ \left(\mathrm{RB}_{\mathrm{start}} + \mathrm{RB}_{\mathrm{offset}}\right) \bmod N_{BWP}^{size} & i = 1 \end{cases}
$$

In Equation 3, i=0 and i=1 may denote the first and second hops, respectively, and $\mathrm{RB}_{\mathrm{start}}$ may denote the start RB in a UL BWP and may be calculated from a frequency resource allocation method. $\mathrm{RB}_{\mathrm{offset}}$ denotes a frequency offset between two hops through an higher layer parameter. The number of symbols of the first hop may be represented by $\left\lfloor N_{symb}^{PUSCH,s} / 2 \right\rfloor$, and number of symbols of the second hop may be represented by $N_{symb}^{PUSCH,s} - \left\lfloor N_{symb}^{PUSCH,s} / 2 \right\rfloor$. $N_{symb}^{PUSCH,s}$ is the length of PUSCH transmission in one slot and is expressed by the number of OFDM symbols.

Next, the inter-slot frequency hopping method supported in PUSCH repetition type A and type B transmissions is a method in which the UE transmits allocated resources in the frequency domain, after changing the same by a configured frequency offset, in each slot. The start RB during slot $n_s^\mu$ in connection with inter-slot frequency hopping may be expressed by Equation 4 below.

[Equation 4]

$$
\mathrm{RB}_{\mathrm{start}}\left(n_s^\mu\right) = \begin{cases} \mathrm{RB}_{\mathrm{start}} & n_s^\mu \bmod 2 = 0 \\ \left(\mathrm{RB}_{\mathrm{start}} + \mathrm{RB}_{\mathrm{offset}}\right) \bmod N_{BWP}^{size} & n_s^\mu \bmod 2 = 1 \end{cases}
$$

In Equation 4, $n_s^\mu$ denotes the current slot number during multi-slot PUSCH transmission, and $\mathrm{RB}_{\mathrm{start}}$ denotes the start RB inside a UL BWP and is calculated from a frequency resource allocation method. $\mathrm{RB}_{\mathrm{offset}}$ denotes a frequency offset between two hops through an higher layer parameter.

Next, the inter-repetition frequency hopping method supported in PUSCH repetition type B transmission is a method in which resources allocated in the frequency domain regarding one or multiple actual repetitions in each nominal repetition are moved by a configured frequency offset and then transmitted. The index $\mathrm{RB}_{\mathrm{start(n)}}$ of the start RB in the frequency domain regarding one or multiple actual repetitions in the nth nominal repetition may follow Equation 5 given below.

[Equation 5]

$$
\mathrm{RB}_{\mathrm{start}}(n) = \begin{cases} \mathrm{RB}_{\mathrm{start}} & n \bmod 2 = 0 \\ \left(\mathrm{RB}_{\mathrm{start}} + \mathrm{RB}_{\mathrm{offset}}\right) \bmod N_{BWP}^{size} & n \bmod 2 = 1 \end{cases}
$$

In Equation 5, n denotes the index of nominal repetition, and $\mathrm{RB}_{\mathrm{offset}}$ denotes an RB offset between two hops through an higher layer parameter.

[PUSCH: regarding transmission power]

Hereinafter, a method of determining the transmission power of an uplink data channel in a 5G system will be described in detail.

In the 5G system, transmission power of the uplink data channel may be determined through Equation 1 as

follows.

[Equation 6]

$$P_{PUSCH}(i, j, q_d, l) =$$

$$\min \left\{ \begin{array}{c} P_{CMAX,f,c}(i), \\ P_{O\_PUSCH,b,f,c}(j) + 10\log_{10}\left(2^{\mu} \cdot M_{RB,b,f,c}^{PUSCH}(i)\right) + \alpha_{b,f,c}(j) \cdot PL_{b,f,c}(q_d) + \Delta_{TF,b,f,c}(i) + f_{b,f,c}(i,l) \end{array} \right\} \text{ [dBm]}$$

In Equation 6, *j* refers to a PUSCH grant type and, specifically, *j*=0 refers to a PUSCH grant for a random access response, *j*=1 refers to a configured grant, and $j \in \{2,3, ...j - 1\}$ refers to a dynamic grant. $P_{CMAX,f,c}(i)$ denotes maximum output power configured for the UE with regard to carrier *f* of serving cell c for PUSCH transmission occasion *i*. $P_{O\_PUSCH,b,f,c}(j)$ is a parameter configured by a sum of $P_{O\ NOMINAL\_PUSCH,f,c}(j)$ which is configured as a higher layer parameter and $P_{O\_UE\_PUSCH,b,f,c}(j)$ which may be determined via a higher layer configuration and an SRI (in case of a dynamic grant PUSCH). $M_{RB,b,f,c}^{PUSCH}(i)$ denotes a bandwidth with regard to resource allocation expressed by the number of resource blocks for transmission occasion *i*, and $\Delta_{TF,b,f,c}(i)$ denotes a value determined according to a modulation coding scheme (MCS) and the type of information transmitted via a PUSCH. $\alpha_{b,f,c}(j)$ denotes a value for compensating for pathloss, which may be determined through a higher layer configuration and an SRS resource indicator (SRI) (in case of a dynamic PUSCH). $PL_{b,f,c}(q_d)$ denotes a downlink pathloss estimation value estimated by a UE through a reference signal with a reference signal index of $q_d$, and the reference signal index $q_d$ may be determined by the UE through a higher layer configuration and an SRI (in case of a dynamic PUSCH or a ConfiguredGrantConfig-based configured grant PUSCH not including higher layer configured rrc-ConfiguredUplinkGrant (type 2 configured grant PUSCH)) or a higher layer configuration. $f_{b,f,c}(i, l)$ denotes a closed loop power adjustment value and may be supported in an accumulation mode and an absolute mode. If higher layer parameter tpc-Accumulation is not configured for a UE, the close loop power adjustment value may be determined in the accumulation mode. In this case, $f_{b,f,c}(i, l)$ is determined as $f_{b,f,c}(i - i_0, l) + \Sigma \delta_{PUSCH,b,f,c}$ which is a sum of a closed loop adjustment value for PUSCH transmission occasion $i-i_0$ and TPC command values for closed loop index *l*, received via DCI between $K_{PUSCH}(i-i_0)$-1 symbol for transmitting PUSCH transmission occasion $i-i_0$ and $K_{PUSCH}(i)$ symbol for transmitting PUSCH transmission occasion *i*. If higher layer parameter tpc-Accumulation is configured for a UE, $f_{b,f,c}(i, l)$ is determined as a TPC command value $\delta_{PUSCH,b,f,c}(i, l)$ for close loop index *l*, received via DCI. If higher layer parameter twoPUSCH-PC-AdjustmentStates is configured for the UE, the closed loop index *l* may be configured as 0 or 1, and this value may be determined through a higher layer configuration and an SRI (in case of dynamic grant PUSCH). The mapping relationship between the TCI command field in DCI and a TPC value $\delta_{PUSCH,b,f,c}$ according to the accumulation mode and the absolute mode may be defined as given in Table 33 below.

[Table 33]

| TPC command field | Accumulated $\delta_{PUSCH,b,f,c}$ [dB] | Absolute $\delta_{PUSCH,b,f,c}$ [dB] |
|---|---|---|
| 0 | -1 | -4 |
| 1 | 0 | -1 |
| 2 | 1 | 1 |
| 3 | 3 | 4 |

[Regarding UE capability report]

In LTE and NR, a UE may perform a procedure in which, while being connected to a serving base station, the UE may report capability supported by the UE to the corresponding base station. In the following description, the above-described procedure will be referred to as a UE capability report.

The base station may transfer a UE capability enquiry message to a UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times. In next-generation mobile communication systems, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

Upon receiving the UE capability report request from the base station in the above step, the UE configures UE capability according to band information and RAT type requested by the base station. The method in which the UE configures UE capability in an NR system is summarized below.

1. If the UE receives a list regarding LTE and/or NR bands from the base station at a UE capability request,the UE constructs band combinations (BCs) regarding EN-DC and NR standalone(SA). That is, the UE configures a candidate list of BCs regarding EN-DC and NR SA, based on bands received from the base station at a request through FreqBandList. Bands have priority in the order described in FreqBandList.

2. If the base station sets "eutra-nr-only" flag or "eutra" flag and requests a UE capability report, the UE removes everything related to NR SA BCs from the configured BC candidate list. Such an operation may occur only if an LTE base station (eNB) requests "eutra" capability.

3. The UE then removes fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same may be omitted. This step is applied in MR-DC as well, that is, LTE bands are also applied. BCs remaining after the above step constitute the final "candidate BC list".

4. The UE selects BCs appropriate for the requested RAT type from the final "candidate BC list" and thereby selects BCs to report. In this step, the UE configures supportedBandCombinationList in a determined order. That is, the UE configures BCs and UE capability to report according to a preconfigured rat-Type order. (nr -> eutra-nr -> eutra). In addition, the UE configures featureSetCombination regarding the configured supportedBandCombinationList and configures a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be acquired from feature set combinations of containers of UE-NR-Capabilities and UE-MRDC-Capabilities.

5. If the requested RAT type is eutra-nr and has an influence, featureSetCombinations is included on both containers of UE-MRDC-Capabilities and UE-NR-Capabilities. However, the feature set of NR is included only in UE-NR-Capabilities.

After the UE capability is configured, the UE transfers a UE capability information message including the UE capability to the base station. The base station performs scheduling and transmission/reception management appropriate for the UE, based on the UE capability received from the UE.

[Regarding NC-JT]

According to an embodiment of the disclosure, in order to receive a PDSCH from a plurality of TRPs, the UE may use non-coherent joint transmission (NC-JT).

Unlike the conventional system, the 5G wireless communication system may support not only a service requiring a high transmission rate, but also a service having a very short transmission delay and a service requiring a high connection density. In a wireless communication network including multiple cells, transmission and reception points (TRPs), or beams, cooperative communication (coordinated transmission) between the respective cells, TRPs, or/and beams may satisfy various service requirements by enhancing the strength of a signal received by a UE or efficiently performing interference control between the respective cells, TRPs, or/and beams.

Joint transmission (JT) is a representative transmission technology for the aforementioned cooperative communication, and refers to a technology for increasing the strength or throughput of a signal received by a UE, by transmitting the signal to one UE via multiple different cells, TRPs, and/or beams. In this case, channels between the UE and the respective cells, TRPs, and/or beams may have significantly different characteristics, and in particular, non-coherent joint transmission (NC-JT) supporting non-coherent precoding between the respective cells, TRPs, and/or beams may require individual precoding, MCS, resource allocation, TCI indication, etc. according to a channel characteristic for each link between the UE and the respective cells, TRPs, and/or beams.

The above-described NC-JT transmission may be applied to at least one of a downlink data channel (PDSCH), a downlink control channel (PDCCH), an uplink data channel (PUSCH), and an uplink control channel (PUCCH). During PDSCH transmission, transmission information such as precoding, MCS, resource allocation, and TCI may be indicated through DL DCI, and should be independently indicated for each cell, TRP, and/or beam for the NC-JT. This is a significant factor that increases payload required for DL DCI transmission, which may have a bad influence on reception performance of a PDCCH for transmitting the DCI. Therefore, in order to support JT of a PDSCH, it is necessary to carefully design tradeoff between the amount of DCI information and control information reception performance.

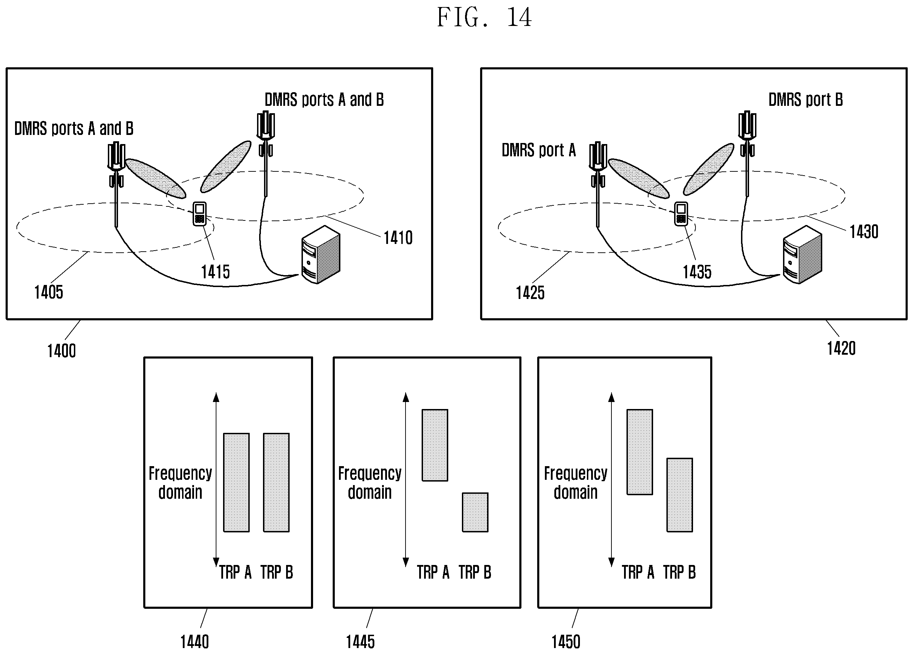

FIG. 14 illustrates a configuration of antenna ports and an example of resource allocation for transmitting a PDSCH using cooperative communication in a wireless communication system according to an embodiment of the disclosure.

Referring to FIG. 14, the example for PDSCH transmission is described for each scheme of joint transmission (JT), and examples for allocating radio resources for each TRP are described.

Referring to FIG. 14, an example 1400 of coherent joint transmission (C-JT) supporting coherent precoding between respective cells, TRPs, and/or beams is illustrated.

In the case of C-JT, a TRP A 1405 and a TRP B 1410 transmit single data (PDSCH) to a UE 1415, and multiple TRPs may perform joint precoding. This may signify that the TRP A 14005 and a TRP B 1410 transmit DMRSs through the same DMRS ports in order to transmit the same PDSCH. For example, the TRP A 1405 and a TRP B 1410 may transmit DMRSs to the UE through a DMRS port A and a DMRS port B, respectively. In this case, the UE may receive one piece of DCI information for receiving one PDSCH demodulated based on the DMRSs transmitted through the DMRS port A and the DMRS port B.

FIG. 14 shows an example 1420 of non-coherent joint transmission (NC-JT) supporting non-coherent precoding between respective cells, TRPs, and/or beams for PDSCH transmission.

In the case of NC-JT, the PDSCH may be transmitted to a UE 1435 per cell, per TPR, and/or per beam, and individual precoding may be applied to each PDSCH. Respective cells, TRPs, and/or beams may transmit different PDSCHs or different PDSCH layers to the UE, thereby improving throughput compared to single cell, TRP, and/or beam transmission. Furthermore, the respective cells, TRPs, and/or beams may repeatedly transmit the same PDSCH to the UE, thereby improving reliability as compared to single cell, TRP, and/or beam transmission. For the sake of descriptive convenience, a cell, a TRP, and/or a beam may be collectively referred to as a TRP.

In this case, various radio resource allocations may be considered, such as a case 1440 where frequency and time resources used in multiple TRPs for PDSCH transmission are all identical, a case 1445 where frequency and time resources used in multiple TRPs do not overlap at all, and a case 1450 where some of frequency and time resources used in multiple TRPs overlap.

To support NC-JT, DCI of various types, structures, and relations may be considered to assign multiple PDSCHs simultaneously to a single UE.

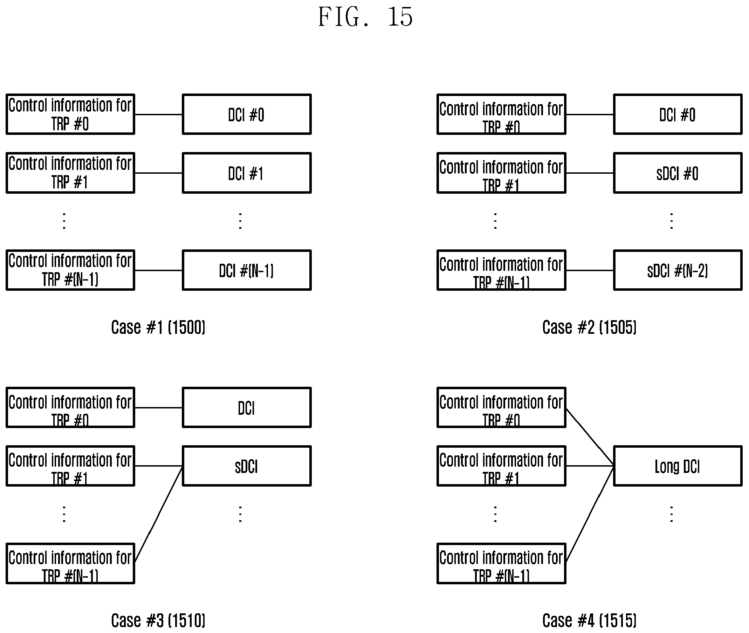

FIG. 15 illustrates an example for a configuration of downlink control information (DCI) for NC-JT in which respective TRPs transmit different PDSCHs or different PDSCH layers to the UE in a wireless communication system according to an embodiment of the disclosure.

Referring to FIG. 15, case #1 1500 is an example in which control information for PDSCHs transmitted from (N-1) additional TRPs is transmitted independently from control information for a PDSCH transmitted from a serving TRP in a situation in which (N-1) different PDSCHs are transmitted from the (N-1) additional TRPs (TRP #1 to TRP # (N-1)) other than the serving TRP (TRP #0) used for single PDSCH transmission. That is, the UE may acquire control information for PDSCHs transmitted from different TRPs (TRP#0 to TRP#N-1) via independent pieces of DCI (DCI#0 to DCI#N-1). Formats between the independent pieces of DCI may be the same or different from each other, and payloads between the pieces of DCI may also be the same or different from each other. In case #1 described above, a degree of freedom of PDSCH control or allocation may be completely guaranteed, but when respective pieces of the DCI are transmitted by different TRPs, a difference between DCI coverages may be generated and reception performance may deteriorate.

Case #2 1505 is an example in which pieces of control information (DCI) for PDSCHs of (N-1) additional TRPs are transmitted and each piece of the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, DCI#0, which is control information for the PDSCH transmitted from the serving TRP (TRP#0), includes all information elements of DCI format 1_0, DCI format 1_1, and DCI format 1_2, but shortened DCI (hereinafter, sDCI) (sDCI#0 to sDCI#N-2), which is control information for the PDSCHs transmitted from the cooperative TRPs (TRP#1 to TRP#N-1), may include only some of the information elements of DCI format 1_0, DCI format 1_1, and DCI format 1_2. Accordingly, in the case of sDCI for transmission of the control information for the PDSCHs transmitted from the cooperative TRPs, a payload is small compared to normal DCI (nDCI) for transmission of the control information related to the PDSCH transmitted from the serving TRP, so that reserved bits may be included in comparison with nDCI.

In case #2 described above, a degree of freedom of each PDSCH control or allocation may be limited according to content of information elements included in the sDCI, but reception capability of the sDCI is better than the nDCI, and thus a probability of the generation of difference between DCI coverages may become lower.

Case #3 1510 is an example in which one piece of control information for PDSCHs of (N-1) additional TRPs is transmitted and the DCI is dependent on control information for the PDSCH transmitted from the serving TRP in a situation in which (N-1) different PDSCHs are transmitted from (N-1) additional TRPs (TRP #1 to TRP # (N-1)) other than the serving TRP (TRP #0) used for single PDSCH transmission.

For example, in the case of DCI #0 that is control information for the PDSCH transmitted from the serving TRP (TRP #0), all information elements of DCI format 1_0, DCI format 1_1, and DCI format 1_2 may be included, and in the case of control information for PDSCHs transmitted from cooperative TRPs (TRP #1 to TRP #(N-1)), only some of the information elements of DCI format 1_0, DCI format 1_1, and DCI format 1_2 may be gathered in one "secondary" DCI (sDCI) and transmitted. For example, the sDCI may include at least one piece of HARQ-related information, such as frequency domain resource assignment, time domain resource assignment, and MCS of cooperative TRPs. In addition, information that is not included in the sDCI such as a bandwidth part (BWP) indicator and a carrier indicator may follow the DCI (DCI #0, normal DCI, or nDCI) of the serving TRP.

In case #3 1510, a degree of freedom of PDSCH control or allocation may be limited according to content of the information elements included in the sDCI but reception performance of the sDCI can be controlled, and case #3 1510 may have smaller complexity of DCI blind decoding of the UE compared to case #1 1500 or case #2 1505.

Case #4 1515 illustrates an example in which, in a situation where N-1 different PDSCHs are transmitted from N-1 additional TRPs (TRP#1 to TRP#N-1) in addition to a serving TRP (TRP#0) used during single PDSCH transmission, control information for PDSCHs transmitted from the N-1 additional TRPs is transmitted in the same DCI (long DCI) as that for the control information for the PDSCH transmitted from the serving TRP. That is, the UE may acquire the control information for the PDSCHs transmitted from different TRPs (TRP#0 to TRP#N-1) via a single piece of DCI. In case #4 1515, complexity of DCI blind decoding of the UE may not be increased, but a degree of freedom of PDSCH control or allocation may be low since the number of cooperative TRPs is limited according to long DCI payload restriction.

In the following description and embodiments, sDCI may refer to various pieces of supplementary DCI such as shortened DCI, secondary DCI, or normal DCI (DCI formats 1_0 and 1_1 described above) including PDSCH control information transmitted in the cooperative TRP, and unless specific restriction is mentioned, the corresponding description may be similarly applied to the various pieces of supplementary DCI.

In the following description and embodiments, Case #1 1500, case #2 1505, and case #3 1510 in which one or more pieces of DCI (or PDCCHs) are used to support NC-JT may be classified as multiple PDCCH-based NC-JT, and case #4 1515 in which single DCI (or PDCCH) is used to support NC-JT may be classified as single PDCCH-based NC-JT. In multiple PDCCH-based PDSCH transmission, a CORESET in which DCI of the serving TRP (TRP#0) is scheduled and a CORESET in which DCI of the cooperative TRPs (TRP#1 to TRP#N-1) are scheduled may be distinguished. A method of distinguishing the CORESETs may include a distinguishing method through a higher-layer indicator for each CORESET and a distinguishing method through a beam configuration for each CORESET. Furthermore, in single PDCCH-based NC-JT, single DCI schedules a single PDSCH having a plurality of layers instead of scheduling a plurality of PDSCHs, and the plurality of layers may be transmitted from a plurality of TRPs. In this case, association between a layer and a TRP transmitting the corresponding layer may be indicated through a transmission configuration indicator (TCI) indication for the layer.

According to embodiments of the disclosure, the "cooperative TRP" may be replaced by various terms such as a "cooperative panel" or a "cooperative beam" when actually applied.

In embodiments of the disclosure, "the case in which NC-JT is applied" may be variously interpreted as "the case in which the UE simultaneously receives one or more PDSCHs in one BWP", "the case in which the UE simultaneously receives PDSCHs based on two or more transmission configuration indicator (TCI) indications in one BWP", and "the case in which the PDSCHs received by the UE are associated with one or more DMRS port groups" according to circumstances, but is used by means of one expression for the sake of descriptive convenience.

As used herein, a radio protocol structure for NC-JT may be used in various ways according to a TRP deployment scenario. For example, if there is a small backhaul delay or no backhaul delay between cooperative TRPs, a method (CA-like method) using a structure based on MAC layer multiplexing is possible in a similar manner to reference numeral S10 of FIG. 4. Contrarily, if a backhaul delay between cooperative TRPs is so large that the backhaul delay cannot be ignored (e.g., when a time of 2 ms or longer is required for exchange of information, such as CSI, scheduling, and HARQ-ACK, between the cooperative TRPs), a method (DC-like method) of securing characteristics robust to a delay by using an independent structure for each TRP starting from the RLC layer is possible in a similar manner to reference numeral S20 of FIG. 4.

The UE supporting C-JT/NC-JT may receive a C-JT/NC-JT-related parameter or a setting value from a higher-layer configuration and set an RRC parameter of the UE based on the same. For the higher-layer configuration, the UE may use a UE capability parameter (e.g., tci-StatePDSCH). The UE capability parameter, for example, tci-StatePDSCH may define TCI states for the purpose of PDSCH transmission, the number of the TCI states may be configured to be 4, 8, 16, 32, 64, and 128 in FR1 and configured to be 64 and 128 in FR2, and among the configured numbers, up to 8 states that may be indicated by 3 bits of a TCI field in the DCI may be configured via a MAC CE message.

A maximum value 128 refers to a value indicated by maxNumberConfiguredTCI statesPerCC within the parameter tci-StatePDSCH which is included in capability signaling of the UE. In this way, a series of configuration procedures from the higher-layer configuration to the MAC CE configuration may be applied to a beamforming change command or a beamforming indication for at least one PDSCH in one TRP.

[Related to SBFD (XDD)]

In a 5G mobile communication service, an additional coverage expansion technology has been introduced compared to an LTE communication service. However, a TDD system suitable for a service having generally a high proportion of downlink traffic may be used in an actual 5G mobile communication service. In addition, coverage enhancement may be critically required in a 5G mobile communication service because the coverage of a base station and a UE is reduced due to the increase of center frequency for extension of a frequency band. In particular, since a transmission power of a UE is generally lower than a transmission power of a base station and services having a high proportion of downlink traffic are supported, and since a ratio of a downlink in the time domain is higher than that of an uplink, coverage enhancement of an uplink channel is important. As physical methods for improving coverage of an uplink channel between a base station and a UE, there may exist methods of increasing time resources of the uplink channel, lowering a center frequency, or increasing transmission power of the UE. However, changing a frequency may be constrained because a frequency band is determined for each network operator. In addition, since a maximum transmission power of a UE is restricted by regulations to reduce interference, there may be limitations in increasing the maximum transmission power of the UE in order to enhance coverage.

Accordingly, in order to enhance coverage of a base station and a UE, not only uplink and downlink resources in the time domain may be distributed according to uplink and downlink traffic proportions as in a TDD system, but also uplink and downlink resources may be allocated in the frequency domain as in an FDD system. In an embodiment, a system capable of flexibly allocating uplink resources and downlink resources in the time domain and the frequency domain may be referred to as a cross division duplex (XDD) system, a flexible time division duplex (TDD) system, a hybrid TDD system, a TDD-frequency division duplex (FDD) system, or a hybrid TDD-FDD system, and for convenience of description, the disclosure hereinafter refers to the system as an XDD system. According to an embodiment, X of XDD may mean time or frequency.

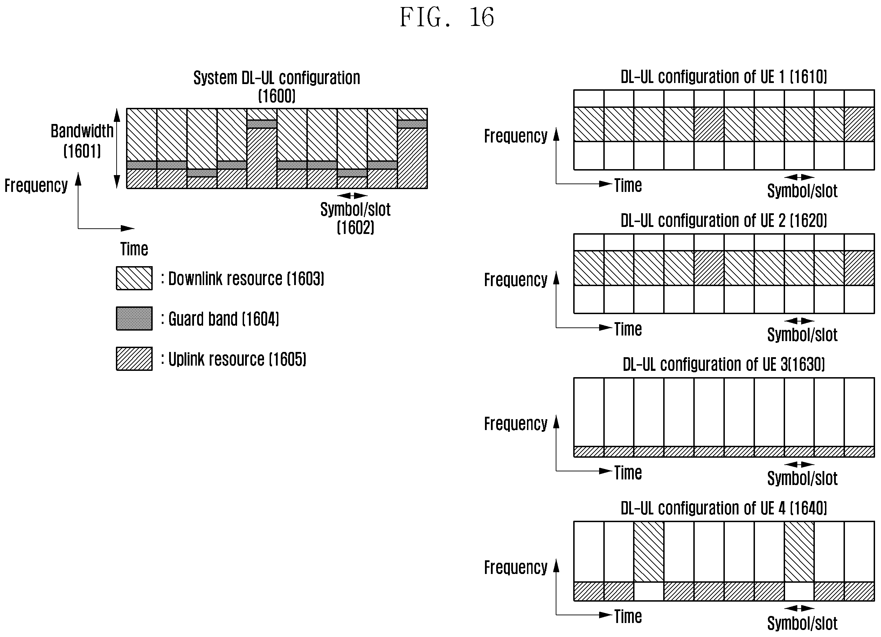

FIG. 16 is a diagram illustrating an example of an uplink-downlink resource configuration of an XDD system in which uplink resources and downlink resources are flexibly allocated in the time domain and the frequency domain according to an embodiment of the disclosure.

Referring to FIG. 16, from a base station perspective, in an uplink-downlink configuration 1600 of an overall XDD system, resources may be flexibly allocated for each symbol or slot 1602 according to uplink and downlink traffic proportions with respect to an entire frequency band 1601. However, this merely corresponds to an example, a unit in which resources are allocated is not limited to the symbol or slot 1602, and resources may also be flexibly allocated according to a unit, such as a mini slot. A guard band 1604 may be allocated between the frequency bands of a downlink resource 1603 and an uplink resource 1605. The guard band 1604 may be allocated as a method for reducing interference on reception of an uplink channel or signal due to out-of-band emission occurring when a base station transmits a downlink channel or signal in the downlink resource 1603. For example, UE 1 1610 and UE 2 1620 having downlink traffic generally greater than uplink traffic may be allocated downlink and uplink resources at a ratio of 4:1 in the time domain according to a configuration of the base station. At the same time, UE 3 1630 operating at a cell edge and thus having insufficient uplink coverage may be allocated only uplink resources in a particular time interval according to a configuration of the base station. Additionally, UE 4 1640 operating at a cell edge and thus having insufficient uplink coverage, but also having a relatively large amount of downlink and uplink traffic may be allocated a large amount of uplink resources in the time domain for uplink coverage and may be allocated a large amount of downlink resources in the frequency domain. As in the example described above, there is an advantage in that UEs operating relatively at the cell center and having large downlink traffic may be allocated a large amount of downlink resources in the time domain, and UEs operating relatively at the cell edge and having insufficient uplink coverage may be allocated a large amount of uplink resources in the time domain.

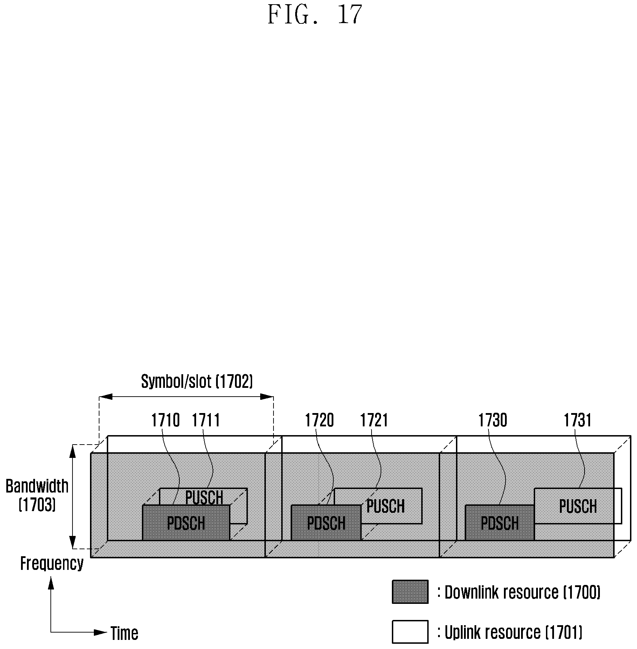

FIG. 17 is a diagram illustrating an example of an uplink-downlink resource configuration of a full-duplex communication system in which uplink resources and downlink resources are flexibly allocated in the time domain and the frequency domain according to an embodiment of the disclosure.

According to an example illustrated in FIG. 17, a downlink resource 1700 and an uplink resource 1701 may be configured to entirely or partially overlap in the time and frequency domains. In a region configured as the downlink resource 1700, downlink transmission from a base station to a UE may be performed, and in a region configured as the uplink resource 1701, uplink transmission from the UE to the base station may be performed.

In an example of FIG. 17, a downlink resource 1710 and an uplink resource 1711 may be configured to entirely overlap in a time resource corresponding to a symbol or slot 1702 and a frequency resource corresponding to a bandwidth 1703. The downlink resource 1710 and the uplink resource 1711 overlap in the time and frequency, and thus downlink and uplink transmission and reception of the base station or the UE may simultaneously occur in the same time and frequency resource.

In another example of FIG. 17, a downlink resource 1720 and an uplink resource 1721 may be configured to partially overlap in a time resource corresponding to a symbol or slot and a frequency resource corresponding to the bandwidth 1703. In a partial region in which the downlink resource 1720 and the uplink resource 1721 overlap with each other, downlink and uplink transmission and reception of the base station or the UE may simultaneously occur.

In another example of FIG. 17, a downlink resource 1730 and an uplink resource 1731 may be configured not to overlap in a time resource corresponding to a symbol or slot and a frequency resource corresponding to the bandwidth 1703.

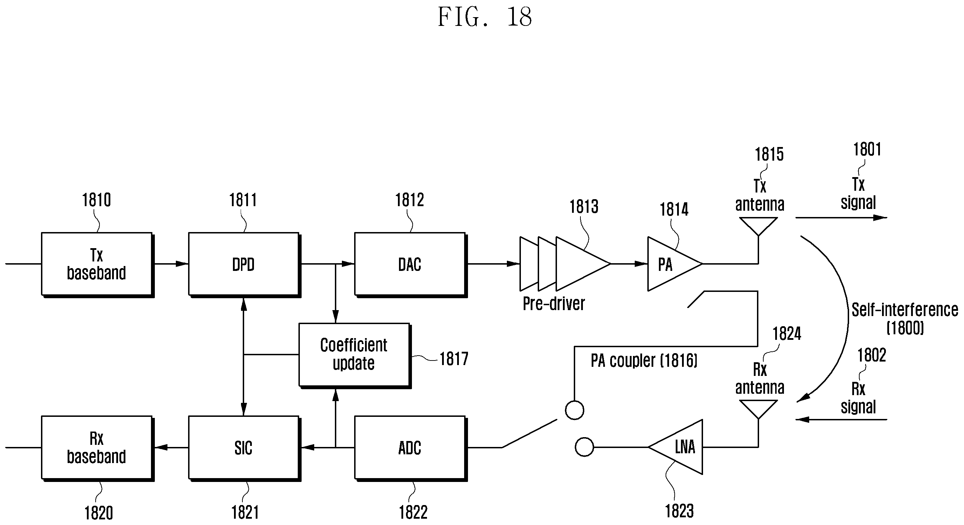

FIG. 18 is a diagram illustrating a transmission and reception structure for a duplex scheme according to an embodiment of the disclosure.

The transmission and reception structure illustrated in FIG. 18 may be used for a base station device or a UE device. According to the transmission and reception structure illustrated in FIG. 18, a transmission node may be configured by blocks, such as a transmission baseband block (Tx baseband) 1810, a digital pre-distortion block (digital pre-distortion (DPD)) 1811, a digital-to-analog converter (DAC) 1812, a pre-driver 1813, a power amplifier (PA) 1814, a transmission antenna (Tx antenna) 1815, etc. Each block may perform the role as below.

The transmission baseband block 1810: A digital processing block for a transmission signal

*The digital pre-distortion block 1811: Pre-distortion of a digital transmission signal

The digital-to-analog converter 1812: Conversion of a digital signal into an analog signal

The pre-driver 1813: Gradual power amplification of an analog transmission signal

The power amplifier 1814: Power amplification of an analog transmission signal

The transmission antenna 1815: An antenna for signal transmission

According to the transmission and reception structure illustrated in FIG. 18, a reception node may be configured by blocks, such as a reception antenna 1824 (Rx antenna), a low-noise amplifier (LNA) 1823, an analog-to-digital converter (ADC) 1822, a successive interference canceller 1821, a reception baseband block (Rx baseband) 1820, etc. Each block may perform the role as below.

The reception antenna 1824: An antenna for signal reception

The low-noise amplifier 1823: Power amplification of an analog reception signal with minimization of noise amplification

The analog-to-digital converter 1822: Conversion of an analog signal into a digital signal

The successive interference canceller 1821: An interference canceller for a digital signal

The reception baseband block 1820: A digital processing block for a reception signal

According to the transmission and reception structure illustrated in FIG. 18, a power amplifier coupler (PA coupler) 1816 and a coefficient update block (coefficient update) 1817 may exist for additional signal processing between the transmission node and the reception node. Each block may perform the role as below.

The power amplifier coupler 1816: A block for a purpose of observing, at the reception node, a waveform of an analog transmission signal having passed through the power amplifier

The coefficient update block 1817: Update of various coefficients required for digital domain signal processing of the transmission node and the reception node, wherein calculated coefficients may be used for setting various types of parameters in the block for DPD 1811 of the transmission node and the block for SIC 1821 of the reception node

The transmission and reception structure illustrated in FIG. 18 may be used for the purpose of effectively controlling interference between a transmission signal and a reception signal when the base station device or the UE device simultaneously performs transmission and reception operations. For example, when transmission and reception simultaneously occur in a random device, a transmission signal 1801 transmitted through the transmission antenna 1815 of the transmission node may be received through the reception antenna 1824 of the reception node, and in this case, the transmission signal 1801 received by the reception node may cause interference 1800 to a reception signal 1802 which the reception node originally intends to receive. The interference between the reception signal 1802 and the transmission signal 1801 received by the reception node is named self-interference 1800.

For example, specifically, when the base station device simultaneously performs downlink transmission and uplink reception, a downlink signal transmitted by the base station may be received by a reception node of the base station. Therefore, at the reception node of the base station, interference may occur between the downlink signal transmitted by the base station and an uplink signal that the base station originally intends to receive at the reception node. If the UE device simultaneously performs downlink reception and uplink transmission, an uplink signal transmitted by the UE may be received by a reception node of the UE. Therefore, at the reception node of the UE, interference may occur between the uplink signal transmitted by the UE and a downlink signal that the UE originally intends to receive at the reception node. As described above, interference between links having different directions, that is a downlink signal and an uplink signal, in the base station and UE devices is also named cross-link interference.

In an embodiment of the disclosure, self-interference between a transmission signal (or a downlink signal) and a reception signal (or uplink signal) may occur in a system allowing simultaneous occurrence of transmission and reception.

For example, self-interference may occur in an XDD system described above.

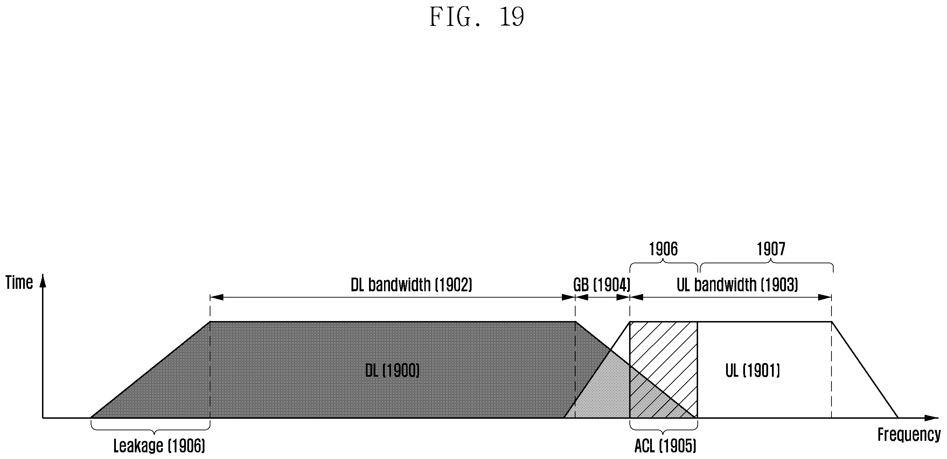

FIG. 19 is a diagram illustrating an example of a downlink and uplink resource configuration in an XDD system.

In a case of XDD, a resource for downlink 1900 and a resource for uplink 1903 may be distinguished in the frequency domain, and a guard band (GB) 1904 may exist between the resource for downlink 1900 and the resource for uplink 1901. Actual downlink transmission may be performed in a downlink bandwidth 1902, and uplink transmission may be performed in an actual uplink bandwidth 1903. Leakage 1906 toward the outside of an uplink or downlink transmission band may occur. In a region in which the downlink resource 1900 and the uplink resource 1901 are adjacent to each other, interference (this may be called adjacent carrier leakage (ACL) 1905) caused by the leakage may occur.

FIG. 19 illustrates an example in which the ACL 1905 from the downlink 1900 to the uplink 1901 occurs. As the downlink bandwidth 1902 and the uplink bandwidth 1903 become closely adjacent to each other, the influence of signal interference caused by the ACL 1905 may increase, and thus performance deterioration may occur. For example, as illustrated in FIG. 19, a partial resource region 1906 in the uplink band 1903, which is adjacent to the downlink band 1902, may be largely affected by the interference caused by the ACL 1905. A partial resource region 1907 in the uplink band 1903, which is relatively far away from the downlink band 1902, may be less affected by the interference caused by the ACL 1905. That is, the resource region 1906 relatively largely affected by interference and the resource region 1907 relatively less affected by interference may exist in the uplink band 1903.

The guard band 1904 may be inserted between the downlink bandwidth 1902 and the uplink bandwidth 1903 for the purpose of reducing performance deterioration caused by the ACL 1905. There is an advantage in that the larger the size of the guard band 1904, the smaller the interference influence caused by the ACL 1905 between the downlink bandwidth 1902 and the uplink bandwidth 1903. However, there may also be a disadvantage of degradation of resource efficiency in that the larger the size of the guard band 1904, the less the resources available for transmission or reception. On the contrary, there is an advantage of enhancement of resource efficiency in that the smaller the size of the guard band 1904, the larger the amount of the resources available for transmission or reception. However, there is an a disadvantage in that the interference influence caused by the ACL 1905 between the downlink bandwidth 1902 and the uplink bandwidth 1903 may become large. Therefore, it may be important to determine a proper size of the guard band 1904 in consideration of a trade-off.

In 3GPP, subband non-overlapping full duplex (SBFD) is being discussed as a new duplex scheme based on NR. SBFD is a technology of using a part of a downlink resource as an uplink resource in a TDD band (spectrum) of a frequency of 6 GHz or below or a frequency of 6 GHz or above to receive uplink transmission from a UE as much as the amount of increased uplink resources so as to expand the uplink coverage of the UE, and receive feedback relating to downlink transmission from the UE in the increased uplink resources so as to reduce feedback delay. In the disclosure, a UE which received information regarding whether the SBFD is supported or not from the gNB, and which may perform uplink transmission in a part of the downlink resource, may be referred to as an SBFD-capable UE for convenience of description. The following schemes may be considered in order to define the SBFD scheme in specifications, and in order for the SBFD-capable UE to determine that the SBFD is supported in a specific cell (or frequency/frequency band).

First scheme. Besides the frame structure type of the existing unpaired spectrum (or time division duplex (TDD)) or paired spectrum (or frequency division duplex (FDD)), a different frame structure type (for example, frame structure type 2) may be introduced to define the above-described SBFD. The frame structure type 2 may be defined as being supported in the specific frequency or frequency band, or a base station may indicate to a UE whether SBFD is supported by using system information. The SBFD-capable UE may receive the system information indicating whether SBFD is supported and may thus determine whether SBFD is supported in a specific cell (or frequency/frequency band).

Second scheme. Without defining a new frame structure type, it may be indicated whether SBFD is additionally supported at a specific frequency or frequency band of the existing unpaired spectrum (or TDD). The second scheme may define whether SBFD is additionally supported in the specific frequency or frequency band of the conventional unpaired spectrum, or a base station may indicate to a UE whether SBFD is supported by using system information. The SBFD-capable UE may receive the system information indicating whether SBFD is supported and may thus determine whether SBFD is supported in a specific cell (or frequency/frequency band).

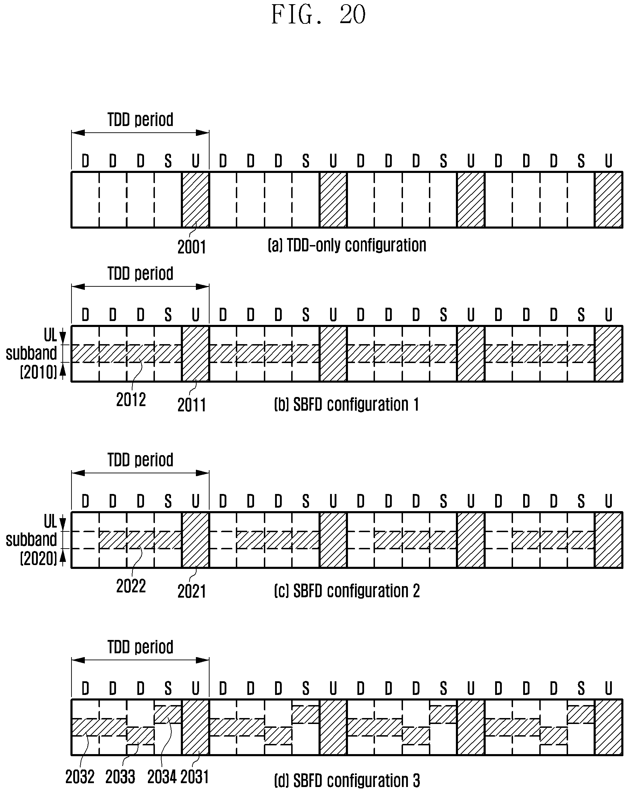

The information on whether SBFD is supported in the above first and second schemes may be information (e.g., SBFD resource configuration information as described below in FIG. 20) indirectly indicating whether SBFD is supported, by additionally configuring a part of a downlink resource as an uplink resource in addition to the configuration of TDD uplink (UL)-downlink (DL) resource configuration information indicating a downlink slot (or symbol) resource and an uplink slot (or symbol) resource in TDD, or may be information directly indicating whether SBFD is supported.

In the disclosure, the SBFD-capable UE may receive a synchronization signal block during the initial cell access for accessing a cell (or gNB), thereby acquiring cell synchronization. A process of obtaining the cell synchronization may be the same as for an SBFD UE and an existing TDD UE. Thereafter, the SBFD-capable UE may determine whether the cell supports the SBFD or not through an MIB acquisition or SIB acquisition or random access process.

System information for transmitting information on whether SBFD is supported may be system information distinguished from and transmitted separately from system information for a UE (e.g., an existing TDD UE) supporting a different version of protocol in a cell, and the SBFD-capable UE may obtain the entirety or part of the system information transmitted separately from the system information for the existing TDD UE, to determine whether SBFD is supported. If the SBFD-capable UE obtains only the system information for the existing TDD UE or system information indicating that SBFD is not supported, the SBFD-capable UE may determine that the cell (or base station) supports only TDD.

If the information on whether SBFD is supported is included in system information for a UE (e.g., an existing TDD UE) supporting a different version of protocol, the information on whether SBFD is supported may be inserted in the last part of the system information not to affect acquisition of the system information of the existing TDD UE. If the SBFD-capable UE fails to obtain the information on whether SBFD is supported, which is inserted in the last part, or obtains information indicating that SBFD is not supported, the SBFD UE may determine that the cell (or base station) supports only TDD.

If the information on whether SBFD is supported is included in system information for a UE (e.g., an existing TDD UE) supporting a different version of protocol, the information on whether SBFD is supported may be transmitted through a separate PDSCH so as not to affect acquisition of the system information of the existing TDD UE. That is, a non-SBFD-supporting UE may receive a first SIB (or SIB1) including existing TDD-related system information through a first PDSCH. An SBFD-supporting UE may receive the first SIB (or SIB) including the existing TDD-related system information through the first PDSCH, and may receive a second SIB including SBFD-related system information through a second PDSCH. The first PDSCH and the second PDSCH may be scheduled through a first PDCCH and a second PDCCH, and a cyclic redundancy code (CRC) of the first PDCCH and the second PDCCH may be scrambled with the same RNTI (e.g., SI-RNTI). A search space for monitoring the second PDCCH may be obtained from system information of the first PDSCH, and if the same is not obtained (that is, if the system information of the first PDSCH does not include information on the search space), the second PDCCH may be received in the same search space as a search space of the first PDCCH.

As described above, when the SBFD UE determines that the cell (or base station) supports only TDD, the SBFD UE may perform a random access procedure and transmit or receive a data/control signal in the same manner as the existing TDD UE.

A base station may configure a separate random access resource for an existing TDD UE or an SBFD UE (e.g., an SBFD UE supporting duplex communication and an SBFD UE supporting half-duplex communication), and transmit configuration information (e.g., control information or configuration information indicating a time-frequency resource available for a PRACH) on the random access resource to the SBFD UE through system information. The system information for transmitting information on the random access resource may be system information distinguished from and transmitted separately from system information for a UE (e.g., an existing TDD UE) supporting a different version of protocol in a cell.

The base station configures a separate random access resource for each of the SBFD-capable UE and a TDD UE supporting a different version of protocol, thereby being able to distinguish whether the TDD UE supporting the different version of protocol performs a random access or the SBFD-capable UE performs a random access. For example, the separate random access resource configured for the SBFD UE may be a resource that the existing TDD UE determines as a downlink time resource, and the SBFD-capable UE performs a random access through an uplink resource (or separate random access resource) configured in some frequencies of the downlink time resource, so that the base station may determine that the UE which has attempted the random access in the uplink resource is the SBFD-capable UE.

Alternatively, the base station may not configure a separate random access resource for the SBFD-capable UE, and may configure a common random access resource for all UEs in a cell. In this case, the configuration information on the random access resource may be transmitted to all the UEs in the cell through system information, and the SBFD-capable UE having received the system information may perform a random access on the random access resource. Thereafter, the SBFD-capable UE may complete the random access process and may proceed to an RRC connected mode for transmitting/receiving data with the cell. After the RRC connection mode, the SBFD UE may receive, from the base station, a higher layer signal or a physical signal enabling determination that a partial frequency resource of the downlink time resource is configured as an uplink resource, and thus perform an SBFD operation, for example, transmit an uplink signal in the uplink resource.

If the SBFD UE determines that the cell supports SBFD, the SBFD UE transmits, to the base station, capability information including at least one of whether the UE supports SBFD, whether the UE supports full-duplex communication or half-duplex communication, and the number of transmission or reception antennas included in (or supported by) the UE, thereby notifying the base station that the UE attempting to access is the SBFD UE. Alternatively, if supporting half-duplex communication is necessarily implemented for the SBFD UE, whether the half-duplex communication is supported may be omitted from the capability information. A report of the SBFD-capable UE on the capability information may be reported to the base station through a random access process, may be reported to the base station after completion of the random access process, or may be reported to the base station after entering the RRC connection mode for transmission or reception of the data with the cell.

The SBFD-capable UE may support half-duplex communication in which only uplink transmission or downlink reception is performed at one time like the existing TDD UE, or may support full-duplex communication in which both uplink transmission and downlink reception are performed at one time. Therefore, the SBFD-capable UE may report, to the base station through capability reporting, whether the SBFD-capable UE supports the half-duplex communication or full-duplex communication, and after the reporting, the base station may configure, for the SBFD-capable UE, whether the SBFD-capable UE is to use half-duplex communication for transmission or reception or is to use full-duplex communication for transmission or reception. If the SBFD-capable UE reports the capability for the half-duplex communication to the base station, since a duplexer generally does not exist, a switching gap for changing an RF between transmission and reception may be required in a case of operating in FDD or TDD.

FIG. 20 illustrates an example in which SBFD is operated in a TDD band of a wireless communication system to which the disclosure is applied.

FIG. 20A illustrates a case in which TDD is operated in a specific frequency band. In a cell in which the TDD is operated, a base station may transmit and receive signals including data/control information to and from an existing TDD UE or SBFD UE in a downlink slot (or symbol), an uplink slot (or symbol) 2001, and a flexible slot (or symbol), based on a configuration of TDD UL-DL resource configuration information indicating a downlink slot (or symbol) resource and an uplink slot (or symbol) resource of the TDD.

It may be assumed that a DDDSU slot format is configured according to the TDD UL-DL resource configuration information in FIG. 20. Here, "D" is a slot consisting entirely of downlink symbols, "U" is a slot consisting entirely of uplink symbols, and "S" is a slot that is neither "D" nor "U", that is, a slot including a downlink symbol, an uplink symbol, or a flexible symbol. Here, for the sake of convenience, S may be assumed to include 12 downlink symbols and two flexible symbols. Also, the DDDSU slot format may be repeated according to the TDD UL-DL resource configuration information. That is, a repetition periodicity of a TDD configuration is 5 slots (5 ms for 15kHz SCS, 2.5ms for SCS of 30kHz, etc.)

Next, FIG. 20B, FIG. 20C, and FIG. 20D illustrate a case in which SBFD is operated together with TDD in a specific frequency band.

Referring to FIG. 20B, some bands among the cell's frequencies may be configured for the UE as a frequency band 2010 in which uplink transmission is possible. This band may be referred to as an uplink subband (UL subband). In addition, the uplink subband (UL subband) may be applied to all symbols of all slots. The UE may transmit uplink channels or signals scheduled for all symbols 2012 within the subband (UL subband). However, the UE may not be able to transmit an uplink channel or signal in a band other than the subband (UL subband).

Referring to FIG. 20C, a UE may be configured with a partial band of frequency of a cell, as a frequency band 2020 where uplink transmission is possible, and may be configured with a time domain in which the frequency band is activated. Here, this frequency band may be referred to as an uplink subband (UL subband). In FIG. 20C, the UL subband may be deactivated in the first slot, and may be activated in the remaining slots. Therefore, the UE may transmit an uplink channel or signal in the uplink subband (UL subband) 2022 of the remaining slots. Accordingly, although the uplink subband (UL subband) is activated in units of slots here, the activation may be configured in units of symbols.

Referring to FIG. 20D, a UE may be configured with a time-frequency resource in which uplink transmission is possible. The UE may receive a configuration of one or more time-frequency resources as a time-frequency resource available for uplink transmission. For example, a partial frequency band 2032 of a first slot and a second slot may be configured as a time-frequency resource available for uplink transmission. In addition, a partial frequency band 2033 of a third slot and a partial frequency band 2034 of a fourth slot may be configured as time-frequency resources on which uplink transmission is possible.

In the following description, a time-frequency resource available for uplink transmission within a downlink symbol or slot may be referred to as an SBFD resource. In addition, a symbol in which an uplink subband is configured within a downlink symbol may be referred to as an SBFD symbol. In addition, a time-frequency resource available for downlink reception within an uplink symbol or slot may be referred to as an SBFD resource. In addition, a symbol in which a downlink subband is configured within an uplink symbol may be referred to as an SBFD symbol.

For the sake of convenience, in this disclosure, a band in which downlink channel or signal reception is possible, excluding an uplink subband, is referred to as a downlink subband. The UE may configure at most one uplink sub-band for one symbol, and may configure at most two downlink sub-bands. For example, the UE may receive a configuration of one of {uplink subband, downlink subband}, {downlink subband, uplink subband}, and {first downlink subband, uplink subband, second downlink subband} in the frequency domain.

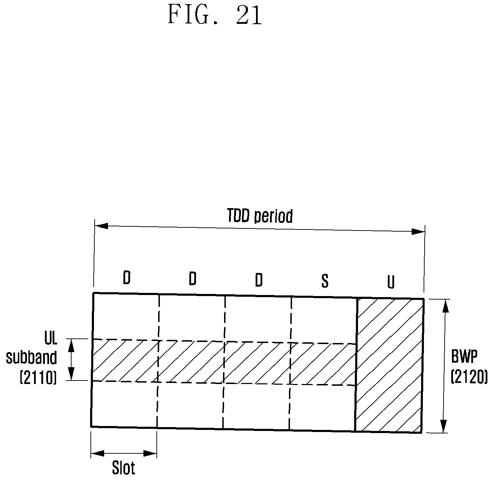

FIG. 21 illustrates an SBFD configuration according to an embodiment of the disclosure.

Referring to FIG. 21, a UE may receive a configuration of an uplink symbol, a downlink symbol, or a flexible symbol according to a TDD configuration. Here, all symbols of a "D" slot are downlink symbols. All symbols of a "U" slot are uplink symbols. An "S" slot is a slot that is neither a "D" slot nor a "U" slot. The UE may receive a configuration of a UL BWP 2120. Furthermore, the UE may receive a configuration of a UL subband 2110 within a DL symbol. In addition, the UE may receive a configuration of a slot or symbol to which the UL subband 2110 is to be applied. Referring to FIG. 21, the UL subband may be applied only to some symbols among DL symbols having a TDD periodicity. DL symbols of a second slot and a third slot may have a UL subband applied, but the other DL symbols may not have a UL subband applied. Here, an SBFD symbol may represent a symbol to which the UL subband is applied.

A base station may configure a guard frequency interval between a DL subband and a UL subband for the UE. If the guard frequency interval is configured for the UE, frequency resources in the frequency domain may be divided into a UL subband, a guard frequency interval, and a DL subband. For the purpose of explaining this embodiment, it is assumed that the guard frequency interval is included in the UL subband. That is, in the following description, the expression "if "X" overlaps a UL subband" may be interpreted as "if "X" overlaps a UL subband or a guard frequency interval". In addition, the expression "if "X" overlaps a UL subband" may be interpreted as "if "X" does not overlap a DL subband".

In addition, the expression "if "X" does not overlap a UL subband" may be interpreted as "if "X" does not overlap a UL subband and a guard frequency interval". In addition, the expression "if "X" does not overlap a UL subband" may be interpreted as "if "X" overlaps a DL subband".

Hereinafter, embodiments of the disclosure will be described in detail in conjunction with the accompanying drawings. The contents of the disclosure may be applied to FDD, TDD, and XDD (and/or SBFD, full duplex) systems. As used herein, upper signaling (or upper layer signaling) is a method for transferring signals from a base station to a UE by using a downlink data channel of a physical layer, or from the UE to the base station by using an uplink data channel of the physical layer, and may also be referred to as "RRC signaling", "PDCP signaling", or "medium access control (MAC) control element (MAC CE)".

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through several embodiments, but they are not independent of each other, and one or more embodiments may be applied simultaneously or in combination.

Hereinafter, for the sake of descriptive convenience, a cell, a transmission point, a panel, a beam, and/or a transmission direction which can be distinguished through an upper layer/L1 parameter such as a TCI state or spatial relation information, a cell ID, a TRP ID, or a panel ID may be described as a TRP, a beam, or a TCI state as a whole. Therefore, during actual application, a TRP, a beam, or a TCI state may be appropriately replaced with one of the above terms.

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed for the sake of descriptive convenience that NC-JT case refers to a case in which the UE receives a PDSCH to which cooperative communication is applied, based on conditions similar to those described above.

Hereinafter, embodiments of the disclosure will be described in detail in conjunction with the accompanying drawings. In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the following description, embodiments of the disclosure will be described in connection with 5G systems by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. The contents of the disclosure may be applied to FDD, TDD, and XDD (or SBFD, full duplex) systems.

Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, higher layer signaling may refer to signaling corresponding to at least one signaling among the following signaling, or a combination of one or more thereof.

- Master information block (MIB)

- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.

- Physical downlink control channel (PDCCH)
- Downlink control information (DCI)
- UE-specific DCI
- Group common DCI
- Common DCI
- Scheduling DCI (for example, DCI used for the purpose of scheduling downlink or uplink data)
- Non-scheduling DCI (for example, DCI not used for the purpose of scheduling downlink or uplink data)
- Physical uplink control channel (PUCCH)
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

As used herein, the term "slot" may generally refer to a specific time unit corresponding to a transmit time interval (TTI), may specifically refer to a slot used in a 5G NR system, or may refer to a slot or a subframe used in a 4G LTE system.

In the following description of the disclosure, particular signals/channels being simultaneously transmitted and received may not necessarily mean that the particular signals and/or channels need to be transmitted and received at the same time point. For example, particular signals/channels being simultaneously transmitted and received may include that the particular signals/channels are generated based on the same (or one) information/signal/channel. For example, particular signals/channels being simultaneously transmitted and received may include that the particular signals/channels are transmitted and received within the same (or one) time interval/resource.

Hereinafter, in the disclosure, the examples described above will be explained through multiple embodiments. However, the embodiments are not independent, and one or more embodiments are applicable simultaneously or in combination.

<First embodiment: Method for configuring and indicating PUSCH precoding frequency resource unit>

According to an embodiment of the disclosure, a frequency resource unit of precoding (frequency domain precoding resource unit) applicable when a UE performs PUSCH transmission is described. The embodiment may operate in combination with other embodiments. For example, the definition of a frequency resource unit of precoding applicable when performing PUSCH transmission, which is defined in the first embodiment, may be identically applied in another embodiment.

The frequency resource unit of precoding applicable when the UE performs PUSCH transmission may be broadly divided into two types.

A first type is wideband, and the entire frequency resource scheduled to the UE for PUSCH transmission may be a frequency resource unit of precoding. That is, the UE may apply identical precoding to the entire frequency resource region in which the PUSCH is transmitted.

As a second type, a frequency resource scheduled to the UE for PUSCH transmission are divided into two or more portions, and a frequency resource unit corresponding to each portion (e.g., a frequency resource unit may be configured by one or more RBs) may be a frequency resource unit of precoding. That is, the UE may apply different precoding to different frequency resources (or different frequency resource units) of a single PUSCH transmission when performing the PUSCH transmission.

More specifically, the UE may consider a combination of at least one of the following methods with respect to a frequency resource unit of precoding applicable when performing PUSCH transmission. For example, based on a combination of at least one of the following methods, a frequency resource unit of PUSCH precoding is configured for the UE by the base station, and/or the UE may determine the frequency resource unit of precoding. In the disclosure, a frequency resource unit of PUSCH precoding that is not wideband may be understood as a subband, but is not limited thereto.

Unless otherwise specified, in the description of an embodiment of the disclosure, indicators for respective frequency resource units in DCI may be applied to the respective frequency resource units in ascending order of indices, but are not limited thereto. For example, a first TPMI field and/or a first SRI field in the DCI may be applied to a first frequency resource unit, and a second TPMI field and/or a second SRI field in the DCI may be applied to a second frequency resource unit.

[Method 1-1]

A frequency resource unit of PUSCH precoding may be configured for the UE by the base station through higher layer signaling. For example, at least one of a wideband or a value of the number of RBs corresponding to an arbitrary natural number such as 2, 4, 6, 8, 16, 32, or 64 may be configured as a frequency resource unit of PUSCH precoding for the UE by the base station through higher layer signaling. For example, the number of RBs, which is not wideband, configured through higher layer signaling may be a configuration for a subband (e.g., a size of a subband).

If a corresponding configuration value is wideband, the UE may consider the entire frequency resource scheduled by the base station for PUSCH transmission as a frequency resource unit of PUSCH precoding.

If a corresponding configuration value is X (an arbitrary natural number such as 2, 4, 6, 8, 16, 32, or 64), the UE may apply, as a frequency resource unit of PUSCH precoding, the frequency resource scheduled by the base station for PUSCH transmission in units of X RBs. For example, if a corresponding configuration value is 2, the UE may apply, as a frequency resource unit of PUSCH precoding, the frequency resource scheduled by the base station for PUSCH transmission in units of 2 RBs. In this case, the frequency resource unit of PUSCH precoding may be applied with reference to common resource block #0 (CRB0) or may be considered starting from a starting RB of a bandwidth part. If the frequency resource unit of PUSCH precoding is applied with reference to CRB0, depending on how far a starting RB of an active bandwidth part scheduled for PUSCH transmission is from CRB0, when the PUSCH transmission includes a lowest-index RB in the bandwidth part (i.e., a first physical resource block (PRB) within the bandwidth part) or a highest-index RB (i.e., a last PRB within the bandwidth part), the UE may apply identical precoding to RBs less than or equal to the frequency resource unit of PUSCH precoding. If the frequency resource unit of PUSCH precoding is considered starting from a starting RB of a bandwidth part, in a case where the frequency resource unit of PUSCH precoding is not a divisor of a size of the bandwidth part, when the PUSCH transmission includes a highest-index RB in the bandwidth part (i.e., a last PRB within the bandwidth part), identical precoding may be applied to RBs less than or equal to the frequency resource unit of PUSCH precoding.

When [Method 1-1] is used, if a frequency resource unit of PUSCH precoding is not wideband, the number of frequency resource units of PUSCH precoding may be semi-statically determined according to a size (e.g., the size may be expressed as the number of RBs) of each bandwidth part configured for the UE and the frequency resource unit of PUSCH precoding (e.g., the unit may be expressed as the number of RBs corresponding to a particular natural number such as 2 RBs). In this case, the UE may expect that a TPMI field and/or an SRI field exists in a DCI format 0_1 or 0_2 receivable from the base station within a particular bandwidth part, in a number corresponding to the number of frequency resource units of PUSCH precoding. In this case, if multiple TPMI fields and/or SRI fields in a DCI format 0_1 or 0_2 received by the UE indicate different pieces of information, the UE may perform PUSCH transmission by applying the pieces of information indicated through the DCI to frequency resource units of PUSCH precoding, respectively. As another method, if multiple TPMI fields and/or SRI fields in a DCI format 0_1 or 0_2 received by the UE all indicate the same information, the UE may perform PUSCH transmission by applying the same information to the entire frequency resource allocated for the PUSCH transmission. That is, when subband-specific indicators in DCI all have an identical value, the same information may be applied to the entire frequency resource allocated for PUSCH transmission, and this may be understood as precoding for wideband. That is, dynamic switching between wideband precoding and subband precoding may be supported by DCI, and this may depend on whether all subband-specific indicators in the DCI have an identical value. For example, when all subband-specific indicators have the identical value, wideband precoding may be applied, and otherwise, subband precoding may be applied. This may be applied not only to this embodiment but also identically applied in the description of the disclosure.

[Method 1-2]

The UE may determine a size of a frequency resource unit of PUSCH precoding according to a size of a bandwidth part configured for the UE. The UE and the base station may define multiple ranges of bandwidth part size, and may determine different sizes of frequency resource units of PUSCH precoding for respective ranges. Multiple bandwidth part sizes may be predefined/configured between the UE and the base station, and for each range, a different size and/or a different number of frequency resource units of PUSCH precoding may be determined.

For example, as shown in [Table 34] below, four types of ranges of bandwidth part size may be defined, and the UE may determine a size of a frequency resource unit of PUSCH precoding for each range. In Table 34 below, a size of a bandwidth part is expressed as the number of RBs, and each Configuration corresponds to the number of RBs that is a size of a frequency resource unit of PUSCH precoding corresponding to a corresponding range of bandwidth part size. This is merely an example, and the disclosure is not limited thereto.

In this case, one of the second column to the fourth column (Configurations 1-3) in [Table 34] below may be configured for the UE by the base station through higher layer signaling, and the UE may determine a size of a frequency resource unit of PUSCH precoding according to the configuration and a bandwidth part size. A column and/or a configuration index may be indicated through higher layer signaling, but the disclosure is not limited thereto.

As another method, instead of selecting one of the second column to the fourth column in [Table 34] below through higher layer signaling as described above, one of the second column to the fourth column may be fixedly defined without a higher layer signaling configuration. For example, the same configuration may be applied to all ranges of bandwidth part size, and/or at least one range of bandwidth part size may be subject to application of a configuration different from that for the other ranges of bandwidth part size. For example, when a bandwidth part size is 30 RBs, the UE and the base station may fixedly use the second column (Configuration 1) to define a frequency resource unit of PUSCH precoding, and in this case, the UE may determine the frequency resource unit of PUSCH precoding to be 4 RBs within the bandwidth part. In this case, [Table 34] below is merely an example, and [Method 1-2] described above may not be limited thereto.

[Table 34]

| Bandwidth part size | Configuration 1 | Configuration 2 | Configuration 3 |
|---|---|---|---|
| 1-36 | 4 | 8 | 16 |
| 37-72 | 8 | 16 | 32 |
| 73-144 | 16 | 32 | 64 |
| 145-275 | 32 | 64 | 128 |

When defining a frequency resource unit of PUSCH precoding within a corresponding bandwidth part, the UE may apply same with reference to CRB0 or may consider same starting from a starting RB of the bandwidth part. If the UE applies the frequency resource unit of PUSCH precoding with reference to CRB0, depending on how far a starting RB of an active bandwidth part scheduled for PUSCH transmission is from CRB0, when the PUSCH transmission includes a lowest-index RB in the bandwidth part (i.e., a PRB within the bandwidth part) or a highest-index RB (i.e., a last PRB within the bandwidth part), the UE may apply identical precoding to RBs less than or equal to the frequency resource unit of PUSCH precoding. If the UE considers the frequency resource unit of PUSCH precoding starting from the starting RB of the bandwidth part, in a case where the frequency resource unit of PUSCH precoding is not a divisor of a size of the bandwidth part, when the PUSCH transmission includes a highest-index RB in the bandwidth part (i.e., a last PRB within the bandwidth part), identical precoding may be applied to RBs less than or equal to the frequency resource unit of PUSCH precoding.

When [Method 1-2] is used, the UE may determine a frequency resource unit of PUSCH precoding according to a size of a particular bandwidth part, and may determine the number of frequency resource units of PUSCH precoding within the bandwidth part. In this case, the UE may expect that a TPMI field and/or an SRI field exists in a DCI format 0_1 or 0_2 receivable from the base station within a particular bandwidth part, in a number corresponding to the number of frequency resource units of PUSCH precoding. In this case, if multiple TPMI fields and/or SRI fields in a DCI format 0_1 or 0_2 received by the UE indicate different pieces of information, the UE may perform PUSCH transmission by applying the pieces of information indicated through the DCI to frequency resource units of PUSCH precoding, respectively. As another method, if multiple TPMI fields and/or SRI fields in a DCI format 0_1 or 0_2 received by the UE all indicate the same information, the UE may perform PUSCH transmission by applying the same information to the entire frequency resource allocated for the PUSCH transmission.

[Method 1-3]

A maximum number of frequency resource units of PUSCH precoding may be configured for the UE by the base station through higher layer signaling, and the UE may expect that multiple TPMI fields and/or multiple SRI fields corresponding to the maximum number exist in DCI. In addition, an actual number of frequency resource units of PUSCH precoding applicable to a PUSCH scheduled through the DCI may be indicated to the UE. Accordingly, the UE may interpret multiple TPMI fields and/or multiple SRI fields corresponding to the actual number of frequency resource units indicated to the UE, and may perform PUSCH transmission by individually applying precoding to each frequency resource unit of PUSCH precoding.

For example, if 4 is configured for the UE as a maximum number of frequency resource units of PUSCH precoding by the base station, the UE may expect that a total of four TPMI fields and/or four SRI fields exist in DCI. The number of frequency resource units to be actually used among a maximum of four frequency resource units may be indicated to the UE through the DCI, and such indication may be provided through an explicit additional field in the DCI, and/or implicitly through multiple TPMI fields and/or multiple SRI fields.

- If the number of frequency resource units to be actually used among all frequency resource units is indicated to the UE through a new field explicitly added in DCI, the UE may interpret information of TPMI fields and/or SRI fields corresponding to the indicated number, and may apply the interpreted information to a PUSCH transmission scheduled through same DCI. That is, TPMI fields and/or SRI fields in DCI may be applied to a PUSCH transmission scheduled by the DCI. In this case, the UE may use TPMI fields and/or SRI fields starting from a first TPMI field and/or a first SRI field, in a number corresponding to the number of frequency resource units to be actually used. The UE may expect that remaining TPMI fields and/or SRI fields having reserved values are received, may expect that 0 is indicated as the values of all bits, or may ignore the remaining TPMI fields and/or SRI fields.
- If the number of frequency resource units to be actually used among all frequency resource units is indicated to the UE through existing fields in DCI (e.g., multiple TPMI fields and/or multiple SRI fields), the UE may expect that codepoints other than reserved codepoints are indicated for TPMI fields and/or SRI fields corresponding to the number of frequency resource units to be actually used, starting from a first TPMI field and/or a first SRI field. The UE may expect that remaining TPMI fields and/or SRI fields having reserved values are received.

When [Method 1-3] is used, a maximum number of frequency resource units of PUSCH precoding may be semi-statically configured for the UE. In this case, the UE may expect that a TPMI field and/or an SRI field exists in a DCI format 0_1 or 0_2 receivable from the base station within a particular bandwidth part, in a number corresponding to the maximum number. In this case, if multiple TPMI fields and/or SRI fields in a DCI format 0_1 or 0_2 received by the UE indicate different pieces of information, the UE may perform PUSCH transmission by applying the pieces of information indicated through the DCI to frequency resource units of PUSCH precoding, respectively. As another method, if multiple TPMI fields and/or SRI fields in a DCI format 0_1 or 0_2 received by the UE all indicate the same information, the UE may perform PUSCH transmission by applying the same information to the entire frequency resource allocated for the PUSCH transmission. Alternatively, when the number of frequency resource units to be actually used among all frequency resource units is indicated to the UE through a new field that may be explicitly included in a DCI format 0_1 or 0_2 received by the UE, if the corresponding value is 1, the UE may perform PUSCH transmission by identically applying, to the entire frequency resource allocated for the PUSCH transmission, information obtainable through a first TPMI field and/or a first SRI field.

[Method 1-4]

The UE may determine a size of a frequency resource unit allocated for PUSCH transmission according to a frequency resource allocation scheme for the PUSCH transmission.

- As one detailed method, the UE may determine the number and a size of frequency resource units allocated for PUSCH transmission according to whether frequency resource allocation for the PUSCH transmission is continuous or discontinuous.

  ■ If continuous frequency resource allocation for PUSCH transmission is scheduled to the UE, the UE may apply identical precoding to the entire frequency resource. That is, the number of frequency resource units may be 1, and a size of the frequency resource unit may correspond to a frequency resource allocation amount for the PUSCH transmission. That is, when continuous frequency resource allocation for PUSCH transmission is scheduled, wideband precoding may be applied.
  ■ If discontinuous frequency resource allocation for PUSCH transmission is scheduled to the UE, the UE may apply individual precoding to each group of continuous frequency resources in the entire frequency resource allocation region. For example, when a first RB to a fifth RB and a tenth RB to a twentieth RB within a particular bandwidth part are scheduled to the UE as frequency resource allocation regions, the UE may apply first precoding to the first RB to the fifth RB and may apply second precoding to the eleventh RB to the twentieth RB, and may have a degree of freedom such that the first precoding and the second precoding are the same as or different from each other. That is, the number of frequency resource units may be determined to be the number of continuous frequency resource portions among the entire frequency resource allocation, and a size of a frequency resource unit may be determined to be a size of each continuous frequency resource portion. In the above example, the number of frequency resource units may be 2, and the size of the frequency resource unit may be 5 RBs for a first continuous frequency resource portion to which the first precoding is applicable and 10 RBs for a second continuous frequency resource portion to which the second precoding is applicable.

- As another detailed method, the UE may determine the number and a size of frequency resource units allocated for PUSCH transmission according to a frequency resource allocation amount for the PUSCH transmission. The UE may be notified of one or more reference values for a frequency resource allocation amount from the base station through at least one combination of higher layer signaling, MAC-CE, and L1 signaling, or may use one or more values fixedly defined in a specification. As one example, a total of three reference values for a frequency resource allocation amount may be available, and the reference values may be 36 RBs, 72 RBs, and 144 RBs considered in the first column of [Table 34] described above. In this case, if the UE receives frequency resource allocation information indicating RBs less than 36 RBs for PUSCH transmission, the UE may consider 1 as the number of frequency resource units. If the UE receives frequency resource allocation information for PUSCH transmission, which corresponds to the number of RBs equal to or greater than 36 RBs or smaller than 72 RBs, the UE may consider 2 as the number of frequency resource units. If the UE receives frequency resource allocation information indicating RBs more than or equal to 72 RBs or less than 144 RBs for PUSCH transmission, the UE may consider 4 as the number of frequency resource units. If the UE receives frequency resource allocation information indicating RBs more than or equal to 144 RBs or less than 275 RBs for PUSCH transmission, the UE may consider 8 as the number of frequency resource units.

For [Method 1-4], the UE may be notified of a maximum number of frequency resource units from the base station through at least one combination of higher layer signaling, MAC-CE, and L1 signaling, or may use a value fixedly defined in a specification. The UE may not expect to receive, from the base station, frequency resource allocation information from which the number of frequency resource units exceeding the maximum number of frequency resource units is derived. In this case, the UE may expect that a TPMI field and/or an SRI field exists in a DCI format 0_1 or 0_2 receivable from the base station within a particular bandwidth part, in a number corresponding to the maximum number. According to the number of frequency resource units determined through the frequency resource allocation information, the UE may interpret, starting from a first TPMI field and/or a first SRI field, a number of TPMI fields and/or SRI fields corresponding to the number of frequency resource units, and may apply the TPMI fields and/or SRI fields to the frequency resource units, respectively. For example, when a maximum number of frequency resource units is 4 and the number of frequency resource units determined based on the frequency resource allocation information is 2, the UE may expect that four TPMI fields and/or four SRI fields exist in DCI format 0_1 or 0_2, and may apply respective pieces of information obtainable through first and second TPMI fields and/or first and second SRI fields thereamong to first and second frequency resource units, respectively.

The UE may be notified to use at least one combination of [Method 1-1] to [Method 1-4] described above from the base station through at least one combination of higher layer signaling, MAC-CE, and L1 signaling, or at least one combination may be fixedly defined in a specification. For example, the UE may define, as a method for determining a frequency resource unit of PUSCH precoding, [Method 1-1] described above as a method fixed in a specification. As another example, the UE may be notified from the base station of one of [Method 1-1],[Method 1-3], or [Method 1-4] described above through at least one combination of higher layer signaling, MAC-CE, and L1 signaling. The above description may merely correspond to an example, and other combinations may not be excluded.

In addition, if a method in which one or more of [Method 1-1] to [Method 1-4] described above are combined is defined in a specification so as to allow the UE to use the method, when the UE is not notified of the combined method from the base station through at least one combination of higher layer signaling, MAC-CE, and L1 signaling, the UE may use another method in which one or more of [Method 1-1] to [Method 1-4] described above are combined.

The UE may transmit, to the base station, a UE capability report having the meaning that the UE supports at least one of [Method 1-1] to [Method 1-4] described above, and corresponding higher layer signaling at the base station may exist to support a corresponding function, or the higher layer signaling may not exist. For example, the corresponding higher layer signaling may be related to configuration information of the base station corresponding to the UE capability report, but is not limited thereto.

If higher layer signaling corresponding to a UE capability reported by the UE exists, when the higher layer signaling is not configured by the base station, the UE may determine a frequency resource unit of PUSCH precoding based on at least one combination of [Method 1-1] to [Method 1-4], or may use at least one combination of [Method 1-1] to [Method 1-4] which is fixedly defined. In addition, if higher layer signaling corresponding to a UE capability reported by the UE does not exist, the UE may expect that the base station is to perform an operation corresponding to the UE capability when the UE has reported the UE capability.

With respect to [Method 1-1] to [Method 1-4] as described above, if the UE accesses a cell operating in SBFD described above, the UE may be notified from a base station of at least one combination of higher layer signaling, MAC-CE, and L1 signaling for an uplink subband.

In this case, the UE may consider, for a cell operating in SBFD and a cell not operating in SBFD, at least one combination of [Method 1-1] to [Method 1-4] described above for determining a frequency resource unit of PUSCH precoding, the combinations being the same as or different from each other, respectively. That is, for a cell operating in SBFD and a cell not operating in SBFD, a method for determining a frequency resource unit of PUSCH precoding may be applied identically or differently.

In addition, within a cell operating in SBFD, the UE may consider, for an SBFD slot or symbol and for an uplink slot or symbol, at least one combination of [Method 1-1] to [Method 1-4] described above for determining a frequency resource unit of PUSCH precoding, the combinations being the same as or different from each other, respectively. That is, for different time resources within the cell operating in SBFD, a method for determining a frequency resource unit of PUSCH precoding may be applied identically or differently.

Unless otherwise specified, in the description of an embodiment of the disclosure described above, multiple SRS resources corresponding to multiple SRI fields in DCI may be included in the same (or a single) SRS resource set. For example, a precoding operation and/or an mTRP operation as in an embodiment of the disclosure may be distinguished according to the number of SRS resource sets, the usage of which is configured as codebook or non-codebook. For example, the operations may be distinguished as follows. This is merely an example, and the disclosure is not limited thereto.

- For example, when the number of SRS resource sets is 1, an operation may be performed as single-TRP. Here, when frequency resource unit-based precoding is not possible (e.g., when only the above-described wideband precoding is possible), if a usage of the SRS resource set is codebook, the number of SRI fields and the number of TPMI fields may each be 1, and if the usage of the SRS resource set is non-codebook, the number of SRI fields may be 1.
- For example, when the number of SRS resource sets is 1 and frequency resource unit-based precoding is possible, according to a frequency resource unit and/or a configuration of frequency resource unit precoding (e.g., the number of frequency resource units), if the usage of the SRS resource set is codebook, the number of SRI fields may be 1 and the number of TPMI fields may be multiple. Here, one SRI field may correspond to an SRS resource set, the usage of which is codebook. For example, if the usage of the SRS resource set is non-codebook, the number of SRI fields may be multiple, and the multiple SRI fields may correspond to one SRS resource set, the usage of which is configured as non-codebook.
- For example, when the number of SRS resource sets is 2, an operation may be performed as M-TRP. Here, if frequency resource unit-based precoding is not possible (e.g., when only the above-described wideband precoding is possible), multiple SRI fields may be related to M-TRP. For example, if the usage is codebook, two SRI fields (and two TPMI fields) may correspond to first and second SRS resource sets, respectively. For example, if the usage is non-codebook, two SRI fields may correspond to first and second SRS resource sets, respectively.
- For example, when the number of SRS resource sets is 2 and frequency resource unit-based precoding is possible, according to a frequency resource unit and/or a configuration of frequency resource unit precoding (e.g., the number of frequency resource units), if the usage of the SRS resource sets is codebook, the number of SRI fields may be 2 and the number of TPMI fields may be multiple. Here, the two SRI fields may correspond to first and second SRS resource sets, respectively. For example, if the usage of the SRS resource sets is non-codebook, the number of SRI fields may be multiple. Here, among the multiple SRI fields, a first half of the SRI fields may correspond to a first SRS resource set, and a second half of the SRI fields may correspond to a second SRS resource set.

<Second embodiment: Non-codebook-based PUSCH transmission scheme considering subband precoding>

According to an embodiment of the disclosure, a non-codebook-based PUSCH transmission scheme of a UE is described, based on a determined size and number of frequency resource units of PUSCH precoding described above. The embodiment may operate in combination with other embodiments. For example, the definition of a frequency resource unit of precoding applicable when performing PUSCH transmission, which is defined in the first embodiment, may be identically applied in another embodiment, and may be identically applied also in a non-codebook-based PUSCH transmission scheme to be considered in the second embodiment.

When the UE determines the number of PUSCH precoding frequency resource units to be 1 and applies identical precoding to the entire frequency resource for PUSCH transmission, a corresponding precoding method may be named wideband precoding. In addition, when the UE determines the number of PUSCH precoding frequency resource units to be 2 or more and applies individual precoding to two or more different portions of the frequency resource for PUSCH transmission, a corresponding precoding method may be named subband precoding.

More specifically, the UE may consider at least one combination of the following methods with respect to a non-codebook-based PUSCH transmission scheme considering subband precoding.

[Method 2-1]

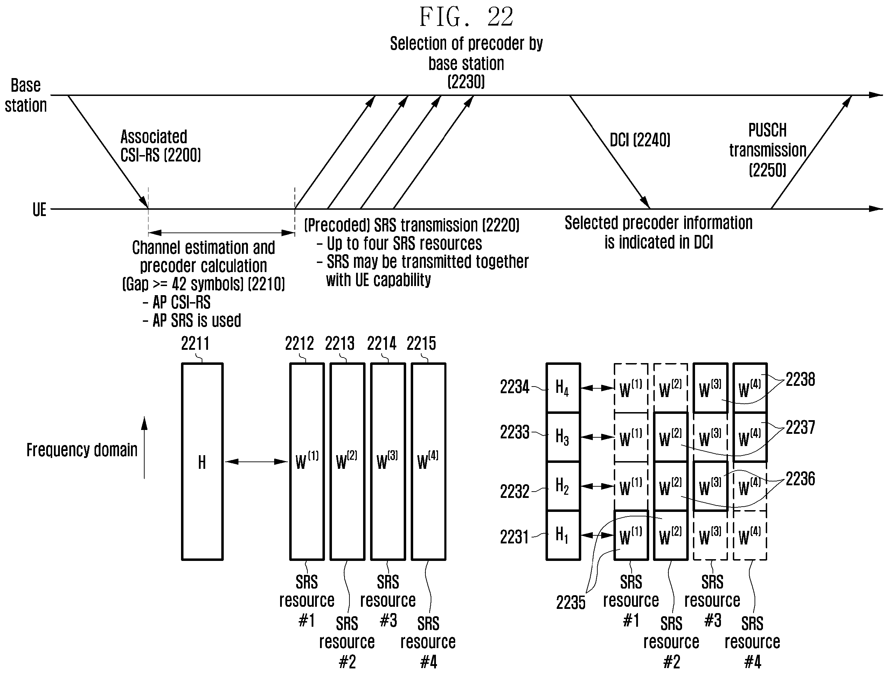

FIG. 22 is a diagram illustrating one method of a non-codebook-based PUSCH transmission process considering subband precoding between a base station and a UE according to an embodiment of the disclosure.

A UE may receive an associated CSI-RS from a base station (2200). The UE may estimate a channel between the base station and the UE, based on the associated CSI-RS, and then based on the channel estimation, may calculate a precoder to be used for non-codebook-based PUSCH transmission (2210 and 2211). At this time, the UE may calculate an identical precoder for the entire frequency resource region for which the UE intends to calculate a precoder (2212, 2213, 2214, and 2215). That is, the UE may calculate a wideband precoder.

Thereafter, the UE may apply layer-specific vectors of a calculated entire precoding matrix to respective SRS resources and transmit the SRS resources to the base station. According to a UE capability report of the UE and a higher layer signaling configuration of the base station (or one or more of the UE capability report of the UE and the higher layer signaling configuration of the base station), a layer value of the entire precoding matrix and the number of SRS resources may be determined. Accordingly, the UE may apply respective layer-specific vectors of an entire precoding matrix composed of up to four layers to up to four SRS resources, respectively, and transmit, to the base station, one or more SRS resources to which the precoding matrix calculated by the UE has been applied (2212, 2213, 2214, and 2215). For example, the UE may apply $W^{(1)}$ 2212 to $W^{(4)}$ 2215 to a first SRS resource to a fourth SRS resource, respectively, and in this case, $W^{(k)}$ may be a precoding vector corresponding to a k-th layer in the precoding matrix calculated by the UE.

The UE may report, to the base station as a UE capability, a maximum number of SRS resources simultaneously transmittable among one or more SRS resources to which the precoding matrix has been applied (2220). If the associated CSI-RS is an aperiodic CSI-RS and an SRS resource in an SRS resource set, the usage of which is configured as non-codebook, is an aperiodic SRS, the UE may not expect that a time interval from a time point at which the associated CSI-RS is received to a time point at which one or more SRS resources to which precoding has been applied are transmitted is smaller than 42 symbols. That is, if the associated CSI-RS is an aperiodic CSI-RS and an SRS resource in an SRS resource set, the usage of which is configured as non-codebook, is an aperiodic SRS, the UE may use a time corresponding to at least 42 symbols to estimate a channel based on the associated CSI-RS, calculate a precoder, apply precoding to the SRS resource, and transmit the SRS resource (2210).

The base station that has received one or more SRS resources to which precoding has been applied may determine, for each PUSCH precoding frequency resource unit, a combination of SRS resources that is determined to have the best reception performance, and a combination of precoders applied to the selected one or more SRS resources may be determined as precoders of the UE for non-codebook-based PUSCH transmission in a corresponding PUSCH precoding frequency resource unit (2230).

For example, the base station may determine, to be 2, a rank value of non-codebook-based PUSCH transmission to be scheduled to the UE. The base station may determine $W^{(1)}$ and $W^{(2)}$ 2235, $W^{(2)}$ and $W^{(3)}$ 2236, $W^{(2)}$ and $W^{(4)}$ 2237, and $W^{(3)}$ and $W^{(4)}$ 2238 as combinations of precoders applicable to $H_1$ 2231, $H_2$ 2232, $H_3$ 2233, and $H_4$ 2234 that are subband channels corresponding to four PUSCH precoding frequency resource units, respectively.

That is, even if a precoder calculated by the UE, applied to an SRS resource, and then transmitted is identically calculated for the entire frequency resource region for which the UE intends to calculate a precoder, the base station may schedule PUSCH transmission based on subband precoding to the UE by selecting a different combination of precoders for each PUSCH transmission frequency resource unit.

At this time, the base station may determine a combination of one or more SRS resources such that a rank value is the same for all PUSCH precoding frequency resource units. The same or different SRI for each PUSCH precoding frequency resource unit may be indicated to the UE by the base station (2240). A method by which the base station indicates an SRI through DCI may be as follows. For example, at least one combination of the following methods may be used.

**[0370]** - [SRI indication method 2-1-1] The UE may expect that multiple SRI fields are included in DCI format 0_1 and 0_2. At this time, each of the multiple SRI fields may include rank information to indicate a combination for one or more SRS resources. If N SRS resources are configured in an SRS resource set, the usage of which is configured as non-codebook, a bit length of each of all SRI fields may be a bit length capable of representing the total number of cases for selecting one SRS resource among the N SRS resources to the total number of cases for selecting N SRS resources among the N SRS resources. Accordingly, the bit length may be N bits, which is a bit length capable of representing $2^N-1$ codepoints.

- [SRI indication method 2-1-2] The UE may expect that multiple SRI fields are included in DCI format 0_1 and 0_2. At this time, among the multiple SRI fields, a first SRI field may include rank information to indicate a combination for one or more SRS resources, and the remaining SRI fields may indicate, without rank information, a combination of one or more SRS resources. If N SRS resources are configured in an SRS resource set, the usage of which is configured as non-codebook, a bit length of the first SRI field may be a bit length capable of representing the total number of cases for selecting one SRS resource, two SRS resource, ...and N SRS resources among the N SRS resources. Accordingly, the bit length may be N bits, which is a bit length capable of representing $2^N-1$ codepoints. Based on the rank information indicated by the first SRI field, under an assumption that a rank value is the same for all PUSCH precoding frequency resource units, the remaining SRI fields other than the first SRI field may have a bit length capable of representing the number of cases for selecting one or more SRS resources by assuming the rank value indicated by the first SRI field. If two SRS resources among the N SRS resources are indicated through the first SRI field, a rank may be 2, and the remaining SRI fields may have a bit length capable of representing the number of cases for selecting a combination of two SRS resources among the N SRS resources by assuming the rank value as two. At this time, since a rank value that may be indicated through the first SRI field may dynamically change, each of the remaining SRI fields may have a bit length capable of representing a maximum value of the number of cases for selecting a combination of SRS resources corresponding to an arbitrary rank among the N SRS resources by considering all rank values. That is, a bit length of each of the remaining SRI fields other than the first SRI field may be $\left\lceil \log_2 \binom{N}{k} \right\rceil$, where k may be a value, among values available as a rank, which maximizes $\binom{N}{k}$ or $\left\lceil \log_2 \binom{N}{k} \right\rceil$. In other words, the bit length of each of the remaining SRI fields other than the first SRI field may be $\left\lceil \log_2 \left( \max_{k \in \{1,2,...,\min\{L_{max},N_{SRS}\}\}} \binom{N_{SRS}}{k} \right) \right\rceil$, where $N_{SRS}$ is the number of SRS resources, and $L_{max}$ may be a maximum number of layers.

- [SRI indication method 2-1-3] The UE may expect that one rank indication field and multiple SRI fields are included in DCI format 0_1 and 0_2. The UE may expect that a rank value is indicated through the rank indication field. Each of the multiple SRI fields, under an assumption that a rank value is the same for all PUSCH precoding frequency resource units, may have a bit length capable of representing the number of cases for selecting one or more SRS resources by assuming the rank value indicated by the rank indication field. If the rank indicated through the rank indication field is two, when N SRS resources are configured in an SRS resource set, the usage of which is configured as non-codebook, each of multiple SRI fields may have a bit length capable of representing the number of cases for selecting a combination of two SRS resources among the N SRS resources by assuming the rank value to be 2. At this time, since a rank value that may be indicated through the rank indication field may dynamically change, each of the remaining SRI fields may have a bit length capable of representing a maximum value of the number of cases for selecting a combination of SRS resources corresponding to an arbitrary rank among the N SRS resources by considering all rank values. That is, a bit length of an SRI field may be $\left\lceil \log_2 \binom{N}{k} \right\rceil$, where k may be a value, among values available as a rank (or values indicatable by the rank indication field), which maximizes $\binom{N}{k}$ or $\left\lceil \log_2 \binom{N}{k} \right\rceil$.

- [SRI indication method 2-1-4] The UE may expect that one rank indication field and one SRI field are included in DCI format 0_1 and 0_2. In this case, the UE may expect that a rank value is indicated through the rank indication field. In addition, the UE may expect that each codepoint of the one SRI field indicates respective combinations of one or more SRS resources selected for multiple PUSCH precoding frequency resource units. For example, if N SRS resources are configured in an SRS resource set, the usage of which is configured as non-codebook, when the number of PUSCH precoding frequency resource units is two, and a rank indicated through the rank indication field is 1, one codepoint of the one SRI field may include both information on selection of one SRS resource among the N SRS resources for a first PUSCH precoding frequency resource unit and information on selection of one SRS resource among the N SRS resources for a second PUSCH precoding frequency resource unit.

With respect to [SRI indication method 2-1-1] to [SRI indication method 2-1-3] described above, the UE may apply wideband precoding for non-codebook PUSCH transmission when multiple SRI fields all indicate the same information, or when the remaining SRI fields other than a particular SRI field (e.g., a first field) indicate reserved codepoints. Otherwise (i.e., when different information is indicated in two or more of the multiple SRI fields), the UE may perform non-codebook PUSCH transmission by applying subband precoding.

With respect to [SRI indication method 2-1-4], when the same information is indicated for all of multiple PUSCH precoding frequency resource units that may be indicated by one SRI field, the UE may apply wideband precoding for non-codebook PUSCH transmission. Otherwise (i.e., when different information is indicated for at least two of the multiple PUSCH precoding frequency resource units that may be indicated by the one SRI field), the UE may perform non-codebook PUSCH transmission by applying subband precoding.

The UE having received information of the SRI field and the rank indication field via DCI may perform non-codebook-based PUSCH transmission by applying wideband precoding or subband precoding, based on the information (2250).

[Method 2-1] enables the base station to independently select precoding information for each subband, and thus may be suitable in that in particular, when each subband is configured by a wide frequency resource in subband precoding (e.g., a bandwidth equal to or greater than/greater than 100 MHz), spatial propagation characteristics of signals between the base station and the UE may differ between the subbands. In addition, since the UE may calculate an identical precoder over the entire band when calculating a precoder to be applied to an SRS resource, based on an associated CSI-RS, there may be an advantage that a complexity of precoder calculation of the UE does not increase. However, there may be a disadvantage that an overhead of SRI fields included in DCI to be transmitted by the base station may increase.

[Method 2-2]

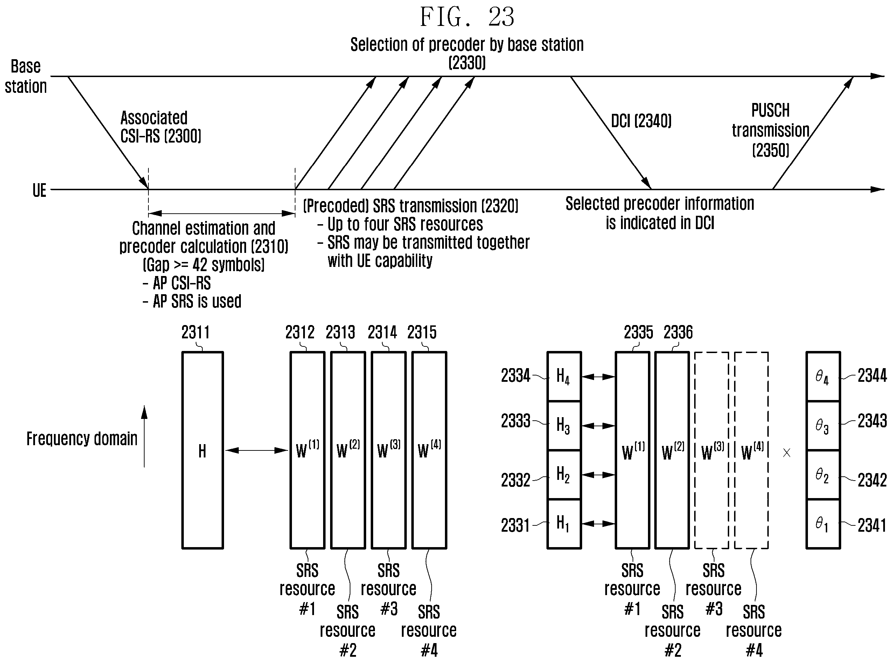

FIG. 23 is a diagram illustrating another method of a non-codebook-based PUSCH transmission process considering subband precoding between a base station and a UE according to an embodiment of the disclosure.

A UE may receive an associated CSI-RS from a base station (2300). The UE may estimate a channel between the base station and the UE, based on the associated CSI-RS, and then based on the channel estimation, may calculate a precoder to be used for non-codebook-based PUSCH transmission (2310 and 2311). At this time, the UE may calculate an identical precoder for the entire frequency resource region for which the UE intends to calculate a precoder (2312, 2313, 2314, and 2315). That is, the UE may calculate a wideband precoder. Thereafter, the UE may apply layer-specific vectors of a calculated entire precoding matrix to respective SRS resources and transmit the SRS resources to the base station. According to a UE capability report of the UE and a higher layer signaling configuration of the base station (or one or more of the UE capability report of the UE and the higher layer signaling configuration of the base station), a layer value of the entire precoding matrix and the number of SRS resources may be determined. Accordingly, the UE may apply respective layer-specific vectors of an entire precoding matrix composed of up to four layers to up to four SRS resources, respectively, and transmit, to the base station, one or more SRS resources to which the precoding matrix calculated by the UE has been applied (2312, 2313, 2314, and 2315). For example, the UE may apply $W^{(1)}$ 2312 to $W^{(4)}$ 2315 to a first SRS resource to a fourth SRS resource, respectively, and in this case, $W^{(k)}$ may be a precoding vector corresponding to a k-th layer in the precoding matrix calculated by the UE.

The UE may report, to the base station as a UE capability, a maximum number of SRS resources simultaneously transmittable among one or more SRS resources to which the precoding matrix has been applied (2320). If the associated CSI-RS is an aperiodic CSI-RS and an SRS resource in an SRS resource set, the usage of which is configured as non-codebook, is an aperiodic SRS, the UE may not expect that a time interval from a time point at which the associated CSI-RS is received to a time point at which one or more SRS resources to which precoding has been applied are transmitted is smaller than 42 symbols. That is, if the associated CSI-RS is an aperiodic CSI-RS and an SRS resource in an SRS resource set, the usage of which is configured as non-codebook, is an aperiodic SRS, the UE may use a time corresponding to at least 42 symbols to estimate a channel based on the associated CSI-RS, calculate a precoder, apply precoding to the SRS resource, and transmit the SRS resource (2310).

The base station that has received one or more SRS resources to which precoding has been applied may determine, for all PUSCH precoding frequency resource units, one combination of SRS resources that is determined to have the best reception performance (2335 and 2336), and additionally indicate, to the UE, phase differences 2341, 2342, 2343, and 2344 applicable for respective PUSCH precoding frequency resource units, based on the selected/determined combination of one or more SRS resources.

For example, the base station may determine, to be 2, a rank value of non-codebook-based PUSCH transmission to be scheduled to the UE. The base station may determine $W^{(1)}$ 2335 and $W^{(2)}$ 2336 as a combination of precoders commonly applicable to all of $H_1$ 2331, $H_2$ 2332, $H_3$ 2333, and $H_4$ 2334 that are subband channels corresponding to four PUSCH precoding frequency resource units. The base station may determine, in addition to the combination of precoders, $\theta_1$ 2341, $\theta_2$ 2342, $\theta_3$ 2343, and $\theta_4$ 2344 that are phase values individually applicable for respective subband channels so as to maximally compensate for an influence of each subband channel.

That is, even if a precoder calculated by the UE, applied to an SRS resource, and then transmitted is identically calculated for the entire frequency resource region for which the UE intends to calculate a precoder, the base station may schedule PUSCH transmission based on subband precoding to the UE by selecting a common combination of precoders for the entire PUSCH transmission frequency resource units, deriving additional phase differences for the respective PUSCH transmission frequency resource units, and indicating the phase differences to the UE.

The base station may define one or more phase value indication fields for each PUSCH precoding frequency resource unit, the fields being designed to indicate additional phase values in DCI to the UE. Through the one or more fields, the base station may indicate phase values corresponding to each PUSCH transmission frequency resource unit differently for each layer, may indicate phase values only for the remaining layers other than the first layer, or may commonly indicate phase values for all layers. In addition, the base station may indicate one SRI field to the UE for all PUSCH precoding frequency resource units, and the SRI field may represent a common precoder combination to be applied to all PUSCH precoding frequency resource units.

The UE may apply wideband precoding for non-codebook PUSCH transmission when respective phase value indication fields of all the frequency resource units indicate the same information, or when the first field indicates a particular value and the remaining fields indicate reserved codepoints. Otherwise (i.e., when at least two different pieces of information are indicated through respective phase value indication fields of all the frequency resource units), the UE may perform non-codebook PUSCH transmission by applying subband precoding.

The UE having received, via DCI, information of the SRI field and the phase value indication field for each PUSCH precoding frequency resource unit may perform non-codebook-based PUSCH transmission by applying wideband precoding or subband precoding, based on the information (2350).

[Method 2-2] may be suitable in that, since when the entire band is configured by a relatively narrow frequency resource (e.g., a bandwidth equal to or smaller than/smaller than 100 MHz), spatial propagation characteristics of signals between the base station and the UE may be similar between subbands, although precoding information for each subband is not independently selected compared to [Method 2-1], the same precoding information may be indicated for all subbands through an SRI field, and phase differences between the subbands may be compensated. In addition, since the UE may calculate an identical precoder over the entire band when calculating a precoder to be applied to an SRS resource, based on an associated CSI-RS, there may be an advantage that a complexity of precoder calculation of the UE does not increase and overhead of SRI fields does not increase. However, there may be a disadvantage in that an overhead of phase information fields corresponding to the number of subbands may be additionally present in DCI to be transmitted by the base station.

[Method 2-3]

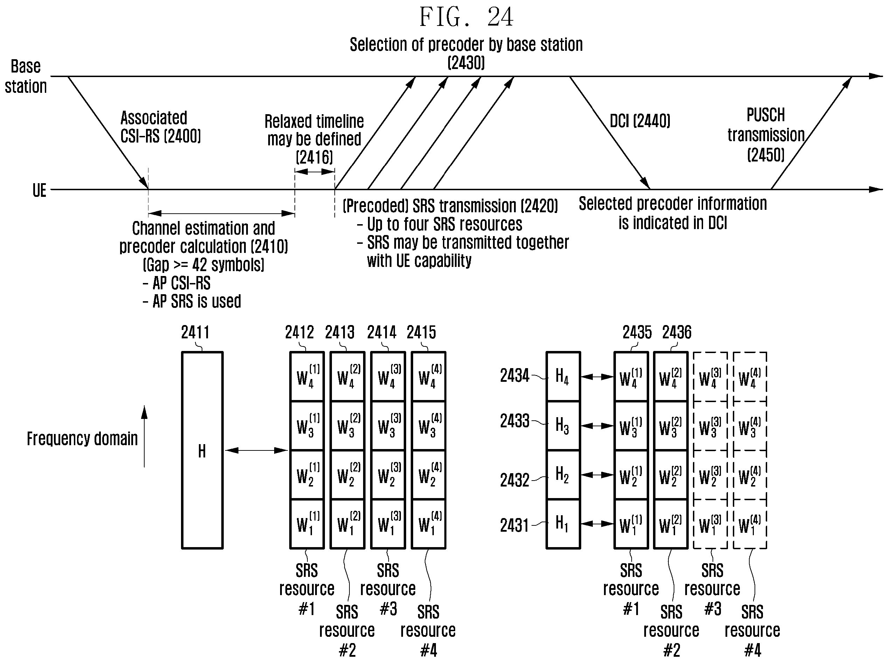

FIG. 24 is a diagram illustrating another method of a non-codebook-based PUSCH transmission process considering subband precoding between a base station and a UE according to an embodiment of the disclosure.

A UE may receive an associated CSI-RS from a base station (2400). The UE may estimate a channel between the base station and the UE, based on the associated CSI-RS, and then based on the channel estimation, may calculate a precoder to be used for non-codebook-based PUSCH transmission (2410, 2411, and 2416). At this time, the UE may calculate an individual precoder for a different frequency resource region of each subband during channel estimation (2412, 2413, 2414, and 2415). That is, the UE may calculate subband precoders, and an additional UE capability therefor may be reported. For example, a UE capability related to subband precoder calculation may be reported.

Accordingly, compared to a scheme in which an identical precoder is calculated over the entire band, additional time consumption may be allowed for the UE (2416). Therefore, if the associated CSI-RS is an aperiodic CSI-RS and an SRS resource in an SRS resource set, the usage of which is configured as non-codebook, is an aperiodic SRS, the UE may not expect that a time interval from a time point at which the associated CSI-RS is received to a time point at which one or more SRS resources to which precoding has been applied are transmitted is smaller than 42 + d symbols. That is, if the associated CSI-RS is an aperiodic CSI-RS and an SRS resource in an SRS resource set, the usage of which is configured as non-codebook, is an aperiodic SRS, the UE may use a time corresponding to at least 42 + d symbols to estimate a channel based on the associated CSI-RS, calculate a precoder, apply precoding to the SRS resource, and transmit the SRS resource (2410 and 2416).

At this time, d, which represents the additional time, may be an arbitrary natural number indicating a time expressed as an additional allowable number of symbols. The value of d may be notified to the UE from the base station by using at least one combination of higher layer signaling, MAC-CE signaling, and L1 signaling, may be a value reported as a UE capability, or may be a value fixedly defined in a specification, and may have different values depending on subcarriers of an activated bandwidth part configured for the UE.

Thereafter, the UE may apply layer-specific vectors of a calculated entire precoding matrix to respective SRS resources and transmit the SRS resources to the base station. According to a UE capability report of the UE and a higher layer signaling configuration of the base station (or one or more of the UE capability report of the UE and the higher layer signaling configuration of the base station), a layer value of the entire precoding matrix and the number of SRS resources may be determined. Accordingly, the UE may apply respective layer-specific vectors of an entire precoding matrix composed of up to four layers to up to four SRS resources, respectively, and transmit, to the base station, one or more SRS resources to which the precoding matrix calculated by the UE has been applied (2412, 2413, 2414, and 2415). For example, the UE may apply $W_1^{(1)}$ to $W_1^{(4)}$ 2412 to a first subband to a fourth subband of the frequency resource of a first SRS resource transmitted in four subbands, respectively, and in this case, $W_t^{(k)}$ may be a precoding vector corresponding to a k-th layer in a t-th subband in the precoding matrix calculated by the UE.

The UE may report, to the base station as a UE capability, a maximum number of SRS resources simultaneously transmittable among one or more SRS resources to which the precoding matrix has been applied (2420).

The base station having received one or more SRS resources to which the precoding matrix has been applied may determine one combination of SRS resources determined to have the best reception performance for all PUSCH precoding frequency resource units (2435 and 2436). For example, the base station may determine, to be 2, a rank value of non-codebook-based PUSCH transmission to be scheduled to the UE. The base station may determine $W_1^{(1)}$ to $W_4^{(1)}$ 2435 and $W_1^{(2)}$ to $W_4^{(2)}$ 2436 applied to the first SRS resource and a second SRS resource as a combination of precoders commonly applicable to all of $H_1$ 2431, $H_2$ 2432, $H_3$ 2433, and $H_4$ 2434 that are subband channels corresponding to four PUSCH precoding frequency resource units. That is, since a precoder calculated by the UE, applied to an SRS resource, and then transmitted is individually calculated for each subband for which the UE intends to calculate a precoder, it is possible to select a combination of one or more SRS resources over the entire band, without deriving an individual combination of precoders for each subband, and to schedule PUSCH transmission based on subband precoding to the UE.

If the UE calculates a precoder to be applied to one or more SRS resources identically over the entire band, the UE may apply wideband precoding to non-codebook PUSCH transmission by using a combination of one or more SRS resources indicated by the base station, and otherwise (i.e., when the UE calculates an individual precoder for each subband), the UE may perform non-codebook PUSCH transmission by applying subband precoding.

The UE having received SRI field information via DCI may perform non-codebook-based PUSCH transmission by applying wideband precoding or subband precoding, based on the information (2450).

In [Method 2-3], based on frequency selectivity of a channel determined by the UE through reception of an associated CSI-RS, the UE may calculate identical precoding over the entire band or calculate different precoding for each subband, apply the precoding to an SRS resource, and transmit the SRS resource, thereby allowing the UE to have a degree of freedom with respect to subband precoding or wideband precoding, while no overhead may be added to DCI since only one SRI field is accompanied. However, since the UE may have a burden of calculating a different precoder for each subband, implementation complexity of the UE may increase, and since additional time may be consumed, a delay from a time point at which the channel is estimated through the associated CSI-RS to non-codebook-based PUSCH transmission may increase.

[Method 2-4]

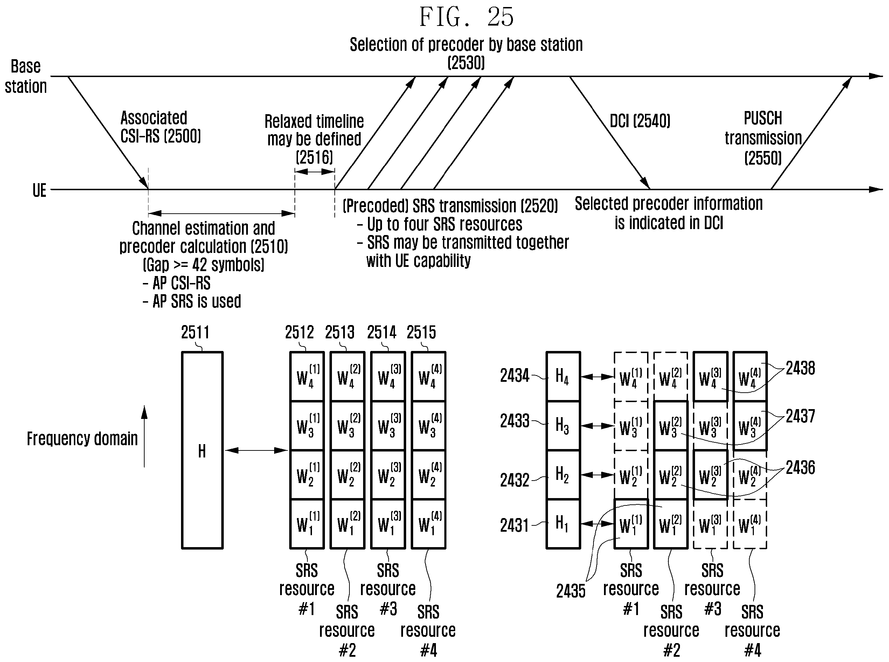

FIG. 25 is a diagram illustrating another method of a non-codebook-based PUSCH transmission process considering subband precoding between a base station and a UE according to an embodiment of the disclosure.

A UE may receive an associated CSI-RS from a base station (2500). The UE may estimate a channel between the base station and the UE, based on the associated CSI-RS, and then based on the channel estimation, may calculate a precoder to be used for non-codebook-based PUSCH transmission (2510, 2511, and 2516). At this time, the UE may calculate an individual precoder for a different frequency resource region of each subband during channel estimation (2512, 2513, 2514, and 2515). That is, the UE may calculate subband precoders, and an additional UE capability therefor may be reported. For example, a UE capability related to subband precoder calculation may be reported.

Accordingly, compared to a scheme in which an identical precoder is calculated over the entire band, additional time consumption may be allowed for the UE (2516). Therefore, if the associated CSI-RS is an aperiodic CSI-RS and an SRS resource in an SRS resource set, the usage of which is configured as non-codebook, is an aperiodic SRS, the UE may not expect that a time interval from a time point at which the associated CSI-RS is received to a time point at which one or more SRS resources to which precoding has been applied are transmitted is smaller than 42 + d symbols. That is, if the associated CSI-RS is an aperiodic CSI-RS and an SRS resource in an SRS resource set, the usage of which is configured as non-codebook, is an aperiodic SRS, the UE may use a time corresponding to at least 42 + d symbols to estimate a channel based on the associated CSI-RS, calculate a precoder, apply precoding to the SRS resource, and transmit the SRS resource (2510 and 2516).

At this time, d, which represents the additional time, may be an arbitrary natural number indicating a time expressed as an additional allowable number of symbols. The value of d may be notified to the UE from the base station by using at least one combination of higher layer signaling, MAC-CE signaling, and L1 signaling, may be a value reported as a UE capability, or may be a value fixedly defined in a specification, and may have different values depending on subcarriers of an activated bandwidth part configured for the UE.

Thereafter, the UE may apply layer-specific vectors of a calculated entire precoding matrix to respective SRS resources and transmit the SRS resources to the base station. According to a UE capability report of the UE and a higher layer signaling configuration of the base station (or one or more of the UE capability report of the UE and the higher layer signaling configuration of the base station), a layer value of the entire precoding matrix and the number of SRS resources may be determined. Accordingly, the UE may apply respective layer-specific vectors of an entire precoding matrix composed of up to four layers to up to four SRS resources, respectively, and transmit, to the base station, one or more SRS resources to which the precoding matrix calculated by the UE has been applied (2512, 2513, 2514, and 2515). For example, the UE may apply $W_1^{(1)}$ to $W_1^{(4)}$ 2512 to a first subband to a fourth subband of the frequency resource of a first SRS resource transmitted in four subbands, respectively, and in this case, $W_t^{(k)}$ may be a precoding vector corresponding to a k-th layer in a t-th subband in the precoding matrix calculated by the UE.

The UE may report, to the base station as a UE capability, a maximum number of SRS resources simultaneously transmittable among one or more SRS resources to which the precoding matrix has been applied (2520).

The base station that has received one or more SRS resources to which precoding has been applied may determine, for each PUSCH precoding frequency resource unit, a combination of SRS resources that is determined to have the best reception performance, and a combination of precoders applied to the selected one or more SRS resources may be determined as precoders of the UE for non-codebook-based PUSCH transmission in a corresponding PUSCH precoding frequency resource unit (2530). For example, the base station may determine, to be 2, a rank value of non-codebook-based PUSCH transmission to be scheduled to the UE. The base station may determine $W_1^{(1)}$ and $W_1^{(2)}$ 2535, $W_2^{(2)}$ and $W_2^{(3)}$ 2536, $W_3^{(2)}$ and $W_3^{(4)}$ 2537, and $W_4^{(3)}$ and $W_4^{(4)}$ 2538 as combinations of precoders applicable to $H_1$ 2531,

$H_2$ 2532, $H_3$ 2533, and $H_4$ 2534 that are subband channels corresponding to four PUSCH precoding frequency resource units, respectively. That is, a precoder calculated by the UE, applied to an SRS resource, and then transmitted is individually calculated for each subband for which the UE intends to calculate a precoder, and the base station may schedule PUSCH transmission based on subband precoding to the UE by selecting a different combination of precoders for each PUSCH transmission frequency resource unit.

At this time, the base station may determine a combination of one or more SRS resources such that a rank value is the same for all PUSCH precoding frequency resource units. The same or different SRI for each PUSCH precoding frequency resource unit may be indicated to the UE by the base station (2540). A method by which the base station indicates an SRI through DCI may be at least one combination of [SRI indication method 2-1-1] to [SRI indication method 2-1-4] described above.

With respect to [SRI indication method 2-1-1] to [SRI indication method 2-1-3] described above, the UE may apply wideband precoding for non-codebook PUSCH transmission when multiple SRI fields all indicate the same information, or when the remaining SRI fields other than a particular SRI field (e.g., a first field) indicate reserved codepoints. Otherwise (i.e., when different information is indicated in two or more of the multiple SRI fields), the UE may perform non-codebook PUSCH transmission by applying subband precoding.

With respect to [SRI indication method 2-1-4], when the same information is indicated for all of multiple PUSCH precoding frequency resource units that may be indicated by one SRI field, the UE may apply wideband precoding for non-codebook PUSCH transmission. Otherwise (i.e., when different information is indicated for at least two of the multiple PUSCH precoding frequency resource units that may be indicated by the one SRI field), the UE may perform non-codebook PUSCH transmission by applying subband precoding.

The UE having received information of the SRI field and the rank indication field via DCI may perform non-codebook-based PUSCH transmission by applying wideband precoding or subband precoding, based on the information (2550).

In [Method 2-4], the UE may calculate an individual precoder for each subband, and the base station may indicate an optimal precoder combination to the UE from a reception-side perspective, thereby enabling derivation of optimal performance in non-codebook-based PUSCH transmission to which subband precoding is applied. In addition, the base station may independently select precoding information for each subband, and thus the method may be suitable in that in particular, when each subband is configured by a wide frequency resource in subband precoding (e.g., a bandwidth equal to or greater than/greater than 100 MHz), spatial propagation characteristics of signals between the base station and the UE may differ between the subbands. However, since the UE may have a burden of calculating a different precoder for each subband, implementation complexity of the UE may increase, since additional time may be consumed, a delay from a time point at which the channel is estimated through the associated CSI-RS to non-codebook-based PUSCH transmission may increase, and there may be a disadvantage that an overhead of SRI fields included in DCI to be transmitted by the base station may increase.

The UE may be notified to use at least one combination of [Method 2-1] to [Method 2-4] described above from the base station through at least one combination of higher layer signaling, MAC-CE, and L1 signaling, or at least one combination may be fixedly defined in a specification. For example, as a method for performing, by the UE, non-codebook-based PUSCH transmission to which subband or wideband precoding is applied, [Method 2-1] described above may be defined as a method fixed in a specification. As another example, the UE may be notified from the base station of one of [Method 2-1] or [Method 2-4] described above through at least one combination of higher layer signaling, MAC-CE, and L1 signaling. The above description may merely correspond to an example, and other combinations may not be excluded.

In addition, if a method in which one or more of [Method 2-1] to [Method 2-4] described above are combined is defined in a specification so as to allow the UE to use the method, when the UE is not notified of the combined method from the base station through at least one combination of higher layer signaling, MAC-CE, and L1 signaling, the UE may use another method in which one or more of [Method 2-1] to [Method 2-4] described above are combined.

The UE may transmit, to the base station, a UE capability report having the meaning that the UE supports at least one of [Method 2-1] to [Method 2-4] described above, and corresponding higher layer signaling at the base station may exist to support a corresponding function, or the higher layer signaling may not exist. For example, the corresponding higher layer signaling may be related to configuration information of the base station corresponding to the UE capability report, but is not limited thereto.

If higher layer signaling corresponding to a UE capability reported by the UE exists, when the higher layer signaling is not configured by the base station, the UE may determine a frequency resource unit of PUSCH precoding based on at least one combination of [Method 2-1] to [Method 2-4], or may use at least one combination of [Method 2-1] to [Method 2-4] which is fixedly defined. In addition, if higher layer signaling corresponding to a UE capability reported by the UE does not exist, the UE may expect that the base station is to perform an operation corresponding to the UE capability when the UE has reported the UE capability.

When at least one combination of [Method 2-1] and [Method 2-4] described above is used, the UE may be notified to use at least one combination of [SRI indication method 2-1-1] to [SRI indication method 2-1-4] described above from the base station through at least one combination of higher layer signaling, MAC-CE, and L1 signaling, or at least one combination may be fixedly defined in a specification.

For example, the UE may define, as a method for non-codebook-based PUSCH transmission to which subband or wideband precoding is applied, [SRI indication method 2-1-1] described above as a method fixed in a specification. As another example, the UE may be notified from the base station of one of [SRI indication method 2-1-1] or [SRI indication method 2-1-4] described above through at least one combination of higher layer signaling, MAC-CE, and L1 signaling. The above description may merely correspond to an example, and other combinations may not be excluded.

In addition, if a method in which one or more of [SRI indication method 2-1-1] to [SRI indication method 2-1-4] described above are combined is defined in a specification so as to allow the UE to use the method, when the UE is not notified of the combined method from the base station through at least one combination of higher layer signaling, MAC-CE, and L1 signaling, the UE may use another method in which one or more of [SRI indication method 2-1-1] to [SRI indication method 2-1-4] described above are combined.

The UE may transmit, to the base station, a UE capability report having the meaning that the UE supports at least one of [SRI indication method 2-1-1] to [SRI indication method 2-1-4] described above, and corresponding higher layer signaling at the base station may exist to support a corresponding function, or the higher layer signaling may not exist. For example, the corresponding higher layer signaling may be related to configuration information of the base station corresponding to the UE capability report, but is not limited thereto.

If higher layer signaling corresponding to a UE capability reported by the UE exists, when the higher layer signaling is not configured by the base station, the UE may determine a frequency resource unit of PUSCH precoding based on at least one combination of [SRI indication method 2-1-1] to [SRI indication method 2-1-4], or may use at least one combination of [SRI indication method 2-1-1] to [SRI indication method 2-1-4] which is fixedly defined. In addition, if higher layer signaling corresponding to a UE capability reported by the UE does not exist, the UE may expect that the base station is to perform an operation corresponding to the UE capability when the UE has reported the UE capability.

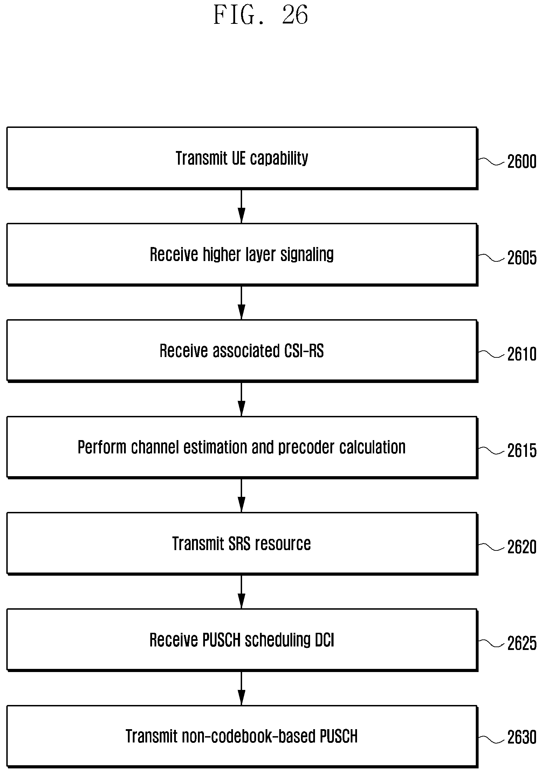

FIG. 26 is a diagram illustrating an operation of a UE according to an embodiment of the disclosure.

In operation 2600, a UE may transmit a UE capability to a base station. UE capability signaling which may be reported may be related to at least one combination of a UE capability related to support for non-codebook-based PUSCH transmission, a UE capability related to an SRS resource configuration and an SRS resource set configuration in which a usage may be configured as non-codebook, a UE capability related to support for an associated CSI-RS, and a UE capability indicating support or non-support for [Method 1-1] to [Method 1-4], [Method 2-1] to [Method 2-1], and [SRI indication method 2-1-1] to [SRI indication method 2-1-4] described above. Omission of operation 2600 is also possible.

In operation 2605, the UE may receive higher layer signaling from the base station according to the reported UE capability. The UE may define higher layer parameters and use one of the parameters, the higher layer parameters being defined for at least one combination of higher layer signaling related to support for non-codebook-based PUSCH transmission, an SRS resource configuration and an SRS resource set configuration in which a usage may be configured as non-codebook, higher layer signaling related to support for an associated CSI-RS, and higher layer signaling indicating support or non-support for [Method 1-1] to [Method 1-4], [Method 2-1] to [Method 2-1], and [SRI indication method 2-1-1] to [SRI indication method 2-1-4] described above, which are received from the base station.

In operation 2610, the UE may receive an associated CSI-RS from the base station.

In operation 2615, the UE may estimate a channel between the base station and the UE and calculate a precoder, based on the associated CSI-RS received from the base station. In this case, a scheme of calculating a precoder may be determined according to at least one combination of [Method 2-1] to [Method 2-4] described above.

In operation 2620, the UE may apply the calculated precoder to one or more SRS resources and transmit the SRS resources to the base station. In this case, a method of applying a precoder to one or more SRS resources may be determined according to at least one combination of [Method 2-1] to [Method 2-4] described above. In addition, if the associated CSI-RS is an aperiodic CSI-RS and an SRS resource in an SRS resource set, the usage of which is configured as non-codebook, is an aperiodic SRS, the UE may not expect that a time from a time point at which the associated CSI-RS is received to a time point at which the SRS is transmitted is smaller than 42 + d symbols, and d may indicate a time added for precoder calculation for each subband as described above.

In operation 2625, the UE may receive, from the base station, DCI for scheduling non-codebook-based PUSCH transmission. In this case, scheduling information, in the DCI, related to precoding to be applied to PUSCH transmission may be determined according to at least one combination of [Method 2-1] to [Method 2-4] described above.

In operation 2630, the UE may perform non-codebook-based PUSCH transmission by referring to precoding-related scheduling information in the DCI received from the base station.

A flowchart described above illustrates an example of a method implementable according to the principle of the disclosure, and a method illustrated in the flowchart of this specification may be variously modified. For example, a series of operations are illustrated, but various operations in each drawing may overlap with each other, occur in parallel, occur in a different sequence, or occur several times. In another example, an operation may be omitted or replaced with another operation.

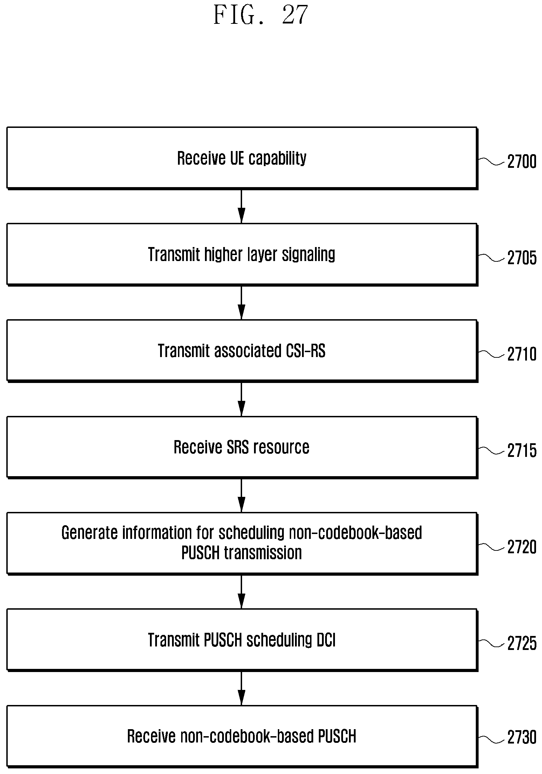

FIG. 27 is a diagram illustrating an operation of a base station according to an embodiment of the disclosure.

In operation 2700, a base station may receive a UE capability from a UE. UE capability signaling which may be received by the base station may be related to at least one combination of a UE capability related to support for non-codebook-based PUSCH transmission, a UE capability related to an SRS resource configuration and an SRS resource set configuration in which a usage may be configured as non-codebook, a UE capability related to support for an associated CSI-RS, and a UE capability indicating support or non-support for [Method 1-1] to [Method 1-4], [Method 2-1] to [Method 2-1], and [SRI indication method 2-1-1] to [SRI indication method 2-1-4] described above. Omission of operation 2700 is also possible.

In operation 2705, the base station may transmit higher layer signaling to the UE according to the UE capability reported by the UE. The base station may define higher layer parameters and configure one of the parameters for the UE, the higher layer parameters being defined for at least one combination of higher layer signaling related to support for non-codebook-based PUSCH transmission, an SRS resource configuration and an SRS resource set configuration in which a usage may be configured as non-codebook, higher layer signaling related to support for an associated CSI-RS, and higher layer signaling indicating support or non-support for [Method 1-1] to [Method 1-4], [Method 2-1] to [Method 2-1], and [SRI indication method 2-1-1] to [SRI indication method 2-1-4] described above.

In operation 2710, the base station may transmit an associated CSI-RS to the UE.

In operation 2715, the base station may receive an SRS resource transmitted by the UE. The base station may receive the SRS resource under an assumption that a precoder determined according to at least one combination of [Method 2-1] to [Method 2-4] above has been applied to the SRS resource transmitted by the UE.

In operation 2720, the base station may receive the SRS resource transmitted by the UE and generate precoding information for scheduling non-codebook-based PUSCH transmission to the UE. The base station may use at least one combination of [Method 2-1] to [Method 2-4] above to generate the precoding information.

In operation 2725, the base station may transmit PUSCH scheduling DCI to the UE. Precoding-related information in the DCI may have been generated through at least one combination of [Method 2-1] to [Method 2-4] above.

In operation 2730, the base station may receive, from the UE, a non-codebook-based PUSCH to which wideband or subband precoding has been applied.

A flowchart described above illustrates an example of a method implementable according to the principle of the disclosure, and a method illustrated in the flowchart of this specification may be variously modified. For example, a series of operations are illustrated, but various operations in each drawing may overlap with each other, occur in parallel, occur in a different sequence, or occur several times. In another example, an operation may be omitted or replaced with another operation.

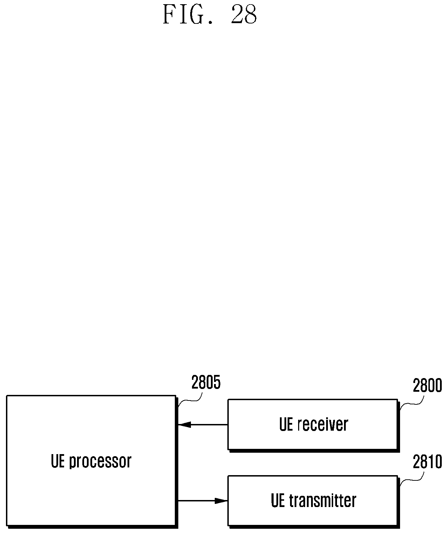

FIG. 28 illustrates a structure of a UE in a wireless communication system according to an embodiment of the disclosure.

Referring to FIG. 28, the UE may include a transceiver, which refers to a UE receiver 2800 and a UE transmitter 2810 as a whole, a memory (not illustrated), and a UE processor 2805 (or UE controller or processor). The UE transceiver 2800 and 2810, the memory, and the UE processor 2805 may operate according to the above-described communication methods of the UE. However, components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with base stations. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for the operation of the UE. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes so that the UE can operate according to the above-described embodiments. For example, the processor may control components of the UE to receive DCI configured in two layers so as to simultaneously receive multiple PDSCHs. The processor may include multiple processors, and the processor may perform operations of controlling the components of the UE by executing programs stored in the memory.

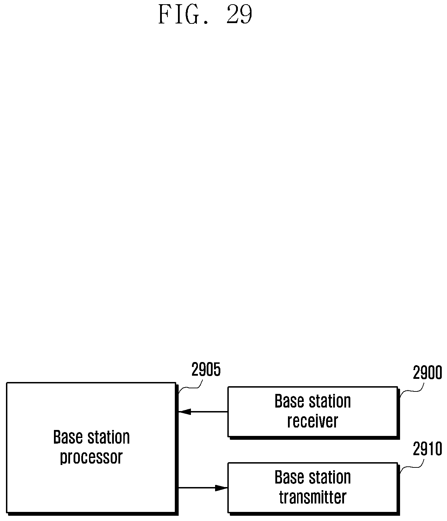

FIG. 29 illustrates a structure of a base station in a wireless communication system according to an embodiment of the disclosure.

Referring to FIG. 29, the base station may include a transceiver, which refers to a base station receiver 2900 and a base station transmitter 2910 as a whole, a memory (not illustrated), and a base station processor 2905 (or base station controller or processor). The base station transceiver 2900 and 2910, the memory, and the base station processor 2905 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with UEs. The signals may include control information and data. To this end, the transceiver may include an RF transmitter configured to up-convert and amplify the frequency of transmitted signals, an RF receiver configured to low-noise-amplify received signals and down-convert the frequency thereof, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes so that the base station can operate according to the above-described embodiments of the disclosure. For example, the processor may control components of the base station to configure DCI configured in two layers including allocation information regarding multiple PDSCHs and to transmit the same. The processor may include multiple processors, and the processor may perform operations of controlling the components of the base station by executing programs stored in the memory.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described specific embodiments of the disclosure, an element included in an embodiment is expressed in the singular or the plural according to presented specific embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in

**EP 4 761 126 A1**

combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A method performed by a terminal in a communication system, the method comprising:

    receiving, through higher layer signaling, a first configuration for a channel state information reference signal (CSI-RS) and a second configuration for a sounding reference signal (SRS);
    based on measurement for a CSI-RS resource related to the first configuration, identifying multiple first precoders for multiple SRS resources related to the second configuration;
    based on the multiple first precoders, performing SRS transmission on the multiple SRS resources;
    receiving, through a physical downlink control channel (PDCCH), downlink control information (DCI) scheduling a physical uplink shared channel (PUSCH);
    based on the DCI, identifying multiple second precoders for multiple subbands included in a wideband to which the PUSCH is allocated, the multiple second precoders being at least some of the multiple first precoders; and
    based on applying the multiple second precoders to the multiple subbands, transmitting the PUSCH.

2. The method of claim 1, wherein second precoders for one subband are identified as one or a combination of one or more of the multiple first precoders, and the number of the second precoders for one subband is equal to a rank for the PUSCH.

3. The method of claim 1, wherein a processing time of the terminal for the multiple first precoders is defined as:

    42 symbols for a case where the multiple first precoders are identified for the wideband by the terminal; and
    42+d symbols for a case where the multiple first precoders are identified for the multiple subbands by the terminal, wherein d is related to the number of the multiple subbands.

4. The method of claim 1, wherein the DCI comprises:

    multiple SRS resource indicator (SRI) fields, wherein each of the SRI fields indicates a rank for the PUSCH and a second precoder for a corresponding subband, and the number of bits included in each of the SRI fields is N that is the number of the multiple SRS resources;
    multiple SRI fields, wherein a first SRI field among the multiple SRI fields indicates the rank and a second precoder for a corresponding subband, the number of bits included in the first SRI field is N, remaining SRI fields other than the first SRI field among the multiple SRI fields each indicate a second precoder for a corresponding subband, the number of bits included in each of the remaining SRI fields is $\left\lceil \log_2 \binom{N}{k} \right\rceil$, and k is a value that maximizes $\binom{N}{k}$ among values available as the rank;
    one field indicating the rank and multiple SRI fields, wherein each of the SRI fields indicates a second precoder for a corresponding subband, the number of bits included in each of the SRI fields is $\left\lceil \log_2 \binom{N}{k} \right\rceil$, and k is a value that maximizes $\binom{N}{k}$ among values available as the rank; or
    one field indicating the rank and one SRI field, wherein codepoints of the one SRI field indicate the multiple second precoders.

5. The method of claim 1, wherein, in case that one precoder is identified based on the DCI, the PUSCH is transmitted based on applying the one precoder to the wideband, and
    wherein the case where one precoder is identified corresponds to a case where, based on the DCI, the multiple second precoders are identified as being identical, or a case where, based on the DCI, one precoder is identified among the multiple second precoders and remaining precoders other than the one precoder among the multiple second precoders are identified as being reserved.

6. A terminal in a communication system, the terminal comprising:

a transceiver; and
a processor connected to the transceiver,
wherein the processor is configured to:

receive, through higher layer signaling, a first configuration for a channel state information reference signal (CSI-RS) and a second configuration for a sounding reference signal (SRS);
based on measurement for a CSI-RS resource related to the first configuration, identify multiple first precoders for multiple SRS resources related to the second configuration;
based on the multiple first precoders, perform SRS transmission on the multiple SRS resources;
receive, through a physical downlink control channel (PDCCH), downlink control information (DCI) scheduling a physical uplink shared channel (PUSCH);
based on the DCI, identify multiple second precoders for multiple subbands included in a wideband to which the PUSCH is allocated, the multiple second precoders being at least some of the multiple first precoders; and
based on applying the multiple second precoders to the multiple subbands, transmit the PUSCH.

7. The terminal of claim 6, wherein a second precoder for one subband is identified as one or a combination of one or more of the multiple first precoders, and the number of second precoders for one subband is equal to a rank for the PUSCH.

8. The terminal of claim 6, wherein a processing time of the terminal for the multiple first precoders is defined as:

42 symbols for a case where the multiple first precoders are identified for the wideband by the terminal; and
42+d symbols for a case where the multiple first precoders are identified for the multiple subbands by the terminal, wherein d is related to the number of the multiple subbands.

9. The terminal of claim 6, wherein the DCI comprises:

multiple SRS resource indicator (SRI) fields, wherein each of the SRI fields indicates a rank for the PUSCH and a second precoder for a corresponding subband, and the number of bits included in each of the SRI fields is N that is the number of the multiple SRS resources;
multiple SRI fields, wherein a first SRI field among the multiple SRI fields indicates the rank and a second precoder for a corresponding subband, the number of bits included in the first SRI field is N, remaining SRI fields other than the first SRI field among the multiple SRI fields each indicate a second precoder for a corresponding subband, the number of bits included in each of the remaining SRI fields is $\left\lceil \log_2 \binom{N}{k} \right\rceil$, and k is a value that maximizes $\binom{N}{k}$ among values available as the rank;
one field indicating the rank and multiple SRI fields, wherein each of the SRI fields indicates a second precoder for a corresponding subband, the number of bits included in each of the SRI fields is $\left\lceil \log_2 \binom{N}{k} \right\rceil$, and k is a value that maximizes $\binom{N}{k}$ among values available as the rank; or
one field indicating the rank and one SRI field, wherein codepoints of the one SRI field indicate the multiple second precoders.

10. The terminal of claim 6, wherein, in case that one precoder is identified based on the DCI, the PUSCH is transmitted based on applying the one precoder to the wideband, and
wherein the case where the one precoder is identified corresponds to a case where, based on the DCI, the multiple second precoders are identified as being identical, or a case where, based on the DCI, one precoder is identified among the multiple second precoders and remaining precoders other than the one precoder among the multiple second precoders are identified as being reserved.

11. A method performed by a base station in a communication system, the method comprising:

Transmitting, through higher layer signaling, a first configuration for a channel state information reference signal (CSI-RS) and a second configuration for a sounding reference signal (SRS);

receiving an SRS on multiple SRS resources related to the second configuration;

identifying multiple first precoders for the multiple SRS resources, the multiple first precoders being related to the first configuration;

identifying multiple second precoders for multiple subbands included in a wideband to which a physical uplink shared channel (PUSCH) is allocated, the multiple second precoders being at least some of the multiple first precoders;

transmitting, through a physical downlink control channel (PDCCH), downlink control information (DCI) scheduling the PUSCH, the DCI being related to the multiple second precoders; and

based on the multiple second precoders being applied to the multiple subbands, receiving the PUSCH.

12. The method of claim 11, wherein a second precoder for one subband is identified as one or a combination of one or more of the multiple first precoders, and the number of second precoders for one subband is equal to a rank for the PUSCH.

13. The method of claim 1, wherein the DCI comprises:

multiple SRS resource indicator (SRI) fields, wherein each of the SRI fields indicates a rank for the PUSCH and a second precoder for a corresponding subband, and the number of bits included in each of the SRI fields is N that is the number of the multiple SRS resources;

multiple SRI fields, wherein a first SRI field among the multiple SRI fields indicates the rank and a second precoder for a corresponding subband, the number of bits included in the first SRI field is N, remaining SRI fields other than the first SRI field among the multiple SRI fields each indicates a second precoder for a corresponding subband, the number of bits included in each of the remaining SRI fields is $\left\lceil \log_2 \binom{N}{k} \right\rceil$, and k is a value that maximizes $\binom{N}{k}$ among values available as the rank;

one field indicating the rank and multiple SRI fields, wherein each of the SRI fields indicates a second precoder for a corresponding subband, the number of bits included in each of the SRI fields is $\left\lceil \log_2 \binom{N}{k} \right\rceil$, and k is a value that maximizes $\binom{N}{k}$ among values available as the rank; or

one field indicating the rank and one SRI field, wherein codepoints of the one SRI field indicate the multiple second precoders.

14. A base station in a communication system, the base station comprising:

a transceiver; and
a processor connected to the transceiver,
wherein the processor is configured to:

transmit, through higher layer signaling, a first configuration for a channel state information reference signal (CSI-RS) and a second configuration for a sounding reference signal (SRS);

receive an SRS on multiple SRS resources related to the second configuration;

identify multiple first precoders for the multiple SRS resources, the multiple first precoders being related to the first configuration;

identify multiple second precoders for multiple subbands included in a wideband to which a physical uplink shared channel (PUSCH) is allocated, the multiple second precoders being at least some of the multiple first precoders;

transmit, through a physical downlink control channel (PDCCH), downlink control information (DCI) scheduling the PUSCH, the DCI being related to the multiple second precoders; and

based on the multiple second precoders being applied to the multiple subbands, receive the PUSCH.

15. The base station of claim 14, wherein the DCI comprises:

multiple SRS resource indicator (SRI) fields, wherein each of the SRI fields indicates a rank for the PUSCH and a second precoder for a corresponding subband, and the number of bits included in each of the SRI fields is N that is the number of the multiple SRS resources;

multiple SRI fields, wherein a first SRI field among the multiple SRI fields indicates the rank and a second precoder for a corresponding subband, the number of bits included in the first SRI field is N, remaining SRI fields other than the first SRI field among the multiple SRI fields each indicates a second precoder for a corresponding subband, the number of bits included in each of the remaining SRI fields is $\left\lceil \log_2 \binom{N}{k} \right\rceil$, and k is a value that maximizes $\binom{N}{k}$ among values available as the rank;

one field indicating the rank and multiple SRI fields, wherein each of the SRI fields indicates a second precoder for a corresponding subband, the number of bits included in each of the SRI fields is $\left\lceil \log_2 \binom{N}{k} \right\rceil$, and k is a value that maximizes $\binom{N}{k}$ among values available as the rank; or

one field indicating the rank and one SRI field, wherein codepoints of the one SRI field indicate the multiple second precoders.

FIG. 1

## FIG. 2

EP 4 761 126 A1

FIG. 3

# FIG. 4

Single cell LTE/NR (S00)

**gNB**
- SDAP (S25)
- PDCP (S30)
- RLC (S35)
- MAC (S40)
- PHY (S45)

**UE**
- PHY (S50)
- MAC (S55)
- RLC (S60)
- PDCP (S65)
- SDAP (S70)

Carrier aggregation (S10)

**gNB**
- SDAP
- PDCP
- RLC
- MAC
- PHY ... PHY

**UE**
- PHY ... PHY
- MAC
- RLC
- PDCP
- SDAP

Dual connectivity (S20)

**MgNB**
- SDAP
- PDCP
- RLC
- MAC
- PHY

**SgNB**
- RLC
- MAC
- PHY

**UE**
- PHY
- MAC
- RLC
- PDCP
- SDAP

**(SgNB UE)**
- PHY
- MAC
- RLC

EP 4 761 126 A1

# FIG. 5

Use of DCI format 1_1 or 1_2 with DL assignment

Use of DCI format 1_1 or 1_2 without DL assignment

FIG. 6

| R | Serving cell ID | | | | | | DL BWP ID | Octet 1 |
|---|---|---|---|---|---|---|---|---|
| R | R | R | R | R | R | | UL BWP ID | Octet 2 |
| $P_1$ | $P_2$ | $P_3$ | $P_4$ | $P_5$ | $P_6$ | $P_7$ | $P_8$ | Octet 3 |
| D/U | TCI state ID 1 | | | | | | | Octet 4 |
| D/U | TCI state ID 2 | | | | | | | Octet 5 |

. . .

| D/U | TCI state ID N | Octet N+3 |
|---|---|---|

# FIG. 7

# FIG. 8

duration
(804)

Frequecy
resources
(803)

UE bandwidth
(810)

Frequency

Time

Slot (820)

Control resource set#1 (801)

Control resource set#2 (802)

FIG. 9

# FIG. 10

RA type 0 [1000]: Bitmap — 1015

RA type 1 [1005]: Starting VRB — 1020 | Length — 1025

Both RA type 0 & 1 [1010]: 1 bit for indicating RA type — 1030 | Max{payload for RA type 0, payload for RA type 1} — 1035

EP 4 761 126 A1

EP 4 761 126 A1

# FIG. 11

# FIG. 12

Procedure for determining available slot for single or multi-PUSCH transmission:

- TDD configuration-based determination method (1201):

TDD configuration (DDFUU)

| Slot #0 | Slot #1 | Slot #2 (1202) | Slot #3 | Slot #4 |
|---------|---------|----------------|---------|---------|
| Unavailable #0 | Unavailable #0 | Unavailable #0 or available #0 | Available #0 | Available #0 |

S=2  L=12

UL resource

- TDRA-based determination method (1203):

TDD configuration (UUUUU), SLIV {S:2, L:12 symbols} in

| Slot #0 | Slot #1 | Slot #2 | Slot #3 | Slot #4 |
|---------|---------|---------|---------|---------|
| Available #0 | Available #0 | Unavailable #0 | Available #0 | Available #0 |

S=2  L=12

S=2  UL resource

FIG. 13

FIG. 14

# FIG. 15

**Case #1 (1500)**

| Control information for TRP #0 | — | DCI #0 |
| Control information for TRP #1 | — | DCI #1 |
| ⋮ | | ⋮ |
| Control information for TRP #(N-1) | — | DCI #(N-1) |

**Case #2 (1505)**

| Control information for TRP #0 | — | DCI #0 |
| Control information for TRP #1 | — | sDCI #0 |
| ⋮ | | ⋮ |
| Control information for TRP #(N-1) | — | sDCI #(N-2) |

**Case #3 (1510)**

| Control information for TRP #0 | — | DCI |
| Control information for TRP #1 | | sDCI |
| ⋮ | | ⋮ |
| Control information for TRP #(N-1) | | |

**Case #4 (1515)**

| Control information for TRP #0 | | |
| Control information for TRP #1 | — | Long DCI |
| ⋮ | | ⋮ |
| Control information for TRP #(N-1) | | |

# FIG. 16

## System DL-UL configuration (1600)

Bandwidth (1601)

Frequency

Time

Symbol/slot (1602)

⬛ : Downlink resource (1603)

⬛ : Guard band (1604)

⬛ : Uplink resource (1605)

## DL-UL configuration of UE 1 (1610)

Frequency

Time

Symbol/slot

## DL-UL configuration of UE 2 (1620)

Frequency

Time

Symbol/slot

## DL-UL configuration of UE 3 (1630)

Frequency

Time

Symbol/slot

## DL-UL configuration of UE 4 (1640)

Frequency

Time

Symbol/slot

EP 4 761 126 A1

# FIG. 17

FIG. 18

EP 4 761 126 A1

# FIG. 19

# FIG. 20

TDD period

D D D S U D D D S U D D D S U D D D S U

2001 (a) TDD-only configuration

TDD period

D D D S U D D D S U D D D S U D D D S U

UL subband (2010)

2012 2011 (b) SBFD configuration 1

TDD period

D D D S U D D D S U D D D S U D D D S U

UL subband (2020)

2022 2021 (c) SBFD configuration 2

TDD period

D D D S U D D D S U D D D S U D D D S U

2032 2033 2034 2031 (d) SBFD configuration 3

# FIG. 21

# FIG. 22

Selection of precoder by base station (2230)

Base station

Associated CSI-RS (2200)

DCI (2240)

PUSCH transmission (2250)

UE

(Precoded) SRS transmission (2220)
- Up to four SRS resources
- SRS may be transmitted together with UE capability

Selected precoder information is indicated in DCI

Channel estimation and precoder calculation (Gap >= 42 symbols) (2210)
- AP CSI-RS
- AP SRS is used

Frequency domain

2211

H

2212 2213 2214 2215

$W^{(1)}$  $W^{(2)}$  $W^{(3)}$  $W^{(4)}$

SRS resource #1
SRS resource #2
SRS resource #3
SRS resource #4

2234 $H_4$  ⟷  $W^{(1)}$  $W^{(2)}$  $W^{(3)}$  $W^{(4)}$  2238

2233 $H_3$  ⟷  $W^{(1)}$  $W^{(2)}$  $W^{(3)}$  $W^{(4)}$  2237

2232 $H_2$  ⟷  $W^{(1)}$  $W^{(2)}$  $W^{(3)}$  $W^{(4)}$  2236

2231 $H_1$  ⟷  $W^{(1)}$  $W^{(2)}$  $W^{(3)}$  $W^{(4)}$

2235

SRS resource #1
SRS resource #2
SRS resource #3
SRS resource #4

# FIG. 23

Selection of precoder by base station (2330)

Base station

Associated CSI-RS (2300)

DCI (2340)

PUSCH transmission (2350)

UE

(Precoded) SRS transmission (2320)
- Up to four SRS resources
- SRS may be transmitted together with UE capability

Selected precoder information is indicated in DCI

Channel estimation and precoder calculation (2310)
(Gap >= 42 symbols)
- AP CSI-RS
- AP SRS is used

2311  2312 2313 2314 2315

2335 2336

Frequency domain

H ↔ $W^{(1)}$ $W^{(2)}$ $W^{(3)}$ $W^{(4)}$

SRS resource #1
SRS resource #2
SRS resource #3
SRS resource #4

2334 — $H_4$
2333 — $H_3$
2332 — $H_2$
2331 — $H_1$

↔ $W^{(1)}$ $W^{(2)}$ $W^{(3)}$ $W^{(4)}$ ×

$\theta_4$ — 2344
$\theta_3$ — 2343
$\theta_2$ — 2342
$\theta_1$ — 2341

SRS resource #1
SRS resource #2
SRS resource #3
SRS resource #4

# FIG. 24

Selection of precoder by base station (2430)

Base station

Associated CSI-RS (2400)

Relaxed timeline may be defined (2416)

DCI (2440)

PUSCH transmission (2450)

UE

(Precoded) SRS transmission (2420)
- Up to four SRS resources
- SRS may be transmitted together with UE capability

Selected precoder information is indicated in DCI

Channel estimation and precoder calculation (2410)
(Gap >= 42 symbols)
- AP CSI-RS
- AP SRS is used

Frequency domain

2411

$H$

2412 2413 2414 2415

| $W_4^{(1)}$ | $W_4^{(2)}$ | $W_4^{(3)}$ | $W_4^{(4)}$ |
| $W_3^{(1)}$ | $W_3^{(2)}$ | $W_3^{(3)}$ | $W_3^{(4)}$ |
| $W_2^{(1)}$ | $W_2^{(2)}$ | $W_2^{(3)}$ | $W_2^{(4)}$ |
| $W_1^{(1)}$ | $W_1^{(2)}$ | $W_1^{(3)}$ | $W_1^{(4)}$ |

SRS resource #1
SRS resource #2
SRS resource #3
SRS resource #4

2435 2436

2434 ~ $H_4$
2433 ~ $H_3$
2432 ~ $H_2$
2431 ~ $H_1$

| $W_4^{(1)}$ | $W_4^{(2)}$ | $W_4^{(3)}$ | $W_4^{(4)}$ |
| $W_3^{(1)}$ | $W_3^{(2)}$ | $W_3^{(3)}$ | $W_3^{(4)}$ |
| $W_2^{(1)}$ | $W_2^{(2)}$ | $W_2^{(3)}$ | $W_2^{(4)}$ |
| $W_1^{(1)}$ | $W_1^{(2)}$ | $W_1^{(3)}$ | $W_1^{(4)}$ |

SRS resource #1
SRS resource #2
SRS resource #3
SRS resource #4

EP 4 761 126 A1

# FIG. 25

Selection of precoder by base station (2530)

Base station

Associated CSI-RS (2500)

Relaxed timeline may be defined (2516)

DCI (2540)

PUSCH transmission (2550)

UE

(Precoded) SRS transmission (2520)
- Up to four SRS resources
- SRS may be transmitted together with UE capability

Selected precoder information is indicated in DCI

Channel estimation and precoder calculation (2510)
(Gap >= 42 symbols)
- AP CSI-RS
- AP SRS is used

2511   2512 2513 2514 2515

Frequency domain

$H$

$W_4^{(1)}$ $W_4^{(2)}$ $W_4^{(3)}$ $W_4^{(4)}$

$W_3^{(1)}$ $W_3^{(2)}$ $W_3^{(3)}$ $W_3^{(4)}$

$W_2^{(1)}$ $W_2^{(2)}$ $W_2^{(3)}$ $W_2^{(4)}$

$W_1^{(1)}$ $W_1^{(2)}$ $W_1^{(3)}$ $W_1^{(4)}$

SRS resource #1
SRS resource #2
SRS resource #3
SRS resource #4

2434 $H_4$   $W_4^{(1)}$ $W_4^{(2)}$ $W_4^{(3)}$ $W_4^{(4)}$ 2438

2433 $H_3$   $W_3^{(1)}$ $W_3^{(2)}$ $W_3^{(3)}$ $W_3^{(4)}$ 2437

2432 $H_2$   $W_2^{(1)}$ $W_2^{(2)}$ $W_2^{(3)}$ $W_2^{(4)}$ 2436

2431 $H_1$   $W_1^{(1)}$ $W_1^{(2)}$ $W_1^{(3)}$ $W_1^{(4)}$

2435

SRS resource #1
SRS resource #2
SRS resource #3
SRS resource #4

EP 4 761 126 A1

# FIG. 26

Transmit UE capability — 2600

Receive higher layer signaling — 2605

Receive associated CSI-RS — 2610

Perform channel estimation and precoder calculation — 2615

Transmit SRS resource — 2620

Receive PUSCH scheduling DCI — 2625

Transmit non-codebook-based PUSCH — 2630

# FIG. 27

| Receive UE capability | 2700 |

| Transmit higher layer signaling | 2705 |

| Transmit associated CSI-RS | 2710 |

| Receive SRS resource | 2715 |

| Generate information for scheduling non-codebook-based PUSCH transmission | 2720 |

| Transmit PUSCH scheduling DCI | 2725 |

| Receive non-codebook-based PUSCH | 2730 |

FIG. 28

2805

2800

UE processor

UE receiver

2810

UE transmitter

FIG. 29

2905

Base station
processor

2900

Base station
receiver

2910

Base station
transmitter

## INTERNATIONAL SEARCH REPORT

| | International application No. |
|---|---|
| | **PCT/KR2024/013687** |

| | |
|---|---|
| **A.** | **CLASSIFICATION OF SUBJECT MATTER** |

**H04B 7/0456**(2017.01)i; **H04B 7/06**(2006.01)i; **H04W 72/0457**(2023.01)i; **H04W 72/1268**(2023.01)i; **H04W 72/232**(2023.01)i

According to International Patent Classification (IPC) or to both national classification and IPC

| | |
|---|---|
| **B.** | **FIELDS SEARCHED** |

Minimum documentation searched (classification system followed by classification symbols)

H04B 7/0456(2017.01); H04L 5/00(2006.01); H04W 24/10(2009.01); H04W 72/00(2009.01); H04W 72/04(2009.01); H04W 72/12(2009.01); H04W 72/1268(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI-RS, SRS, 프리코더(precoder), DCI, PUSCH, 서브밴드(subband)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | US 2023-0103831 A1 (SAMSUNG ELECTRONICS CO., LTD.) 06 April 2023 (2023-04-06)<br>See paragraphs [0273], [0285]-[0287], [0304]-[0305], [0329] and [0356]-[0357]; and figure 13. | 1-15 |
| Y | US 2021-0337568 A1 (XU, Kai et al.) 28 October 2021 (2021-10-28)<br>See paragraphs [0223], [0238] and [0245]; and figures 20 and 25. | 1-15 |
| A | WO 2023-070653 A1 (QUALCOMM INCORPORATED et al.) 04 May 2023 (2023-05-04)<br>See paragraphs [0069]-[0104]; and figures 5A-10B. | 1-15 |
| A | US 2021-0092720 A1 (IDAC HOLDINGS, INC.) 25 March 2021 (2021-03-25)<br>See paragraphs [0132]-[0347]; and figures 3-24. | 1-15 |
| A | US 2023-0217429 A1 (TELEFONAKTIEBOLAGET LM ERICSSON (PUBL)) 06 July 2023 (2023-07-06)<br>See paragraphs [0101]-[0112]; and figures 4-8. | 1-15 |

☐ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 December 2024** | **16 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/013687**

| Patent document cited in search report | | | Publication date (day/month/year) | Patent family member(s) | | | Publication date (day/month/year) |
|---|---|---|---|---|---|---|---|
| US | 2023-0103831 | A1 | 06 April 2023 | CN | 113950861 | A | 18 January 2022 |
| | | | | EP | 3888285 | A2 | 06 October 2021 |
| | | | | EP | 3888285 | A4 | 16 March 2022 |
| | | | | KR | 10-2022-0019652 | A | 17 February 2022 |
| | | | | US | 11356881 | B2 | 07 June 2022 |
| | | | | US | 11943649 | B2 | 26 March 2024 |
| | | | | US | 2020-0404525 | A1 | 24 December 2020 |
| | | | | WO | 2020-256516 | A2 | 24 December 2020 |
| | | | | WO | 2020-256516 | A3 | 08 April 2021 |
| US | 2021-0337568 | A1 | 28 October 2021 | US | 12004151 | B2 | 04 June 2024 |
| | | | | US | 2024-0298317 | A1 | 05 September 2024 |
| WO | 2023-070653 | A1 | 04 May 2023 | None | | | |
| US | 2021-0092720 | A1 | 25 March 2021 | CN | 110383738 | A | 25 October 2019 |
| | | | | CN | 110383738 | B | 16 August 2022 |
| | | | | CN | 115483951 | A | 16 December 2022 |
| | | | | EP | 3568945 | A1 | 20 November 2019 |
| | | | | US | 10863497 | B2 | 08 December 2020 |
| | | | | US | 11844086 | B2 | 12 December 2023 |
| | | | | US | 2020-0275416 | A1 | 27 August 2020 |
| | | | | US | 2024-0073914 | A1 | 29 February 2024 |
| | | | | WO | 2018-132781 | A1 | 19 July 2018 |
| | | | | WO | 2018-132781 | A9 | 06 June 2019 |
| US | 2023-0217429 | A1 | 06 July 2023 | CN | 111344999 | A | 26 June 2020 |
| | | | | CN | 111344999 | B | 27 June 2023 |
| | | | | EP | 3711266 | A1 | 23 September 2020 |
| | | | | EP | 3711266 | A4 | 21 July 2021 |
| | | | | EP | 3711266 | B1 | 15 June 2022 |
| | | | | US | 12081382 | B2 | 03 September 2024 |
| | | | | WO | 2019-098935 | A1 | 23 May 2019 |

Form PCT/ISA/210 (patent family annex) (July 2022)